# EUROPEAN PATENT APPLICATION

(11) **EP 1 207 486 A1**
(43) Date of publication of application: **22.05.2002**
(21) Application number: 01902751.5
(22) Date of filing: 02.02.2001
(51) Int. Cl.: G06F 17/60, G09C 1/00, H04L 9/00

(54) **AUTHENTICATION SYSTEM**

(30) Priority: 02.02.2000 JP 2000024619; 11.07.2000 JP 2000209674; 11.07.2000 JP 2000209675; 02.08.2000 JP 2000234741; 02.08.2000 JP 2000234752; 07.08.2000 JP 2000238077; 05.12.2000 JP 2000370519; 13.12.2000 JP 2000379361; 30.01.2001 JP 2000022436
(71) Applicant: Sony Corporation, Tokyo 141-0001 (JP)
(72) Inventor: KANEMAKI, Hirofumi, SONY CORPORATION, Tokyo 141-0001 (JP); NAKAMURA, Yoshihide, SONY CORPORATION, Tokyo 141-0001 (JP); SATAKE, Sei, SONY CORPORATION, Tokyo 141-0001 (JP); SAITO, Makoto, SONY CORPORATION, Tokyo 141-0001 (JP); HASHIMOTO, Chikara, SONY CORPORATION, Tokyo 141-0001 (JP)
(74) Representative: Melzer, Wolfgang, Dipl.-Ing.
(86) International application number: JP0100772
(87) International publication number: WO0157750

(57) **Abstract**

An authentication apparatus avoiding illegitimate authentication procedures performed based on illegitimately acquired personal ID information of other parties is provided. An authentication apparatus 50 receives personal ID information ID1 of an orderer 31, personal ID information ID2 of a vendor 33, and transaction information by an authentication request from an orderer terminal 11, communicates with a vendor terminal 15, then transmits authentication information indicating a legitimacy of the vendor 33 to the orderer terminal 11.

## Description

### TECHNICAL FIELD

The present invention relates to an authentication apparatus, authentication system, and method of the same, capable of preventing procedures illegitimately using personal ID information of other parties, a processing apparatus, a communication apparatus, communication control apparatus, communication system, and method of the same, and an information storage method and apparatus, an information restoration method and apparatus, and a storage medium capable of improving confidentiality of information kept on a storage medium.

### BACKGROUND ART

Electronic commercial transactions via the Internet and other networks are becoming more popular.

When a user purchases goods or the like using such electronic commercial transactions, he or she operates a personal computer or other orderer terminal installed in a store or the home and accesses a vendor server selling the goods or the like via the network. By this, a photograph, features, price, and other information of the goods is provided from the server to the orderer terminal and displayed on a display of the orderer terminal. The user selects the goods or the like desired to be purchased while viewing such information and performs processing for ordering the selected goods or the like. In the order processing, the user inputs personal ID information for specifying the individual user, information designating the ordered goods or the like, and information of an accounting method thereof, etc. by operating the orderer terminal and transmits this via the network to the server.

In recent years, along with the growth of electronic commercial transactions, personal ID information or personal identification numbers of the users, information on past transactions, the names, addresses, backgrounds, and occupations of the users, and other personal information and other confidential information is managed by servers, terminals, or the like in an increasing number of cases.

A server or terminal, for example, as shown in Japanese Unexamined Patent Publication (Kokai) No. 11-272681, encrypts the confidential information mentioned above by a predetermined encryption key and stores it in an HDD (hard disk drive) built in the computer or a portable CD-ROM, floppy disk, PC card, or other storage medium.

In the above conventional electronic commercial transactions via a network, however, the transaction is carried out only between the concerned parties of the orderer and the vendor, so there is a problem in that control against false orders, tampering with commercial transaction information. and other illegitimate acts is difficult.

Further, even in a case where a third party authenticates such an electronic commercial transaction, there is the problem of a possibility of illegitimate 'procedures performed via the network by using the personal ID information of others (impersonation).

Further, when the electronic commercial transactions explained above spread further, several authentication managers will be performing the work of authentication of electronic commercial transactions. In this case, the problem becomes how to authenticate the legitimacy an electronic commercial transaction when the users participating in the same electronic commercial transaction have contracted with different authentication managers.

In this case, the above problem can by dealt with by the several authentication managers which the users participating in the same electronic commercial transaction have contracted with sharing the information of the users, but there is a problem of the personal information of the users ending up being leaked to other managers.

Further, when several terminals are provided in a home, if functions relating to electronic commercial transactions performed via an external network and security are given to every terminal, the efficiency is bad and, at the same time, it is inconvenient when for example the communication log is managed in units of homes.

Further, the above conventional server or terminal usually store the confidential information on a single storage medium. If the storage medium is stolen or illegitimately copied, there is a problem of a loss of the confidentiality of the related information.

Such confidential information is usually encrypted for store on the storage medium, but there is a possibility of the encryption being decrypted (deciphered), so this is insufficient for maintaining the confidentiality.

Further, in recent years, there are cases where personal authentication information (PKI information) generated by using a public key infrastructure is stored in a small sized smart card (smart medium) and the personal authentication is carried out by using the smart card, but such personal authentication information has an efficacy equivalent to authentication of personal seal, so there is the problem of large damage when the smart card is stolen or lost.

In order to avoid such a problem, check of a password at the time of usage of the smart card can be considered, but there is a problem of poor user friendliness.

Further, an authentication apparatus generates and uses a transaction ID for identifying an individual commercial transaction when authenticating a transaction via the network, but there is the problem of a store or the like charging for the same transaction using the related transaction ID several times either deliberately or by negligence and of the customer being accounted several times.

### DISCLOSURE THE INVENTION

The present invention was made in consideration with the above problems of the related art and has as an object thereof to provide an authentication apparatus, authentication system, and method of the same for avoiding illegitimate procedures performed based on illegitimately acquired personal ID information of other parties.

Another object of the present invention is to provide an authentication apparatus, authentication system, and method of the same capable of authenticating a transaction among users contracting with different authentication managers with a high reliability without providing the personal information of the users to the other authentication managers.

Still another object of the present invention is to provide a communication control apparatus, a communication system, and method of the same capable of efficiently assigning functions required for electronic commercial transactions and managing the communication log when conducting electronic commercial transactions via a network using a plurality of terminals.

Still another object of the present invention is to provide an information storage method capable of storing information on a storage medium while maintaining a high confidentiality, an information restoration method, and apparatuses and a storage medium for the same.

Still another object of the present invention is to provide an authentication method and apparatus capable of improving security without troublesome procedures at the time of authentication using a portable memory device comprising a personal authentication function.

Still another object of the present invention is to provide an authentication apparatus, authentication system, and method capable of avoiding a customer being accounted several times for the same transaction by a store or the like using a transaction ID.

In order to solve the above problems of the related art and achieve the above objects,
an authentication apparatus of a first aspect of the invention is an authentication apparatus for authenticating a transaction performed between at least two parties via a network, comprising a first receiving means for receiving a first request including personal key information of a first transactor and information indicating a transaction content from said first transactor, a first authenticating means for authenticating a legitimacy of said first transactor based on said personal key information included in said first request and generating first authentication information, a first transmitting means for transmitting a second request including information obtained by deleting the personal key information of said first transactor from said first request and said first authentication information to said second transactor, a second receiving means for receiving a reply with respect to said second request from said second transactor, a second authenticating means for authenticating the legitimacy of said second transactor and generating second authentication information in accordance with said reply, and a second transmitting means for transmitting said second authentication information to said first transactor.

The mode of operation of the authentication apparatus of the first aspect of the invention is as follows.

The first receiving means receives a first request including personal key information of the first transactor and information indicating the transaction content from said first transactor.

Next, the first authentication apparatus, in response to said first request, authenticates the legitimacy of said first transactor and generates the first authentication information.

Next, the first transmitting means transmits the second request including the information obtained by deleting the personal key information of said first transactor from said first request and said first authentication information to said second transactor.

Then, the second receiving means receives the reply with respect to said second request from said second transactor.

Next, the second authenticating means, the legitimacy of said second transactor is authenticated in accordance with said reply and the second authentication information is generated.

Next, the second transmitting means transmits said second authentication information to said first transactor.

According to the authentication apparatus of the first aspect of the invention, the personal key information of said first transactor is not included in the second request transmitted from the first transmitting means to the second transactor, so leakage of the information relating to the charging of the first transactor to the second transactor can be avoided.

An authentication system of a second aspect of the invention is an authentication system for authenticating a transaction performed between at least two parties via a network, comprising a first communication apparatus used by a first transactor, a second communication apparatus used by a second transactor, and an authentication apparatus for authenticating said transaction, wherein said authentication apparatus has a first receiving means for receiving a first request including personal key information of the first transactor and information indicating transaction content from said first transactor, a first authenticating means for authenticating a legitimacy of said first transactor based on said personal key information included in said first request and generating first authentication information, a first transmitting means for transmitting a second request including information obtained by deleting the personal key information of said first transactor from said first request and said first authentication information to said second transactor, a second receiving means for receiving a reply with respect to said second request from said second transactor, a second authenticating means for authenticating the legitimacy of said second transactor and generating second authentication information in accordance with said reply, and a second transmitting means for transmitting the second authentication information indicating the legitimacy of said transaction to said first transactor.

The mode of operation of said authentication apparatus of the authentication system of the second aspect of the invention is the same as the mode of operation of the authentication apparatus of the above fourth aspect of the invention.

An authentication method of a third aspect of the invention is an authentication method for authenticating a transaction performed between at least two parties via a network, comprised of the steps of receiving a first request including personal key information of a first transactor and information indicating transaction content from said first transactor, authenticating a legitimacy of said first transactor based on said personal key information included in said first request and generating first authentication information, transmitting a second request including information obtained by deleting the personal key information of said first transactor from said first request and said first authentication information to said second transactor, receiving a reply with respect to said second request from said second transactor, authenticating a legitimacy of said second transactor in accordance with said reply and generating second authentication information, and transmitting said second authentication information to said first transactor.

An authentication apparatus of a fourth aspect of the invention is an authentication apparatus for authenticating a transaction performed between at least two parties via a network, comprising a first receiving means for receiving a first request including personal identification information of a first transactor and information indicating transaction content from said first transactor, a first authenticating means for authenticating a legitimacy of said first transactor and generating a first authentication information in response to said first request, a first transmitting means for transmitting a second request including said first authentication information and information indicating content of said transaction to a second transactor, a second receiving means for receiving a reply with respect to said second request from said second transactor, a second authenticating means for authenticating a legitimacy of said second transactor in accordance with said reply and generating second authentication information, and a second transmitting means for transmitting said second authentication information to said first transactor.

The mode of operation of the authentication apparatus of the fourth aspect of the invention is as follows.

The first receiving means receives the first request including the personal identification information of the first transactor and the information indicating the transaction content from said first transactor.

Next, the first authentication apparatus, in response to said first request, authenticates the legitimacy of said first transactor and generates the first authentication information.

Next, the first transmitting means transmits the second request including said first authentication information and the information indicating the content of said transaction to said second transactor.

Then, the second receiving means receives the reply with respect to said second request from said second transactor.

Next, the second authenticating means, in accordance with said reply, authenticates the legitimacy of said second transactor and generates the second authentication information.

Next, the second transmitting means transmits said second authentication information to said first transactor.

As explained above, according to the fourth aspect of the invention, when the first transactor and the second transactor communicate for a transaction, by using an authentication apparatus managed by a third party other than the first transactor and the second transactor, it is possible to transmit first authentication information of the result of objectively authenticating the legitimacy of the first transactor to the second transactor and transmit second authentication information of the result of objectively authenticating the legitimacy of the second transactor to the first transactor, so it becomes possible to improve the reliability of the transaction.

In the fourth aspect of the invention, preferably said first receiving means receives said first request further including the personal key information of said first transactor, and said first authenticating means authenticates the legitimacy of said first transactor based on said personal key information.

Here, said personal key information of said first transactor is information relating to the charging of said first transactor.

In the authentication apparatus of the fourth aspect of the invention, preferably said first transmitting means transmits the second request further including said personal key information of said first transactor to said second transactor.

The authentication apparatus of the fourth aspect of the invention preferably further has a storage means for storing log information indicating a log of said transaction.

An authentication system of a fifth aspect of the invention is an authentication system for authenticating a transaction performed between at least two parties via a network, comprising a first communication apparatus used by a first transactor, a second communication apparatus used by a second transactor, and an authentication apparatus for authenticating said transaction, wherein said first communication apparatus transmits a first request including personal identification information of the first transactor and information indicating the transaction content to said authentication apparatus, said authentication apparatus has a first receiving means for receiving said first request from said first transactor, a first authenticating means for authenticating a legitimacy of said first transactor and generating first authentication information in response to said first request, a first transmitting means for transmitting a second request including said first authentication information and the content of said transaction to said second transactor, a second receiving means for receiving a reply with respect to said second request from said second transactor, a second authenticating means for authenticating a legitimacy of said second transactor and generating second authentication information in response to said reply, and a second transmitting means for transmitting said second authentication information to said first transactor.

Here, the mode of operation of said authentication apparatus of the authentication system of the fifth aspect of the invention is the same as the mode of operation of the authentication apparatus of the first aspect of the invention.

An authentication method of a sixth aspect of the invention is an authentication method for authenticating a transaction performed between at least two parties via a network, comprised of the steps of receiving a first request including personal identification information of a first transactor and information indicating transaction content from said first transactor, authenticating a legitimacy of said first transactor and generating first authentication information in response to said first request, transmitting a second request including said first authentication information and the content of said transaction to a second transactor, receiving a reply with respect to said second request from said second transactor, authenticating a legitimacy of said second transactor in accordance with said reply and generating second authentication information, and transmitting said second authentication information to said first transactor.

An authentication apparatus of a seventh aspect of the invention is an authentication apparatus holding information relating to a first transactor and authenticating a transaction between said first transactor and a second transactor performed via a network while communicating with another authentication apparatus holding information relating to said second transactor, comprising a transmitting and receiving means for transmitting a second request including information specifying said second transactor in response to a first request from said first transactor including information indicating said transaction content and information specifying said second transactor to said second authentication apparatus, receiving first signature information indicating an authentication result by said second authentication apparatus in response to said second request, transmitting a third request including information relating to said transaction content included in said first request and said first signature information to an apparatus used by said second transactor, and receiving a predetermined reply from an apparatus used by said second transactor in response to the related third request, a storage means for storing a log of said transaction when receiving said predetermined reply, and a signature producing means for producing second signature information to be transmitted to the apparatus used by said first transactor via said transmitting and receiving means when receiving said predetermined reply and indicating the authentication result of the legitimacy of said transaction.

The mode of operation of the authentication apparatus of the seventh aspect of the invention is as follows.

The transmitting and receiving means receives the first request from said first transactor including the information indicating said transaction content and the information specifying said second transactor.

Then, in response to the related second request, the second request including the information specifying said second transactor is transmitted from said transmitting and receiving means to said second authentication apparatus.

Next, the transmitting and receiving means receives the first signature information in response to said second request from said second authentication apparatus.

Next, the third request including the information relating to said transaction content included in said first request and said first signature information is transmitted from said transmitting and receiving means to the apparatus used by said second transactor.

Next, the transmitting and receiving means receives the predetermined reply from the apparatus used by said second transactor in response to the related third request.

When said transmitting and receiving means receives said predetermined reply, a log of said transaction is stored in the storage means.

Further, when said transmitting and receiving means receives said predetermined reply, the signature producing means produces the second signature information for authenticating the legitimacy of said transaction, and the related second signature information is transmitted via said transmitting and receiving means to the apparatus used by said first transactor.

In the authentication apparatus of the seventh aspect of the invention, preferably the apparatus is further provided with an encrypting means, and said transmitting and receiving means receives an encryption key used for the communication with said second transactor from said other authentication apparatus in response to said second request and transmits the information relating to said transaction content encrypted by using said encryption key at said encrypting means and said first signature information to the apparatus used by said second transactor.

In the authentication apparatus of the seventh aspect of the invention, preferably said transmitting and receiving means receives said predetermined reply including the identification information used for identifying said second transactor by said other authentication apparatus from the apparatus used by said second transactor, and said storage means stores a log of said transactions generated by using said identification information.

In the authentication apparatus of the seventh aspect of the invention, preferably said transmitting and receiving means transmits the third request including information other than the information relating to the charging of said first transactor in the information relating to said transaction content included in said first request and said first signature information to the apparatus used by said second transactor.

In the authentication apparatus of the seventh aspect of the invention, preferably said transmitting and receiving means transmits the third request including the information relating to said transaction content included in said first request, said first signature information, and the encryption key used for the communication with the related authentication apparatus to the apparatus used by said second transactor.

In the authentication apparatus of the seventh aspect of the invention, preferably provision is further made of a charge processing means for the charge processing for the authentication relating to said transaction.

In the authentication apparatus of the seventh aspect of the invention, preferably said charge processing means performs processing for determining a rate of the charge for the authentication relating to said transaction with said other authentication apparatus.

In the authentication apparatus of the seventh aspect of the invention, preferably said transmitting and receiving means receives said predetermined reply from the apparatus used by said second transactor when said second transactor confirms the legitimacy of said first signature information and agrees to the related transaction.

An authentication system of an eighth aspect of the invention is an authentication system for authenticating a transaction performed between at least two parties via a network, comprising a first authentication apparatus for authenticating a transaction relating to a first transactor and a second authentication apparatus for authenticating a transaction relating to a second transactor, wherein said first authentication apparatus transmits a second request including information specifying said second transactor to said second authentication apparatus in response to a first request by said first transactor including information indicating said transaction content and information specifying said second transactor, receives first signature information from said second authentication apparatus in response to said second request, transmits a third request including information relating to said transaction content included in said first request and said first signature information to the apparatus used by said second transactor, stores a log of said transaction when receiving a predetermined reply from said second transactor in response to the related third request, and provides second signature information for authenticating a legitimacy of said transaction to said first transactor.

In the authentication system of the eighth aspect of the invention, said first authentication apparatus further has an encrypting means, and said transmitting and receiving means receives an encryption key used for communication with said second transactor from said second authentication apparatus in response to said second request and transmits information relating to said transaction content encrypted by using said encryption key at said encrypting means and said first signature information to the apparatus used by said second transactor.

An authentication method of a ninth aspect of the invention is an authentication method for authenticating a transaction between a first transactor and a second transactor performed via a network by using a first authentication apparatus for authenticating a transaction relating to the first transactor and a second authentication apparatus for authenticating a transaction relating to the second transactor, comprised of the steps of issuing a first request including information indicating said transaction content and information specifying said second transactor from said first transactor to said first authentication apparatus, transmitting a second request including the information specifying said second transactor from said first authentication apparatus to said second authentication apparatus in response to said first request, transmitting first signature information indicating the authentication result by the related second authentication apparatus to said first authentication apparatus from said second authentication apparatus in response to said second request, transmitting a third request including the information relating to said transaction content included in said first request and said first signature information from said first authentication apparatus to an apparatus used by said second transactor, issuing a predetermined reply from the apparatus used by said second transactor to said first authentication apparatus in response to the related third request and, in accordance with said predetermined reply, storing a log of said transaction, producing second signature information indicating the authentication result of the legitimacy of said transaction, and transmitting the related second signature information to the apparatus used by said first transactor by said first authentication apparatus.

An authentication method of a 10th aspect of the invention is an authentication method for authenticating a transaction between a first transactor and a second transactor performed via a network by using a first authentication apparatus for authenticating a transaction relating to the first transactor and a second authentication apparatus for authenticating a transaction relating to the second transactor, comprised of the steps of issuing a first request including information indicating said transaction content, personal key information of said first transactor, and information specifying said second transactor from said first transactor to said first authentication apparatus, transmitting a second request obtained by deleting said personal key from said first request from said first authentication apparatus to said second authentication apparatus in response to said first request, transmitting a third request including information indicating the content of said transaction from said second authentication apparatus to the apparatus used by said second transactor in response to said second request, transmitting a first reply from the apparatus used by said second transactor to said second authentication apparatus in response to said third request, transmitting a second reply including payment method information indicating a payment method to said second transactor from said second authentication apparatus to said first authentication apparatus in accordance with said first reply, and managing a payment relating to said transaction between said first transactor and said second transactor based on said payment method information by said first authentication apparatus.

Further, in the authentication method of the 10th aspect of the invention, preferably said first authentication apparatus performs processing for receiving a payment from said first transactor relating to said transaction, processing for paying a part of said payment to said second transactor in accordance with said transaction, and processing for receiving a remainder of said payment as a fee.

Further, in the authentication method of the 10th aspect of the invention, preferably said first authentication apparatus inquires to said second authentication apparatus whether or not said second transactor has contracted with said second authentication apparatus in response to said first request and, when receiving an answer indicating it has contracted with it from said second authentication apparatus, transmits said second request to said second authentication apparatus.

Further, in the authentication method of the 10th aspect of the invention, preferably when receiving said second reply, said first authentication apparatus transmits a third reply including signature information including the result of authentication performed by the related first authentication apparatus for said transactor to the apparatus used by said first transactor.

Further, in the authentication method of the 10th aspect of the invention, preferably said first authentication apparatus encrypts said third reply by using a secret key corresponding to the related first authentication apparatus and transmits the same to the apparatus used by said first transactor.

Further, in the authentication method of the 10th aspect of the invention, preferably said first authentication apparatus transmits said second request further including the signature information indicating the result of authentication performed by the related first authentication apparatus for said transaction to said second authentication apparatus.

Further, in the authentication method of the 10th aspect of the invention, preferably said second authentication apparatus transmits said third request further including signature information indicating the result of authentication performed by the related second authentication apparatus for said transaction to the apparatus used by said second transactor.

Further, in the authentication method of the 10th aspect of the invention, preferably said first authentication apparatus encrypts said second request by using a secret key corresponding to the related first authentication apparatus and transmits the same to said second authentication apparatus.

Further, in the authentication method of the 10th aspect of the invention, preferably said second authentication apparatus encrypts said third request by using a secret key corresponding to the related second authentication apparatus and transmits the same to the apparatus used by said second transactor.

Further, in the authentication method of the 10th aspect of the invention, preferably the apparatus of said second transactor encrypts said first reply by using a secret key of the related second transactor and transmits the same to said second authentication apparatus.

Further, in the authentication method of the 10th aspect of the invention, preferably said second authentication apparatus encrypts said second reply by using a secret key corresponding to the related second authentication apparatus and transmits the same to said first authentication apparatus.

Further, an authentication apparatus of an 11th aspect of the invention is an authentication apparatus holding information relating to a first transactor and authenticating a transaction between said first transactor and a second transactor performed via a network while communicating with another authentication apparatus holding information relating to said second transactor, comprising a receiving means for receiving a first request including information indicating said transaction content, personal key information of said first transactor, and information specifying said second transactor from said first transactor and receiving a reply including payment method information indicating a payment method to said second transactor from said other authentication apparatus, a transmitting means for transmitting a second request obtained by deleting said personal key from said first request to said other authentication apparatus in response to said first request, and a charging means for managing a payment relating to said transaction between said first transactor and said second transactor based on said payment method information.

The mode of operation of the authentication apparatus of the 11th aspect of the invention is as follows.

First, the receiving means receives the first request including the information indicating said transaction content, the personal key information of said first transactor, and the information specifying said second transactor.

Next, the transmitting means, in response to said first request, transmits the second request obtained by deleting said personal key from said first request to said other communication apparatus.

Next, the receiving means receives the reply including the payment method information indicating the payment method to said second transactor from said other authentication apparatus.

Next, the charging means, based on said payment method information, manages the payment relating to said transaction between said first transactor and said second transactor.

An authentication system of a 12th aspect of the invention is an authentication system method comprising a first authentication apparatus for authenticating a transaction relating to a first transactor and a second authentication apparatus for authenticating a transaction relating to a second transactor and authenticating a transaction between said first transactor and said second transactor performed via a network, comprised of the steps of issuing a first request including information indicating said transaction content, personal key information of said first transactor, and information specifying said second transactor from said first transactor to said first authentication apparatus, transmitting a second request obtained by deleting said personal key from said first request from said first authentication apparatus to said second authentication apparatus in response to said first request, transmitting a third request including the information indicating the content of said transaction from said second authentication apparatus to the apparatus used by said second transactor in response to said second request, transmitting a first reply from an apparatus used by said second transactor to said second authentication apparatus in response to said third request, transmitting a second reply including payment method information indicating a payment method to said second transactor from said second authentication apparatus to said first authentication apparatus in accordance with said first reply, and managing a payment relating to said transaction between said first transactor and said second transactor based on said payment method information by said first authentication apparatus.

An authentication method of a 13th aspect of the invention is comprised of the steps of having an authentication apparatus divide authentication information of a user into first authentication information and second authentication information, providing a portable memory device storing said second authentication information to said user, transmitting an authentication information request from a terminal capable of accessing said portable memory device to said authentication apparatus, transmitting said first authentication information from said authentication apparatus to said terminal when said authentication apparatus decides said authentication information request is by a legitimate user, and having said terminal restore said authentication information by using said first authentication information received from said authentication apparatus and said second authentication information read from said portable memory device.

According to the authentication method of the 13th aspect of the invention, only the second authentication information of a part of the authentication information for authenticating the identity of the user is stored in the portable memory device, so when the user is robbed of the portable memory device or drops it, another party cannot perform illegitimate authentication processing by only the portable memory device. At this time, in order to obtain the entire authentication information, it is necessary to confirm if that the user is the legitimate user in the authentication apparatus.

In the authentication method of the 13th aspect of the invention, preferably said authentication information request includes transmission destination information designating a destination of transmission of said first authentication information, and said authentication apparatus transmits said first authentication information to said terminal designated by said transmission destination information.

In the authentication method of the 13th aspect of the invention, preferably said authentication apparatus stores transmission destination information corresponding to said user in advance and decides that said authentication information request is by the legitimate user when said transmission destination information included in said authentication information request is present in the related stored transmission destination information.

In the authentication method of the 13th aspect of the invention, preferably said terminal stores said received first authentication information and restores said authentication information when deciding that said first authentication information received from said authentication apparatus and said second authentication information read from said portable memory device correspond.

In the authentication method of the 13th aspect of the invention, preferably said terminal transmits to said authentication apparatus a notification indicating that said first authentication information received from said authentication apparatus and said second authentication information read from said portable memory do not correspond when this is the case.

In the authentication method of the 13th aspect of the invention, preferably said authentication apparatus generates said authentication information in response to a request from said user.

In the authentication method of the 13th aspect of the invention, preferably said authentication information is information produced by using a public key encryption.

In the authentication method of the 13th aspect of the invention, preferably said portable memory device is a smart card.

An authentication method of a 14th aspect of the invention is comprised of the steps of generating authentication information, dividing said authentication information into first authentication information and second authentication information, providing a portable memory device storing said second authentication information to a user, and transmitting said first authentication information to a transmission destination designated by said authentication information request when deciding that the received authentication information request is by a legitimate user.

An authentication apparatus of a 15th aspect of the invention has a controlling means for generating authentication information, dividing said authentication information into first authentication information and second authentication information, and deciding whether or not the received authentication information request is by a legitimate user, a writing means for writing said second authentication information into a portable memory device, a receiving means for receiving said authentication information request from a user of said portable memory device, and a transmitting means for transmitting said first authentication information to a transmission destination designated by said authentication information request when it is decided that said authentication information request is by a legitimate user.

The mode of operation of the authentication apparatus of the 15th aspect of the invention is as follows.

The controlling means generates the authentication information for authenticating the identity of the user and divides the related authentication information into the first authentication information and the second authentication information.

The writing means writes said second authentication information into the portable memory device.

Then, when the receiving means receives an authentication information request from the user of said portable memory device, the controlling means decides whether or not said received authentication information request is by the legitimate user.

When it is decided that said authentication information request is by the legitimate user, the transmitting means transmits said first authentication information to the transmission destination designated by said authentication information request.

A communication apparatus of a 16th aspect of the invention has a receiving means for receiving a request including personal identification information for identifying a user, a storage means for storing said personal identification information and information of a transmission destination for transmitting a processing result in correspondence, a processing means for performing predetermined processing in response to said request, and a transmitting means for reading information of said transmission destination corresponding to said personal identification information included in said request from said storage means and transmitting the result of said processing to the transmission destination specified by the related read information of said transmission destination.

The mode of operation of the communication apparatus of the 16th aspect of the invention is as follows.

For example, the user operates another communication apparatus and transmits a request including the personal identification information for identifying the user.

The related request is received at the receiving means.

Next, the processing means carries out the predetermined processing in response to the related received request.

Next, the transmitting means reads the information of said transmission destination corresponding to said personal identification information included in said received request from said storage means and transmits the result of said processing to the transmission destination specified by the related read transmission destination information.

In the communication apparatus of the 16th aspect of the invention, preferably said receiving means receives a request including encrypted personal identification information, and said communication apparatus further has a decrypting means for decrypting said personal identification information included in said received request.

Further, in the communication apparatus of the 16th aspect of the invention, preferably said personal identification information is an identifier assigned to the user registered in the communication apparatus in advance.

Further, in the communication apparatus of the 16th aspect of the invention, preferably the information of the transmission destination for transmitting the result of said processing is information provided by the transmitting side of said request to the related communication apparatus off-line.

Further, in the communication apparatus of the 16th aspect of the invention, preferably the information of the transmission destination for transmitting said predetermined result is personal identification information for unambiguously identifying said user in the network with the related communication apparatus connected thereto.

Further, in the communication apparatus of the 16th aspect of the invention, preferably said processing is authentication processing.

A communication system of a 17th aspect of the invention is a communication system comprising a first communication apparatus and a second communication apparatus connected via a network, wherein said first communication apparatus has a first receiving means for receiving a request including personal identification information for identifying a user, a storage means for storing said personal identification information and information of a transmission destination for transmitting a processing result in correspondence, a processing means for performing predetermined processing in response to said request, and a first transmitting means for reading the information of said transmission destination corresponding to said personal identification information included in said request from said storage means and transmitting the result of said processing to the transmission destination specified by the related read information of said transmission destination and wherein said second communication apparatus has a second transmitting means for transmitting said request to said first communication apparatus, a second receiving means for receiving the result of said processing from said first communication apparatus, and an outputting means for outputting the result of the related received authentication processing.

A communication method of an 18th aspect of the invention is a communication method using a first communication apparatus and a second communication apparatus connected via a network, comprising the steps of transmitting a request including personal identification information for identifying a user from said second communication apparatus to said first communication apparatus, having said first communication apparatus perform predetermined processing in response to said request, and having said first communication apparatus refer to a correspondence of said personal identification information and information of a transmission destination for transmitting the result of the processing produced in advance and transmit a result of said processing to the transmission destination specified by information of the transmission destination corresponding to said personal identification information included in said request.

An authentication apparatus of a 19th aspect of the invention is an authentication apparatus for authenticating a transaction performed between at least two parties via a network, comprising a first receiving means for receiving a first request including personal key information of a first transactor and information indicating a transaction content from said first transactor, a first authenticating means for authenticating a legitimacy of said first transactor based on said personal key information included in said first request and generating first authentication information, a first transmitting means for transmitting a second request including information obtained by deleting the personal key information of said first transactor from said first request and including said first authentication information to a second transactor, a second receiving means for receiving a reply with respect to said second request from said second transactor, a second authenticating means for authenticating a legitimacy of said second transactor and generating second authentication information, a second transmitting means for transmitting said second authentication information to said first transactor, an identification information issuing means for issuing transaction identification information when receiving said first request, and a log managing means for managing a log of the reception of said first request, transmission of said second request, and the reception of said reply by using said transaction identification information.

The mode of operation of the authentication apparatus of the 19th aspect of the invention is as follows.

The first receiving means receives the first request including the public key of the first transactor and including the information indicating the transaction content from said first transactor.

By this, the transaction identification information issuing means issues the transaction identification information.

Next, the first authenticating means authenticates the legitimacy of said first transactor based on said personal key information included in said first request and generates the first authentication information.

Next, the first transmitting means transmits the second request including the information obtained by deleting the personal key information of said first transactor from said first request and including said first authentication information to said second transactor.

Next, the second receiving means receives the reply with respect to said second request from said second transactor.

Next, the second authenticating means, in accordance with said reply, authenticates the legitimacy of said second transactor and generates the second authentication information.

Next, the second transmitting means transmits said second authentication information to said first transactor.

In the authentication apparatus of the present invention, the transaction log managing means manages the log of the reception of said first request, transmission of said second request, and the reception of said reply by using said transaction identification information.

For this reason, based on the log managed by the transaction identification information managing means, a second request of the second transactor illegitimately using the transaction identification information can be detected.

Further, in the authentication apparatus of the 19th aspect of the invention, preferably said transaction log managing means generates log information for each of the reception of said first request, transmission of said second request, and reception of said reply and stores the related log information relating to said transaction identification information.

Further, in the authentication apparatus of the 19th aspect of the invention, preferably said transmitting means transmits a second request further including said transaction identification information to said second transactor.

Further, in the authentication apparatus of the 19th aspect of the invention, preferably said second authenticating means authenticates the legitimacy of said reply based on said transaction identification information included in said reply and said log managed by said transaction log managing means.

Further, in the authentication apparatus of the 19th aspect of the invention, preferably provision is further made of an account processing means for performing the account processing concerned in said transaction, and said transaction log managing means stores log information indicating that the account processing is terminated in correspondence with said transaction identification information after the end of said account processing.

Further, in the authentication apparatus of the 19th aspect of the invention, preferably the personal key information of said first transactor is information relating to the charging of said first transactor.

An authentication system of a 20th aspect of the invention is an authentication system for authenticating a transaction performed between at least two parties via a network, comprising a first communication apparatus used by a first transactor, a second communication apparatus used by a second transactor, and an authentication apparatus for authenticating said transaction, wherein said authentication apparatus has a first receiving means for receiving a first request including personal key information of said first transactor and including an information indicating the transaction content from said first transactor, a first authenticating means for authenticating a legitimacy of said first transactor based on said personal key information included in said first request and generating first authentication information, a first transmitting means for transmitting a second request including information obtained by deleting the personal key information of said first transactor from said first request and including said first authentication information to said second transactor, a second receiving means for receiving a reply with respect to said second request from said second transactor, a second authenticating means for authenticating a legitimacy of said second transactor in accordance with said reply and generating second authentication information, a second transmitting means for transmitting said second authentication information to said first transactor, a transaction identification information issuing means for issuing transaction identification information when receiving said first request, and a transaction log managing means for managing a log of the reception of said first request, transmission of said second request, and the reception of said reply by using said transaction identification information.

An authentication method of a 21st aspect of the invention is an authentication method for authenticating a transaction performed between at least two parties via a network, comprised of the steps of receiving a first request including personal key information of a first transactor and including information indicating a transaction content from said first transactor, issuing transaction identification information in accordance with the related reception, authenticating a legitimacy of said first transactor based on said personal key information included in said first request and generating first authentication information, transmitting a second request including information obtained by deleting the personal key information of said first transactor from said first request and including said first authentication information to said second transactor, receiving a reply with respect to said second request from said second transactor, authenticating a legitimacy of said second transactor in accordance with said reply and generating second authentication information, transmitting said second authentication information to said first transactor, and managing a log of the reception of said first request, transmission of said second request, and the reception of said reply by using said transaction log information.

Further, in the authentication method of the 21st aspect of the invention, preferably the log information is generated for each of the reception of said first request, transmission of said second request, and the reception of said reply, and the related log information is stored in correspondence with said transaction identification information.

Further, in the authentication method of the 21st aspect of the invention, preferably a second request further including said transaction identification information is transmitted to said second transactor.

A communication control apparatus of a 22nd aspect of the invention is a communication control apparatus for controlling communication processing carried out in a second communication apparatus on a network in response to a request from one or more first communication apparatuses, comprising a storage means for storing apparatus identification information for identifying said first communication apparatus, a transmitting means for transmitting a request including said apparatus identification information corresponding to the related first communication apparatus to said second communication apparatus in response to the request from said first communication apparatus, a receiving means for receiving a reply including the apparatus identification information for identifying the transmitting apparatus of said request from said second communication apparatus, and a controlling means for deciding if said request corresponding to said received reply is by a legitimate first communication apparatus whose apparatus identification information is stored in said storage means based on whether or not said apparatus identification information included in said reply and said apparatus identification information stored in said storage means coincide.

The mode of operation of the communication control apparatus of the 22nd aspect of the invention is as follows.

The transmitting means transmits the request including said apparatus identification information corresponding to the related first communication apparatus to the second communication apparatus in response to the request from the first communication apparatus.

Then, the receiving means receives the reply including the apparatus identification information for identifying the transmitting apparatus of said request from said second communication apparatus.

Next, based on whether or not said apparatus identification information included in said received reply and said apparatus identification information stored in the storage means coincide, the controlling means decides if said request corresponding to said received reply is by a legitimate first communication apparatus whose apparatus identification information is stored in said storage means.

In the communication control apparatus of the 22nd aspect of the invention, preferably said controlling means sends a predetermined notification to said second communication apparatus when said apparatus identification information included in said reply and said apparatus identification information stored in said storage means do not coincide.

In the communication control apparatus of the 22nd aspect of the invention, preferably said controlling means sends a predetermined notification to an apparatus of the destination of a transaction where the result of processing included in said reply is used when said apparatus identification information included in said reply and said apparatus identification information stored in said storage means do not coincide.

Further, in the communication control apparatus of the 22nd aspect of the invention, preferably said transmitting means transmits said request including personal identification information received from said first communication apparatus and including said apparatus identification information corresponding to the related first communication apparatus to said second communication apparatus.

Further, in the communication control apparatus of the 22nd aspect of the invention, preferably said storage means stores said apparatus identification information received from said first communication apparatus.

Further, in the communication control apparatus of the 22nd aspect of the invention, preferably said storage means stores said apparatus identification information received from said first communication apparatus when a power of the related communication control apparatus is turned on.

Further, in the communication control apparatus of the 22nd aspect of the invention, preferably said controlling means writes a communication log between said first communication apparatus and said second communication apparatus in said storage means.

Further, in the communication control apparatus of the 22nd aspect of the invention, preferably said controlling means transmits the processing result of said second communication apparatus included in said reply to said first communication apparatus of the transmission destination of said request.

Further, in the communication control apparatus of the 22nd aspect of the invention, preferably said controlling means controls the communication so that said first communication apparatus in a stand-by state enters an operating state in accordance with the information received from said receiving means.

Further, in the communication control apparatus of the 22nd aspect of the invention, preferably said controlling means controls the communication between a network to which said first communication apparatus is connected and a network to which said second communication apparatus is connected.

Further, in the communication control apparatus of the 22nd aspect of the invention, preferably said apparatus identification information is an identifier that can unambiguously identify the related communication apparatus assigned by the manufacturer of said first communication apparatus.

Further, in the communication control apparatus of the 22nd aspect of the invention, preferably said personal identification information is an identifier assigned to a registered user in advance.

A communication system of a 23rd aspect of the invention is a communication system for controlling at a communication control apparatus communication relating to processing carried out at a second communication apparatus on a network in response to a request from one or more first communication apparatuses, wherein said communication control apparatus has a first storage means for storing apparatus identification information for identifying said first communication apparatus, a first transmitting means for transmitting a request including said apparatus identification information corresponding to the related first communication apparatus and including personal identification information to said second communication apparatus in response to the request from said first communication apparatus, a first receiving means for receiving a reply including the apparatus identification information for identifying the transmitting apparatus of said request from said second communication apparatus, and a controlling means for deciding if said request corresponding to said received reply is by a legitimate first communication apparatus whose apparatus identification information is stored in said first storage means based on whether or not said apparatus identification information included in said reply and said apparatus identification information stored in said first storage means coincide and wherein said second communication apparatus has a second receiving means for receiving said request, a second storage means for storing said request, a second storage means for storing said personal identification information and information of a transmission destination for transmitting a processing result in correspondence, a processing means for performing predetermined processing in response to said request, and a second transmitting means for reading the information of said transmission destination corresponding to said personal identification information included in said request from said second storage means and transmitting the result of said processing and said apparatus identification information included in said request in correspondence to the transmission destination specified by the related read transmission destination information.

A communication method of a 24th aspect of the invention is a communication method for controlling at the communication control apparatus communication relating to processing carried out at a second communication apparatus on a network in response to a request from one or more first communication apparatuses, comprised of the steps of transmitting a request including apparatus identification information corresponding to the related first communication apparatus and including personal identification information from said communication control apparatus to said second communication apparatus in response to the request issued from said first communication apparatus to said communication control apparatus, having said second communication apparatus perform predetermined processing in response to said received request, having said second communication apparatus transmit a reply including the result of said processing and including said apparatus identification information included in said request to said communication control apparatus based on the information of the transmission destination corresponding to said personal identification information included in said request, and having said communication control apparatus decide if said request corresponding to said received reply is by a legitimate first communication apparatus based on whether or not said apparatus identification information included in said received reply and said apparatus identification information of said first communication apparatus held in advance coincide.

An authentication apparatus of a 25th aspect of the invention is an authentication apparatus for performing authentication processing in response to an authentication request, comprising a receiving means for receiving said authentication request including personal identification information for identifying a user and including apparatus identification information for identifying a transmitting apparatus of said authentication request, a storage means for storing said personal identification information and the information of the transmission destination for transmitting an authentication result in correspondence, an authentication processing means for performing authentication processing in response to said authentication request, and a transmitting means for reading the information of said transmission destination corresponding to said personal identification information included in said authentication request from said storage means and transmitting the result of said authentication processing and said apparatus identification information included in said authentication request in correspondence to the transmission destination specified by the related read transmission destination information.

The mode of operation of the authentication apparatus of the 25th aspect of the invention is as follows.

For example, said authentication request including the personal identification information for identifying the user and the apparatus identification information for identifying the transmitting apparatus of the authentication request, transmitted from the related terminal by the user operating the terminal or the like, is received at the receiving means.

Next, the authentication processing in response to the related received authentication request is carried out at the authentication processing means.

Next, the transmitting means reads the information of said transmission destination corresponding to said personal identification information included in said authentication request from the storage means and transmits the result of said authentication processing and said apparatus identification information included in said authentication request in correspondence from the transmitting means to the transmission destination specified by the related read transmission destination information.

In the authentication apparatus of the 25th aspect of the invention, preferably said receiving means receives said authentication request including encrypted personal identification information and apparatus identification information, and said authentication apparatus further has a decrypting means for decrypting said personal identification information and said apparatus identification information included in said received authentication request.

Further, in the authentication apparatus of the 25th aspect of the invention, preferably said receiving means receives said authentication request further including third identification information used for the charge processing relating to said user.

Further, in the authentication apparatus of the 25th aspect of the invention, preferably said personal identification information is an identifier assigned to a registered user in advance.

Further, in the authentication apparatus of the 25th aspect of the invention, preferably said apparatus identification information is an identifier capable of unambiguously identifying the related apparatus assigned by the manufacturer of said apparatus.

An authentication apparatus of a 26th aspect of the invention is an authentication apparatus for performing authentication processing relating to a transaction performed via a network, comprising a receiving means for receiving an authentication request by a user engaging in a transaction including personal identification information for identifying the user, transaction information indicating content of the transaction, and apparatus identification information for identifying a transmitting apparatus of said authentication request, a storage means for storing said personal identification information and information of a transmission destination for transmitting the authentication result in correspondence, an authentication processing means for transmitting said transaction information included in said received authentication request to an apparatus of the user designated by said authentication request and performing predetermined authentication processing in accordance with a reply from the apparatus of the related designated user, and a transmitting means for reading the information of said transmission destination corresponding to said personal identification information included in said authentication request from said storage means and transmitting the result of said authentication processing and said apparatus identification information included in said authentication request in correspondence to the transmission destination specified by the related read transmission destination information.

The mode of operation of the authentication apparatus of the 26th aspect of the invention is as follows.

Said authentication request by the user engaging in a transaction, including the personal identification information for identifying the user, the transaction information indicating the content of transaction, and the apparatus identification information for identifying the transmitting apparatus of said authentication request is received at the receiving means.

Next, the authentication processing means transmits said transaction information included in said received authentication request to the apparatus of the user designated by said authentication request and performs the predetermined authentication processing in accordance with the reply from the apparatus of the related designated user.

Next, the transmitting means reads the information of said transmission destination corresponding to said personal identification information included in said authentication request from the storage means and transmits the result of said authentication request and said apparatus identification information included in said authentication request in correspondence from the transmitting means to the transmission destination specified by the related read transmission destination information.

In the authentication apparatus of the 26th aspect of the invention, preferably said authentication processing means attaches signature information indicating the authentication result of the related authentication apparatus to said transaction information and transmits the same to the apparatus of said designated user and generates signature information of the related authentication apparatus of the result of said authentication processing in accordance with the reply from said designated user.

Further, in the authentication apparatus of the 26th aspect of the invention, preferably said storage means stores log information of transactions between the user issuing said authentication request and said designated user.

Further, in the authentication apparatus of the 26th aspect of the invention, preferably said receiving means receives said authentication request including encrypted personal identification information and apparatus identification information, and said authentication apparatus further has a decrypting means for decrypting said personal identification information and said apparatus identification information included in said received authentication request.

Further, in the authentication apparatus of the 26th aspect of the invention, preferably said receiving means receives said authentication request further including third identification information used for the charge processing relating to said user.

Further, the authentication apparatus of the 26th aspect of the invention preferably further has a charge processing means for performing charge processing for the authentication relating to said transaction.

A processing apparatus of a 27th aspect of the invention is a processing apparatus for requesting authentication relating to a transaction performed via a network, comprising a transmitting means for transmitting said authentication request including personal identification information for identifying a user and apparatus identification information for identifying a related processing apparatus, a receiving means for receiving an authentication reply including identification information for identifying a transmitting apparatus of the authentication request, and a controlling means for deciding whether or not said personal identification information and the identification information included in said authentication reply coincide.

In the processing apparatus of the 27th aspect of the invention, preferably said controlling means sends a predetermined notification to the transmitting side of said authentication reply when deciding that said apparatus identification information and the identification information included in said authentication reply do not coincide.

Further, in the processing apparatus of the 27th aspect of the invention, preferably said controlling means sends a predetermined notification to the apparatus of the destination of transaction where the result of the related authentication included in said authentication reply is used when deciding that said apparatus identification information and the identification information included in said authentication response do not coincide.

An authentication system of a 28th aspect of the invention is an authentication system comprising a processing apparatus and an authentication apparatus connected via a network, wherein said authentication apparatus has a receiving means for receiving an authentication request including personal identification information for identifying a user and apparatus identification information for identifying a transmitting apparatus of said authentication request, a storage means for storing said personal identification information and information of a transmission destination for transmitting the authentication result in correspondence, an authentication processing means for performing authentication processing in response to said authentication request, and a transmitting means for reading the information of said transmission destination corresponding to said personal identification information included in said authentication request from said storage means and transmitting an authentication reply including the result of said authentication processing and said apparatus identification information included in said authentication request to the transmission destination specified by the related read transmission destination information and wherein said processing apparatus has a transmitting means for transmitting said authentication request including said personal identification information and said apparatus identification information for identifying the related processing apparatus, a receiving means for receiving said authentication reply, and a controlling means for deciding whether or not said apparatus identification information of the related processing apparatus and said apparatus identification information included in said authentication reply coincide.

An authentication method of a 29th aspect of the invention is an authentication method using a processing apparatus and an authentication apparatus connected via a network, comprised of the steps of transmitting an authentication request including personal identification information for identifying a user and apparatus identification information for identifying a related processing apparatus from said processing apparatus to said authentication apparatus, performing authentication processing in response to said authentication request at said authentication apparatus, transmitting an authentication reply including the result of said authentication processing and said apparatus identification information included in said authentication request to said processing apparatus specified by the information of said transmission destination corresponding to said personal identification information included in said authentication request from said authentication apparatus, and having said processing apparatus decide whether or not said apparatus identification information included in said authentication reply received from said authentication apparatus, said apparatus identification information of the related processing apparatus, and said apparatus identification information included in said authentication reply coincide.

An information storage method of a 30th aspect of the invention is comprised of the steps of dividing predetermined information into a plurality of modules each independently maintaining confidentiality of the predetermined information and storing said plurality of modules on storage media different from each other or in different regions of an identical storage medium.

In the information storage method of the 30th aspect of the invention, preferably the plurality of storage media different from each other and with said plurality of modules stored thereon are storage media physically independent from each other.

Further, in the information storage method of the 30th aspect of the invention, preferably said predetermined information is encrypted, and the information obtained by the related encryption is divided into said plurality of modules each independently maintaining the confidentiality of the predetermined information.

Further, in the information storage method of the 30th aspect of the invention, preferably said plurality of modules are encrypted, and the plurality of modules obtained by the encryption are stored on storage media different from each other or in different regions of an identical storage medium.

An information restoration method of a 31st aspect of the invention is comprised of the steps of reading modules from a plurality of storage media or different regions of an identical storage medium when a plurality of modules each independently maintaining confidentiality of the predetermined information are stored on a plurality of storage media different from each other or in different regions of an identical storage medium and combining the related read modules to restore said predetermined information.

In the information restoration method of the 31st aspect of the invention, preferably the plurality of storage media different from each other and with said plurality of modules stored therein are storage media physically independent from each other.

Further, in the information restoration method of the 31st aspect of the invention, preferably said read modules are combined and then decrypted to restore said predetermined information.

Further, in the information restoration method of the 31st aspect of the invention, preferably said read modules are decrypted and then combined to restore said predetermined information.

An information storage device of a 32nd aspect of the invention has an information dividing means for dividing said predetermined information into a plurality of modules each independently maintaining the confidentiality of the predetermined information and a writing means for writing said plurality of modules on storage media different from each other or in different regions of an identical storage medium.

An information restoration device of a 33rd aspect of the invention has a reading means for reading modules from a plurality of storage media or different regions of an identical storage medium when a plurality of modules each independently maintaining the confidentiality of the predetermined information are stored on a plurality of storage media different from each other or in the different regions of the identical storage medium and an information combining means for combining the related read modules to restore said predetermined information.

A storage medium of a 34th aspect of the invention can be read by a computer and stores one module among a plurality of modules when predetermined information is divided into a plurality of modules each independently maintaining the confidentiality of the predetermined information.

### BRIEF DESCRIPTION OF THE DRAWINGS

FIG. 1 is a view of the overall configuration of a transaction authentication system according to a first embodiment of the present invention.
FIG. 2 is a functional block diagram of an orderer terminal shown in FIG. 1.
FIG. 3 is a functional block diagram of an authentication apparatus shown in FIG. 1.
FIG. 4 is a functional block diagram of a vendor terminal shown in FIG. 1.

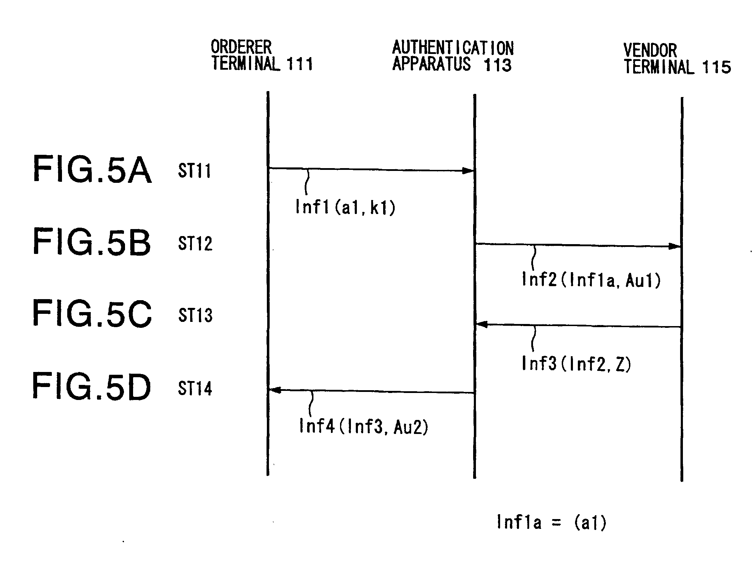

FIGS. 5A to 5D are views for explaining an operation of a transaction authentication system shown in FIG. 1.
FIG. 6 is a view of the overall configuration of a transaction authentication system according to a second embodiment of the present invention.
FIG. 7 is a functional block diagram of an orderer terminal shown in FIG. 6.
FIG. 8 is a functional block diagram of an authentication apparatus shown in FIG. 6.
FIG. 9 is a functional block diagram of a vendor terminal shown in FIG. 6.

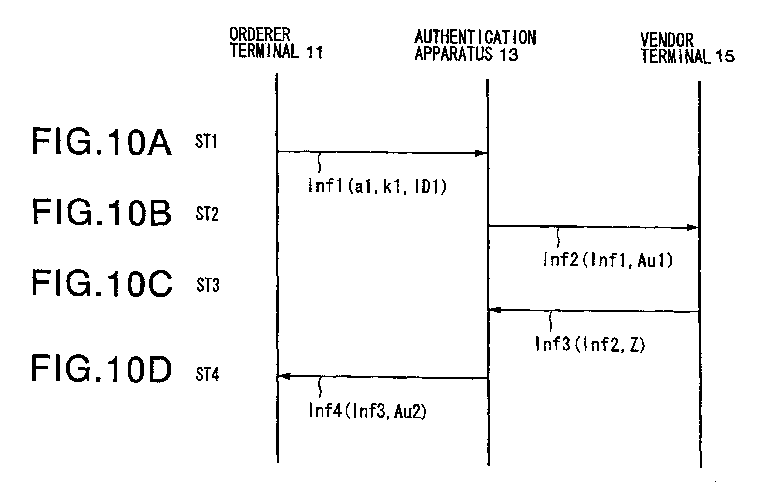

FIGS. 10A to 10D are views for explaining the operation of a transaction authentication system shown in FIG. 6.
FIG. 11 is a view of the overall configuration of a transaction authentication system according to a third embodiment of the present invention.
FIG. 12 is a view of the configuration of an orderer terminal shown in FIG. 11.
FIG. 13 is a view of the configuration of a vendor terminal shown in FIG. 11.
FIG. 14 is a view of the configuration of the authentication apparatus (A) shown in FIG. 11.
FIG. 15 is a view of the configuration of the authentication apparatus (B) shown in FIG. 11.
FIGS. 16A to 16F are views showing a flow of information for explaining an example of the operation of a transaction authentication system shown in FIG. 11.
FIG. 17 is a view of the overall configuration of a transaction authentication system according to a fourth embodiment of the present invention.
FIG. 18 is a view of the configuration of an orderer terminal shown in FIG. 17.
FIG. 19 is a view of the configuration of an vendor terminal shown in FIG. 17.
FIG. 20 is a view of the configuration of an authentication apparatus (A) shown in FIG. 17.
FIG. 21 is a view of the configuration of an authentication apparatus (B)shown in FIG. 17.
FIGS. 22A to 22F are views showing the flow of information for explaining an example of the operation of the transaction authentication system shown in FIG. 17.
FIGS. 23A to 23F are views showing the flow of information for explaining an example of the operation of the transaction authentication system shown in FIG. 17.
FIG. 24 is a view of the overall configuration of an authentication system of a fifth embodiment of the present invention.
FIG. 25 is a functional block diagram of a terminal shown in FIG. 24.
FIG. 26 is a functional block diagram of an authentication apparatus shown in FIG. 24.
FIG. 27 is a flowchart for explaining an example of the operation from when a network bank produces a smart card with part of an authentication information stored therein to when it sends this to a user in the authentication system shown in FIG. 24.
FIG. 28 is a flowchart for explaining an example of the operation when a user obtains authentication information at a terminal by using a smart card in the authentication system shown in FIG. 24.
FIG. 29 is a flowchart for explaining an example of the operation when a user obtains authentication information at a terminal by using a smart card in the authentication system shown in FIG. 24.
FIG. 30 is a view of the overall configuration of a transaction authentication system according to a sixth embodiment of the present invention.
FIG. 31 is a view of the configuration of an orderer terminal shown in FIG. 30.
FIG. 32 is a view of the configuration of a vendor terminal shown in FIG. 30.
FIG. 33 is a view of the configuration of an authentication apparatus shown in FIG. 30.
FIGS. 34A to 34D are flowcharts of the operation of the transaction authentication system when the orderer requests authentication to the authentication apparatus.
FIGS. 35A to 35D are flowcharts of the operation of the transaction authentication system when an illegitimate party requests authentication to the authentication apparatus.
FIG. 36 is a view of the configuration of the transaction authentication system in a seventh embodiment of the present invention.
FIG. 37 is a functional block diagram of an orderer terminal shown in FIG. 36.
FIG. 38 is a functional block diagram of an authentication apparatus shown in FIG. 36.
FIG. 39 is a functional block diagram of a vendor terminal shown in FIG. 36.
FIG. 40 is a view for explaining the overall operation of the transaction authentication system shown in FIG. 36.
FIG. 41 is a view for explaining the overall operation of the transaction authentication system shown in FIG. 36.
FIG. 42 is a view of the overall configuration of a transaction authentication system of an eighth embodiment of the present invention
FIG. 43 is a view for explaining a home network system shown in FIG. 42.
FIG. 44 is a view of the configuration of a home gateway shown in FIG. 43.
FIG. 45 is a view of the configuration of the vendor terminal shown in FIG. 43.
FIG. 46 is a view of the configuration of the authentication apparatus shown in FIG. 42.
FIGS. 47A to 47F are views showing the flow of the information for explaining an example of the operation of the transaction authentication system shown in FIG. 42 when a legitimate party sends an authentication request.
FIGS. 48A to 48E are views showing the flow of information for explaining an example of the operation of the transaction authentication system shown in FIG. 35 when an illegitimate party sends an authentication request.
FIG. 49 is a view of the overall configuration of a transaction authentication system according to a ninth embodiment of the present invention.
FIG. 50 is a view of the configuration of an orderer terminal shown in FIG. 49.
FIG. 51 is a view of the configuration of a vendor terminal shown in FIG. 49.
FIG. 52 is a view of the configuration of an authentication apparatus shown in FIG. 49.
FIGS. 53A to 53E are views showing the flow of information for explaining an example of the operation of the transaction authentication system shown in FIG. 49.
FIG. 54 is a view of the configuration of an information storage device of a 10th embodiment of the present invention.
FIG. 55 is a view for explaining the flow of the processing in the information storage device shown in FIG. 54.
FIG. 56 is a flowchart of the processing of the information storage device shown in FIG. 54.
FIG. 57 is a view of the configuration of an information restoration device of an 11th embodiment of the present invention.
FIG. 58 is a diagram for explaining the flow of information of the processing in the information restoration device shown in FIG. 57.
FIG. 59 is a flowchart of the processing of the information restoration device shown in FIG. 57.
FIG. 60 is a view of the configuration of an information storage device of a 12th embodiment of the present invention.
FIG. 61 is a diagram for explaining the flow of information of the processing in the information storage device shown in FIG. 60.
FIG. 62 is a flowchart of the processing of the information storage device shown in FIG. 60.
FIG. 63 is a view of the configuration of an information restoration device of a 13th embodiment of the present invention.
FIG. 64 is a view for explaining the flow of information of the processing in the information restoration device shown in FIG. 63.
FIG. 65 is a flowchart of the processing of the information restoration device shown in FIG. 64.

### BEST MODE FOR WORKING THE INVENTION

Below, an explanation will be made of transaction authentication systems according to embodiments of the present invention by referring to the drawings.

### First Embodiment

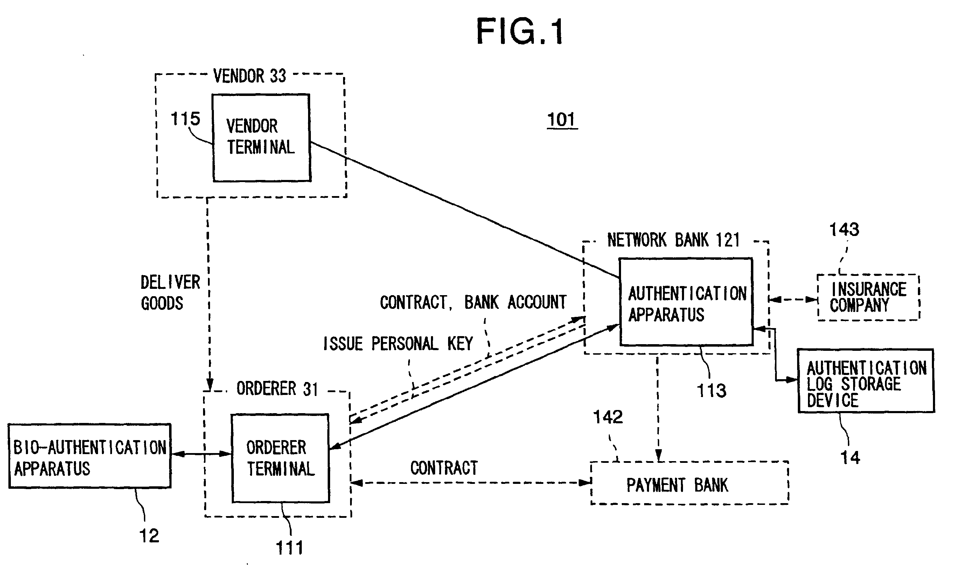

FIG. 1 is a view of the configuration of a transaction authentication system 101 in the present embodiment.

The transaction authentication system 101 has an orderer terminal 111 by which an orderer 31 performs order processing, a bio-authentication apparatus 12 for authenticating that the orderer 31 is the party in question by utilizing bio-characteristics of the orderer 31, an authentication apparatus 113 used by a network bank (or transaction authentication authority administration manager) 121 and authenticating commercial transaction information, an authentication log storage device 14 for storing an authentication log, and a vendor terminal 115 for a vendor 33 performing acceptance processing.

The present embodiment is an embodiment corresponding to the first to third aspects of the invention. The orderer terminal 111 corresponds to the first communication apparatus of the present invention, the authentication apparatus 113 corresponds to the authentication apparatus of the present invention, while the vendor terminal 115 corresponds to the second communication apparatus of the present invention. Further, the orderer 31 corresponds to the first transactor of the present invention, while the vendor 33 corresponds to the second transactor of the present invention.

### [Orderer terminal 111]

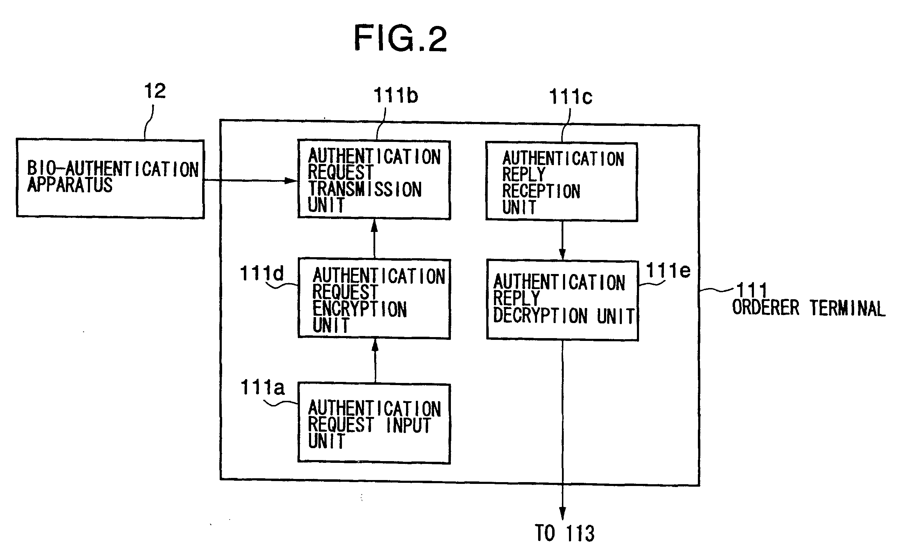

FIG. 2 is a functional block diagram of the orderer terminal 111.

The orderer terminal 111 is a terminal used by a general user contracting for usage of the present system, that is, the orderer 31.

The orderer terminal 111 has an authentication request input unit 111a, authentication request transmission unit 111b, authentication reply reception unit 111c, authentication request encryption unit 111d, and authentication reply decryption unit 111e as shown in FIG. 2.

The authentication request input unit 111a inputs order information a1 and orderer personal key information k1 (personal key information of the first transactor of the present invention) in accordance with for example the operation of a keyboard by the orderer 31. Note that, in the present embodiment, the personal key information is information relating to the charging of the corresponding party.

In the order information a1, for example, the name, address, and contact information of the orderer 31, personal ID information ID2 of the vendor 33 (personal identification information of the second transactor of the present invention), and the content of the goods or service ordered are described.

The authentication request transmission unit 111b transmits an authentication request Inf1 (first request of the present invention) including the order information a1 and the orderer personal key information input to the authentication request input unit 111a to the authentication apparatus 113.

The authentication reply reception unit 111c receives an authentication reply Inf4 from the authentication apparatus 113.

The authentication request encryption unit 111d encrypts the authentication request Inf1.

The authentication reply decryption unit 111e decrypts the authentication reply Inf4.

The bio-authentication apparatus 12 is an apparatus for authenticating the identity of the user by using so-called biometrics and concretely compares physical characteristics such as a fingerprint of the user (orderer 31) acquired in advance and stored in the bio-authentication apparatus 12 with a fingerprint or the like of the user to be actually authenticated and authenticates the identity according to the coincidence or incoincidence thereof. Note that, a storage device of the bio-authentication apparatus 12 for storing the information such as the fingerprint of the user in question is configured to be electrically cut off from the outside, so the information thereof is not leaked to the outside.

### [Authentication apparatus 113]

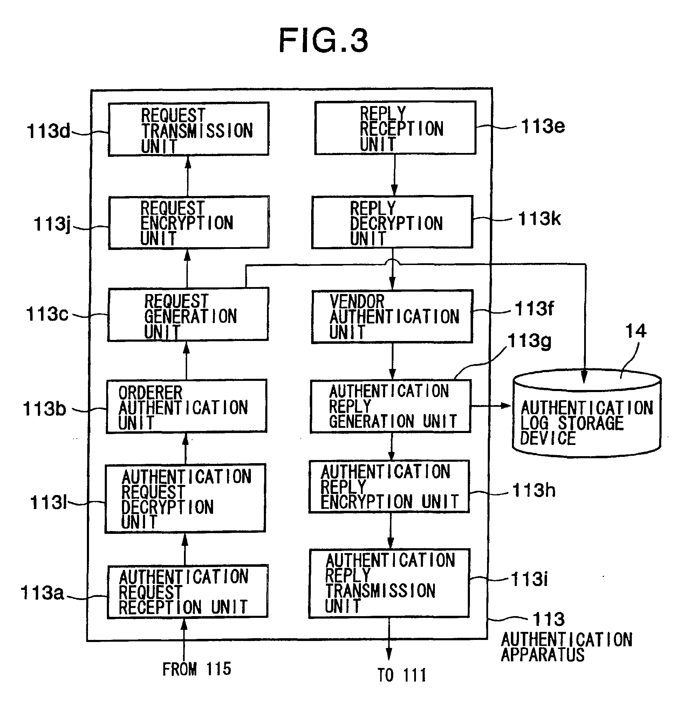

FIG. 3 is a functional block diagram of the authentication apparatus 113.

The authentication apparatus 113 is an apparatus used by the network bank 121 administering the present system.

The authentication apparatus 113 has an authentication request reception unit 113a, orderer authentication unit 113b, request generation unit 113c, request transmission unit 113d, reply reception unit 113e, vendor authentication unit 113f, authentication reply generation unit 113g, authentication reply encryption unit 113h, authentication reply transmission unit 113i, request encryption unit 113j, reply decryption unit 113k, and authentication request decryption unit 113l as shown in FIG. 3.

Here, the authentication request reception unit 113a corresponds to the first receiving means of the present invention, the orderer authentication unit 113b and the request generation unit 113c correspond to the first authenticating means of the present invention, the request transmission unit 113d corresponds to the first transmitting means of the present invention, the reply reception unit 113e corresponds to the second receiving means of the present invention, the vendor authentication unit 113f and the authentication reply generation unit 113g correspond to the second authenticating means of the present invention, the authentication reply encryption unit 113h corresponds to the encrypting means of the present invention, the authentication reply transmission unit 113i corresponds to the second transmitting means of the present invention, the request encryption unit 113j corresponds to the encrypting means of the present invention, the reply decryption unit 113k corresponds to the decrypting means of the present invention, and the authentication request decryption unit 113l corresponds to the decrypting means of the present invention.

The authentication request reception unit 113a receives an authentication request Inf1 transmitted by the orderer terminal 111.

The orderer authentication unit 113b authenticates the orderer 31 by using the orderer personal key information k1 included in the authentication request Inf1 and generates authentication information Au1 (first authentication information of the present invention).

The request generation unit 113c generates information Infla by deleting the personal key information k1 from the authentication request Inf1 and generates a request Inf2 including the related information Inf1a and including the authentication information Au1 (second request of the present invention).

The request transmission unit 113d transmits the request Inf2 to the vendor terminal 115.

The reply reception unit 113e receives a reply Inf3 from the vendor terminal 115 (reply of the present invention).

The vendor authentication unit 113f authenticates the vendor 33 by using personal key information k2 of the identification information of the vendor 33 included in the reply Inf3 and generates authentication information Au2 (second identification information of the present invention).

The authentication reply generation unit 113g adds the authentication information Au2 to the reply Inf3 and generates the authentication reply Inf4.

The authentication reply encryption unit 113h encrypts the authentication reply Inf4.

The authentication reply transmission unit 113i transmits the encrypted authentication reply Inf4 to the orderer terminal 111.

The request encryption unit 113j encrypts the request Inf2 generated by the request generation unit 113c.

The reply decryption unit 113k decrypts the reply Inf3.

The authentication request decryption unit 113l decrypts the authentication request Inf1.

### [Vendor terminal 115]

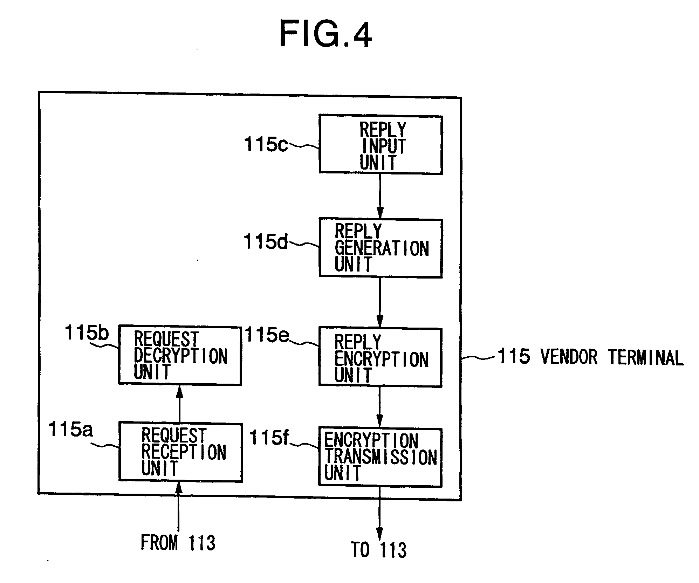

FIG. 4 is a functional block diagram of the vendor terminal 115.

The vendor terminal 115 is used by a vendor of goods contracting for usage of the present system, that is, the vendor 33 of the goods.

The vendor terminal 115 has a request reception unit 115a, request decryption unit 115b, reply input unit 115c, reply generation unit 115d, reply encryption unit 115e, and reply transmission unit 115f.

The request reception unit 115a receives the request Inf2 from the authentication apparatus 113.

The request decryption unit 115b decrypts the request Inf2.

The reply input unit 115c inputs acceptance confirmation information C1 and information Z for specifying the vendor 33 in accordance with the operation by the user.

The reply generation unit 115d generates the reply Inf3 including the request Inf2, acceptance confirmation information C1, and information Z for specifying the vendor 33.

The reply encryption unit 115e encrypts the reply Inf3.

The reply transmission unit 115f transmits the encrypted reply Inf3 to the authentication apparatus 113.

In the transaction authentication system 101 of the present embodiment, the network bank 121 (or transaction authentication authority) acting as a third party of the commercial transaction is interposed between the orderer 31 and the vendor 33 of the parties to the electronic commercial transaction. The network bank 121 authenticates the electronic commercial transaction between the parties by using the authentication apparatus 113, whereby illegitimacy of the electronic commercial transaction is prevented. The commercial transaction parties desiring to use the transaction authentication system 101 first conclude usage contracts of the authentication apparatus 13 with this network bank 121.

For example, as shown in FIG. 1, the orderer 31 sends information required for the contract to the network bank (transaction authentication authority administration company) 121 by using the Internet, mail, or the like. As the information sent here, other than the name, address, etc. of the orderer 31, there can be mentioned a bank account of an accounting bank 42 contracting with the orderer 31 from which charges are accounted. The network bank 121 receiving this information issues the contracted orderer 31 personal ID information for proving the legitimacy of the account when accounting the bank 42 and personal key information for identifying the orderer 31 in the present system. The personal ID information issued here is also sent to the bank 42. The bank 42 authenticates this personal ID information when accounting for goods or the like so as to prevent illegitimate accounting.

Note that, in FIG. 1, the explanation was only made of the case where the orderer 31 concluded a usage contract, but the vendor of the goods, that is, the vendor 33 of the goods, also concludes a usage contract with the network bank 121 by a similar process. Further, here, the personal ID information and the personal key information were individually issued, but it is also possible to employ a format wherein the personal key information can be used also as the personal ID information and separate personal ID information is not issued.

Next, an explanation will be made of the operation of the transaction authentication system 101.

### Step ST11:

The orderer 31 desiring to purchase goods by an electronic commercial transaction first obtains information relating to the goods from the commercial transaction site or the like of the Internet and selects the goods desired to be purchased.

The orderer 31 selecting the goods to be purchased next performs the order processing of the selected goods by using the orderer terminal 111 shown in FIG. 2 possessed by the orderer 31.

The order processing is carried out by using the authentication request input unit 111a and inputting the order information a1 for designating the goods desired to be purchased, the quantity, etc. and inputting the orderer personal key information k1 as the personal key information of the orderer 31. Here, the orderer personal key information k1 may be manually input by the orderer 31 whenever he or she performs the order processing or may be automatically input at the time of order processing.

By this, the authentication request Inf1 including the input order information a1 and orderer personal key information k1 is generated. The related authentication request Inf1 is encrypted at the authentication request encryption unit 111d and then transmitted via the authentication request transmission unit 111b to the authentication apparatus 113.

At this time, the authentication request transmission unit 111b has an illegitimate transmission prevention function for prohibiting the transmission of an authentication request Inf1 for preventing an illegitimate order by a third party and an erroneous order due to a childish prank. The authentication request Infl is not transmitted in this state.

For this reason, the orderer 31 desiring to engage in an electronic commercial transaction must authenticate itself by using the bio-authentication apparatus 12 and disable this illegitimate transmission prevention function.

For example, when the bio-authentication apparatus 12 is for authenticating the orderer 31 by the fingerprint of the orderer 31, the orderer 31 makes the bio-authentication apparatus 12 read his or her fingerprint. The bio-authentication apparatus 12 reading the fingerprint of the orderer 31 compares the read fingerprint with the fingerprint data of the orderer 31 in question which was acquired in advance and stored inside the apparatus and decides whether or not the read fingerprint is that of the orderer 31 in question.

Then, when it decides that the read fingerprint is that of the orderer 31 in question, the bio-authentication apparatus 12 sends information indicating that the authentication was successful to the authentication request transmission unit 111b. The authentication request transmission unit 111b receiving this information disables the illegitimate transmission prevention function and transmits the sent authentication request to the authentication apparatus 113 possessed by the transaction authentication authority 32.

### Step ST12:

The authentication request Inf1 transmitted to the authentication apparatus 113 shown in FIG. 3 is received at the authentication request reception unit 113a, decrypted at the authentication request decryption unit 113l, and then sent to the orderer authentication unit 113b.

Next, the orderer authentication unit 113b decides whether or not the orderer is the legitimate orderer 31 by using the orderer personal key information k1 included in the authentication request Inf1 and personal key information of the contractor stored in a not illustrated storage device.

Then, when it decides that the orderer is the legitimate orderer 31, it sends the authentication request Inf1 to the request generation unit 113c. The request generation unit 113c generates the request Inf2 including the information Infla generated by deleting the personal key information k1 from the authentication request Inf1 and including the authentication information Au1 (second request of the present invention).

The related Inf2 is encrypted at the request encryption unit 113, and then transmitted via the request transmission unit 113d to the vendor terminal 115.

Further, the authentication request Inf1 is stored as an authentication log in the authentication log storage device 14.

### Step ST13:

The request Inf2 transmitted to the vendor terminal 115 is received by the request reception unit 115a, then decrypted by the request decryption unit 115b. The vendor 33 performs the processing for acceptance of the goods based on the decrypted request Inf2.

The acceptance processing is carried out by the vendor 33 inputting the acceptance confirmation information C1 and the information Z specifying the vendor 33 using the reply input unit 115c. Here, the information Z can also be manually input by the vendor 33 whenever the acceptance processing is carried out or can be automatically carried out at the time of shipping processing.

Next, the reply generation unit 115d generates the reply Inf3 including the request Inf2, acceptance confirmation information C1, and information Z. The related reply Inf3 is encrypted at the reply encryption unit 115e, then transmitted via the reply transmission unit 115f to the authentication apparatus 113.

### Step ST14:

The reply Inf3 transmitted to the authentication apparatus 113 is received at the reply reception unit 113e shown in FIG. 3, decrypted by the reply decryption unit 113k, and then sent to the vendor authentication unit 113f.

Next, in the vendor authentication unit 113f, it is decided whether or not the vendor is the legitimate vendor 33 by using the information Z included in the reply Inf3 and the personal key information of the contractor stored in the not illustrated storage device.

Then, when it is decided that the vendor is the legitimate vendor 33, the reply Inf3 is sent to the authentication reply generation unit 113g. In the authentication reply generation unit 113g, the authentication reply Inf4 including the reply Inf3 and the authentication information Au2 indicating that the authentication was established is generated.

The related authentication reply Inf4 is encrypted at the authentication reply encryption unit 113h, then transmitted via the authentication reply transmission unit 113i to the orderer terminal 111.

Further, the reply Inf3 is stored as an authentication log in the authentication log storage device 14.

The authentication reply Inf4 transmitted to the orderer terminal 111 is received at the authentication reply reception unit 111c shown in FIG. 2, then decrypted by the authentication reply decrypting means 111e. The orderer 31 confirms this decrypted authentication reply Inf4, whereby it can learn that its own order for goods was properly received.

Thereafter, the network bank 121 accounts the sum accompanying the related transaction from the bank account of the accounting bank 42 which the orderer 31 has contracted with by using the personal key information k1 of the orderer 31. This accounting is possible by accounting the bank account at the network bank 121, then transferring the sum to the bank account of the vendor 33 or by directly transferring the sum from the bank account of the orderer 31 to the bank account of the vendor 33.

Further, the vendor 33 provides the goods and service to the orderer 31 based on the order information a1.

As explained above, according to the transaction authentication system 101, by authenticating the electronic commercial transaction between the orderer 31 and the vendor 33 using the orderer terminal 111 and the vendor terminal 115 by using the authentication apparatus 113, the reliability of the electronic commercial transaction can be raised.

Further, according to the transaction authentication system 101, the request Inf2 transmitted from the authentication apparatus 113 to the vendor terminal 115 does not include the personal key information k1 of the vendor 33, so the personal key information relating to the charging of the orderer 31 is not transferred to the vendor 33. For this reason, illegitimate usage of the personal key information can be effectively suppressed.

Further, according to the transaction authentication system 101, even when a third party steal the orderer personal key information k1 and makes a false order or tampers with the information, the authentication reply Inf4 with respect to the order will be transmitted to the formal orderer 31 and the formal orderer 31 can learn of the existence of the false order or tampering by the third party, so it becomes possible to effectively prevent illegitimacy of an electronic transaction by this.

Further, since the authentication apparatus 113 authenticates the authentication request Inf1 and the reply Inf3, the reliability of the information transmitted and received in the electronic commercial transaction increases, so it becomes possible to effectively prevent illegitimacy in the electronic transaction.

Further, since the authentication log storage device 14 stores the authentication request Inf1 and the reply Inf3, it becomes possible for a third party to objectively prove the log of the electronic commercial transactions and it becomes possible to effectively prevent illegitimacy between parties to the electronic commercial transaction by this.

Further, since the authentication request Inf1, request Inf2, reply Inf3, and authentication reply Inf4 are transmitted after encryption, it becomes possible to effectively prevent tampering, theft, etc. of information by a third party.

Further, since the authentication request transmission unit 111b transmits the authentication request only when the bio-authentication apparatus 12 authenticates that the orderer 31 is the party in question, it becomes possible to prevent an illegitimate order by a third party and an erroneous order by childish prank.

### Second Embodiment

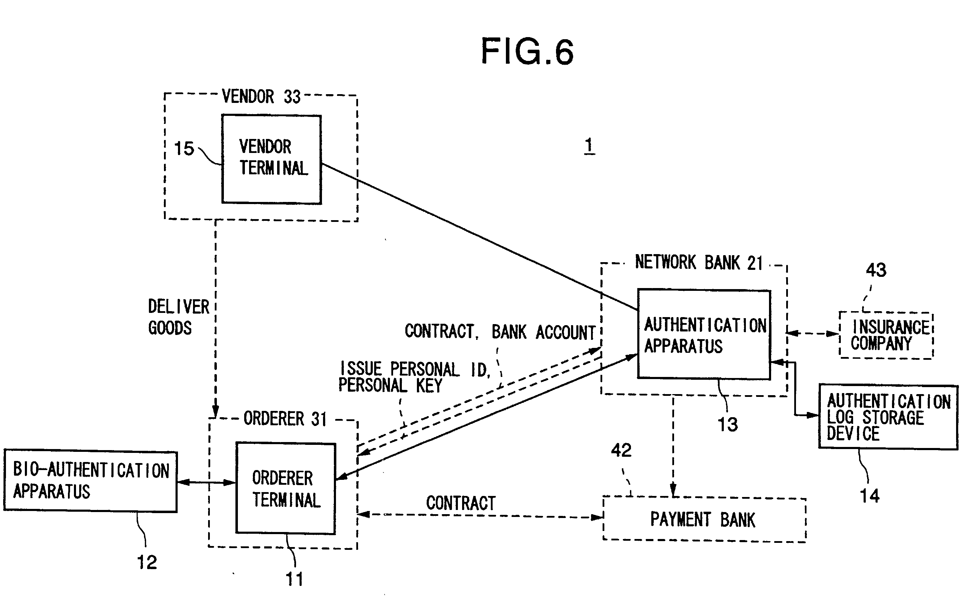

FIG. 6 is a view of the configuration of the transaction authentication system 1 in the present embodiment.

The transaction authentication system 1 has an orderer terminal 11 by which the orderer 31 performs the order processing, the bio-authentication apparatus 12 for authenticating that the orderer 31 is the party in question by utilizing the bio-characteristics of the orderer 31, an authentication apparatus 13 used by a network bank (or transaction authentication authority administration company) 21 and authenticating the commercial transaction information, the authentication log storage device 14 storing the authentication log, and a vendor terminal 15 by which the vendor 33 performs the acceptance processing.

The present embodiment is an embodiment corresponding to the fourth to sixth aspects of the invention, the orderer terminal 11 corresponds to the first communication apparatus of the present invention, the authentication apparatus 13 corresponds to the authentication apparatus of the present invention, and the vendor terminal 15 corresponds to the second communication apparatus of the present invention. Further, the orderer 31 corresponds to the first transactor of the present invention, while the vendor 33 corresponds to the second transactor of the present invention.

### [Orderer terminal 11]

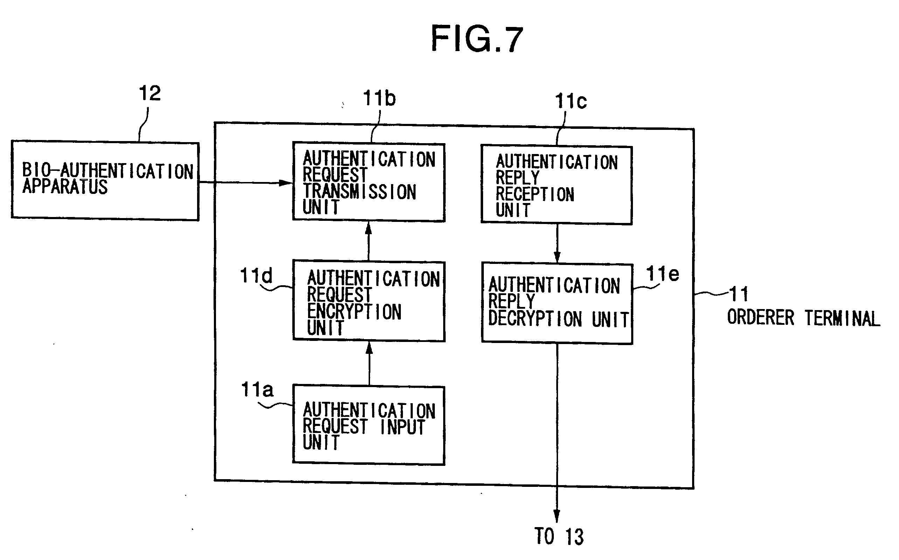

FIG. 7 is a functional block diagram of the orderer terminal 11.

The orderer terminal 11 is a terminal used by a general user contracting for use of the present system, that is, the orderer 31.

The orderer terminal 11 has an authentication request input unit 11a, authentication request transmission unit 11b, authentication reply reception unit 11c, authentication request encryption unit 11d, and authentication reply decryption unit 11e as shown in FIG. 7.

The authentication request input unit 11a inputs the order information a1, orderer personal ID information ID1 (personal identification information of the first transactor of the present invention), and the orderer personal key information k1 (personal key information of the first transactor of the present invention) in accordance with for example the operation of the keyboard by the orderer 31. Note that, in the present embodiment, the personal key information is information relating to the charging of the corresponding party.

The order information a1, for example, describes the name, address, and contact information of the orderer 31, the personal ID information ID2 (personal ID information of the second transactor of the present invention) of the vendor 33, and the content of the goods or service to be ordered.

The authentication request transmission unit 11b transmits the authentication request Inf1 (first request of the present invention) including the order information a1, orderer personal ID information ID1, and the orderer personal key information input to the authentication request input unit 11a to the authentication apparatus 13.

The authentication reply reception unit 11c receives the authentication reply Inf4 from the authentication apparatus 13.

The authentication request encryption unit 11d encrypts the authentication request Inf1.

The authentication reply decryption unit 11e decrypts the authentication reply Inf4.

The bio-authentication apparatus 12 is an apparatus for the personal authentication of the user by using so-called biometrics and specifically compares physical characteristics such as a fingerprint of the user (orderer 31) acquired in advance and stored in the bio-authentication apparatus 12 with a fingerprint or the like of the user to be actually authenticated and authenticates the party in question according to coincidence or noncoincidence thereof. Note that, the storage device of the bio-authentication apparatus 12 for storing information such as the fingerprint of the user in question is configured to be electrically cut off from the outside, so the information thereof will not leak to the outside.

### [Authentication apparatus 13]

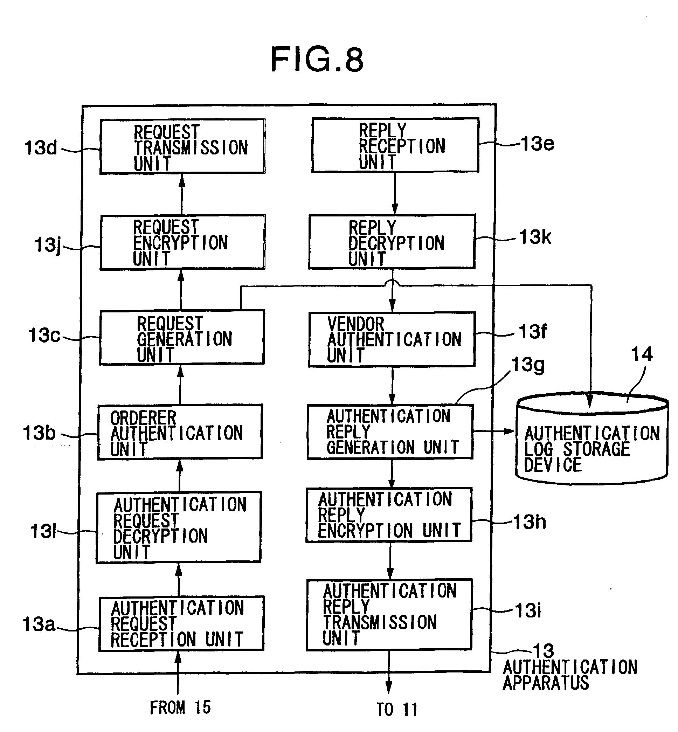

FIG. 8 is a functional block diagram of the authentication apparatus 13.

The authentication apparatus 13 is an apparatus used by the network bank 21 administering the present system.

The authentication apparatus 13 has an authentication request reception unit 13a, orderer authentication unit 13b, request generation unit 13c, request transmission unit 13d, reply reception unit 13e, vendor authentication unit 13f, authentication reply generation unit 13g, authentication reply encryption unit 13h, authentication reply transmission unit 13i, request encryption unit 13j, reply decryption unit 13k, and authentication request decryption unit 131 as shown in FIG. 8.

Here, the authentication request reception unit 13a corresponds to the first receiving means of the present invention, the orderer authentication unit 13b and the request generation unit 13c correspond to the first authenticating means of the present invention, the request transmission unit 13d corresponds to the first transmitting means of the present invention, the reply reception unit 13e corresponds to the second receiving means of the present invention, the vendor authentication unit 13f and the authentication reply generation unit 13g correspond to the second authenticating means of the present invention, the authentication reply encryption unit 13h corresponds to the encrypting means of the present invention, the authentication reply transmission unit 13i corresponds to the second transmitting means of the present invention, the request encryption unit 13j corresponds to the encrypting means of the present invention, the reply decryption unit 13k corresponds to the decrypting means of the present invention, and the authentication request decryption unit 131 corresponds to the decrypting means of the present invention.

The authentication request reception unit 13a receives the authentication request Inf1 transmitted by the orderer terminal 11.

The orderer authentication unit 13b authenticates the orderer 31 by using the orderer personal ID information ID1 and the orderer personal key information k1 included in the authentication request Inf1 and generates the authentication information Au1 (first authentication information of the present invention).

The request generation unit 13c adds the authentication information Au1 to the authentication request Inf1 authenticated by the orderer authentication unit 13b and generates the request Inf2 (second request of the present invention).

The request transmission unit 13d transmits the request Inf2 to the vendor terminal 15.

The reply reception unit 13e receives a reply Inf3 (reply of the present invention) from the vendor terminal 15.

The vendor authentication unit 13f authenticates the vendor 33 by using personal key information k2 as the identification information of the vendor 33 included in the reply Inf3 and generates the authentication information Au2 (second identification information of the present invention).

The authentication reply generation unit 13g adds the authentication information Au2 to the reply Inf3 and generates the authentication reply Inf4.

The authentication reply encryption unit 13h encrypts the authentication reply Inf4.

The authentication reply transmission unit 13i transmits the encrypted authentication reply Inf4 to the orderer terminal 11.

The request encryption unit 13j encrypts the request Inf2 generated by the request generation unit 13c.

The reply decryption unit 13k decrypts the reply Inf3.

The authentication request decryption unit 131 decrypts the authentication request Inf1.

### [Vendor terminal 15]

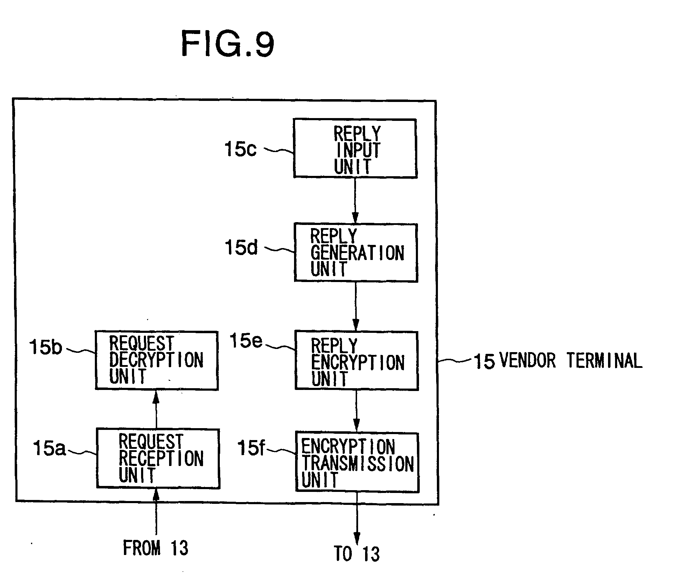

FIG. 9 is a functional block diagram of the vendor terminal 15.

The vendor terminal 15 is used by the vendor of the goods contracting for use of the present system, that is, the vendor 33 of the goods.

The vendor terminal 15 has a request reception unit 15a, request decryption unit 15b, reply input unit 15c, reply generation unit 15d, reply encryption unit 15e, and reply transmission unit 15f.

The request reception unit 15a receives the request Inf2 from the authentication apparatus 13.

The request decryption unit 15b decrypts the request Inf2.

The reply input unit 15c inputs the acceptance confirmation information C1 and the information Z specifying the vendor 33 in accordance with an operation by the user.

The reply generation unit 15d generates the reply Inf3 including the request Inf2, acceptance confirmation information C1, and information Z.

The reply encryption unit 15e encrypts the reply Inf3.

The reply transmission unit 15f transmits the encrypted reply Inf3 to the authentication apparatus 13.

In the transaction authentication system 1 of the present embodiment, the network bank 21 (or transaction authentication authority) serving as a third party in the commercial transaction is interposed between the orderer 31 and the vendor 33 of the parties to the electronic commercial transaction. The network bank 21 authenticates the electronic commercial transaction performed between the parties by using the authentication apparatus 13, whereby the illegitimacy on the electronic commercial transaction is prevented. The commercial transaction parties desiring to use the transaction authentication system 1 first conclude a usage contract of the authentication apparatus 13 with this network bank 21.

For example, as shown in FIG. 6, the orderer 31 sends the information required for the contract to the network bank 21 by using the Internet, mail, or the like. As the information sent here, other than the name, address, etc. of the orderer 31, there can be mentioned the bank account of an accounting bank 42 contracting with the orderer 31 from which charges are accounted. The network bank 21 receiving this information issues personal ID information for proving the legitimacy of the account when accounting the bank 42 and the personal key information for identifying the orderer 31 in the present system to the contracted orderer 31. The personal ID information issued here is also sent to the bank 42. The bank 42 authenticates this personal ID information when accounting for the goods or the like so as to prevent illegitimate accounting.

Note that, in FIG. 6, an explanation was only made of the case where the orderer 31 concluded a usage contract, but the vendor of the goods etc., that is, the vendor 33 of the goods, also concludes a usage contract with the network bank 21 by a similar process. Further, here, the personal ID information and the personal key information were individually issued, but it is also possible to employ a format wherein the personal key information can also be used as the personal ID information and separate personal ID information is not issued.

Next, an explanation will be made of the operation of the transaction authentication system 1.

### Step ST1:

An orderer 31 desiring to purchase goods by an electronic commercial transaction first obtains information relating to the goods from a commercial transaction site or the like of the Internet and selects the goods desired to be purchased.

The orderer 31 selecting the goods to be purchased next performs the order processing of the selected goods by using the orderer terminal 11 shown in FIG. 7 owned by the orderer 31.

The order processing is carried out by using the authentication request input unit 11a to input the order information a1 designating the goods desired to be purchased, the quantity, etc. and input the personal ID information of the orderer 31 issued at the time of contracting, that is, the orderer personal ID information ID1, and the personal key information of the orderer, that is, the orderer personal key information k1. Here, the orderer personal ID information ID1 and the orderer personal key information k1 may be input manually by the orderer 31 whenever he or she performs the order processing or may be automatically input at the time of order processing.

Due to this, the authentication request Inf1 including the input order information a1, orderer personal ID information ID1, and orderer personal key information k1 is generated. The related authentication request Inf1 is encrypted at the authentication request encryption unit 11d and then transmitted via the authentication request transmission unit 11b to the authentication apparatus 13.

At this time, the authentication request transmission unit 11b has an illegitimate transmission prevention function for inhibiting the transmission of an authentication request Inf1 to prevent an illegitimate order by a third party or an erroneous order due to a childish prank. The authentication request Inf1 is not transmitted in this state.

For this reason, the orderer 31 desiring to perform an electronic commercial transaction must authenticate himself or herself by using the bio-authentication apparatus 12 to cancel this illegitimate transmission prevention function.

For example, when the bio-authentication apparatus 12 is for authenticating the orderer 31 by a fingerprint of the orderer 31, the orderer 31 makes the bio-authentication apparatus 12 read his or her fingerprint. The bio-authentication apparatus 12 reading the fingerprint of the orderer 31 compares the read fingerprint against the fingerprint data of the orderer 31 in question acquired in advance and stored inside the apparatus and decides whether or not the read fingerprint is that of the orderer 31 in question.

Then, when it is decided that the read fingerprint is that of the orderer 31 in question, the bio-authentication apparatus 12 gives information indicating that the authentication was established to the authentication request transmission unit 11b. The authentication request transmission unit 11b receiving this information disarms the illegitimate transmission prevention function and transmits the sent authentication request to the authentication apparatus 13 owned by the network bank 21.

### Step ST2:

The authentication request Inf1 transmitted to the authentication apparatus 13 shown in FIG. 8 is received at the authentication request reception unit 13a, decrypted at the authentication request decryption unit 131, then sent to the orderer authentication unit 13b.

Next, the orderer authentication unit 13b decides whether or not the orderer is the legitimate orderer 31 by using the orderer personal ID information ID1 and the orderer personal key information k1 included in the authentication request Inf1 and the personal key information of the contractor stored in the not illustrated storage device.

Then, when it is decided that the orderer is the legitimate orderer 31, the authentication request Inf1 is sent to the request generation unit 13c. The request generation unit 13c generates the request Inf2 including the authentication request Inf1 and including the authentication information Au1 indicating that the authentication was established.

The related Inf2 is encrypted at the request encryption unit 13, then transmitted via the request transmission unit 13d to the vendor terminal 15.

Further, the authentication request Inf1 is stored as an authentication log in the authentication log storage device 14.

### Step ST3:

The request Inf2 transmitted to the vendor terminal 15 is received by the request reception unit 15a, then decrypted by the request decryption unit 15b. The vendor 33 performs acceptance processing of the goods based on the decrypted request Inf2.

The acceptance processing is carried out by the vendor 33 inputting the acceptance confirmation information C1 and the information Z specifying the vendor 33 by using the reply input unit 15c. Here, the related information Z can be manually input by the vendor 33 whenever the acceptance processing is carried out or can be automatically input at the time of shipping processing.

Next, the reply generation unit 15d generates the reply Inf3 including the request Inf2, acceptance confirmation information C1, and information Z specifying the vendor 33. The related reply Inf3 is encrypted at the reply encryption unit 15e, then transmitted via the reply transmission unit 15f to the authentication apparatus 13.

### Step ST4:

The reply Inf3 transmitted to the authentication apparatus 13 is received at the reply reception unit 13e shown in FIG. 8, decrypted by the reply decryption unit 13k, and then sent to the vendor authentication unit 13f.

Next, the vendor authentication unit 13f decides whether or not the vendor is the legitimate vendor 33 by using the information Z included in the reply Inf3 and the personal key information of the contractor stored in the not illustrated storage device.

Then, when the unit decides that the vendor is the legitimate vendor 33, it sends the reply Inf3 to the authentication reply generation unit 13g. The authentication reply generation unit 13g generates the authentication reply Inf4 including the reply Inf3 and the authentication information Au2 indicating that the authentication was established.

The related authentication reply Inf4 is encrypted at the authentication reply encryption unit 13h, then transmitted via the authentication reply transmission unit 13i to the orderer terminal 11.

Further, the reply Inf3 is stored as the authentication log in the authentication log storage device 14.

The authentication reply Inf4 transmitted to the orderer terminal 11 is received at the authentication reply reception unit 11c shown in FIG. 7, then decrypted by the authentication reply decrypting means 11e. The orderer 31 confirms this decrypted authentication reply Inf4 and thereby can learn that its order of goods was properly received. Thereafter, the vendor 33 accounts the price of the ordered goods from the bank which the orderer 31 contracts with by using the orderer personal ID information ID1 of the orderer 31 and mails the ordered goods to the orderer 31.

As explained above, according to the transaction authentication system 1, by authenticating the electronic commercial transaction between the orderer 31 and the vendor 33 using the orderer terminal 11 and the vendor terminal 15 by using the authentication apparatus 13, the reliability of the electronic commercial transaction can be raised.

Further, according to the transaction authentication system 1, even when a third party steals the orderer personal key information k1 and places a false order or tampers with the information, the authentication reply Inf4 for the order will be transmitted to the formal orderer 31. The formal orderer 31 can learn of the existence of a false order or tampering by a third party, so it becomes possible to effectively prevent illegitimacy of an electronic transaction.

Further, since the authentication apparatus 13 authenticates the authentication request Inf1 and the reply Inf3, the reliability of the information transmitted and received in the electronic commercial transaction increases, so it becomes possible to effectively prevent illegitimacy in the electronic transaction.

Further, the authentication log storage device 14 stores the authentication request Inf1 and the reply Inf3, so it becomes possible for a third party to objectively prove the log of the electronic commercial transaction and thereby it becomes possible to effectively prevent illegitimacy between the parties to the electronic commercial transaction.

Further, since the authentication request Inf1, request Inf2, reply Inf3, and the authentication reply Inf4 are transmitted after encryption, it becomes possible to effectively prevent tampering, theft, etc. of the information by a third party.

Further, since the authentication request transmission unit 11b transmits the authentication request only when it is authenticated by the bio-authentication apparatus 12 that the orderer 31 is the party in question, it becomes possible to prevent an illegitimate order by a third party or an erroneous order by a childish prank.

Note that, the above processing functions can be realized by a computer. In this case, the processing contents of functions to be provided in the orderer terminal 11, authentication apparatus 13, and the vendor terminal 15 are described in a program recorded on a computer readable storage medium. By executing this program at a computer, the above processing is realized by the computer. As the computer readable storage medium, there are a magnetic storage device, semiconductor memory, etc. When it is distributed in the market, the program is stored and distributed in portable storage medium such as a compact disk read only memory (CD-ROM) or floppy disk or the program is stored in the storage device of a computer connected via the network and transferred to another computer through a network. When executing this at a computer, the program is stored in a hard disk device or the like in the computer, loaded in the main memory, and executed.

Note that, in the present embodiment, the transaction authentication system 1 was utilized in an electronic commercial transaction, but it is also possible to utilize this for preventing illegitimacy in a questionnaire or balloting using an electronic communication line and other information transmission.

Further, in the above embodiment, the case where an authentication request Inf1 including the orderer personal ID information ID1 was transmitted from the orderer terminal 11 to the authentication apparatus 13 was illustrated, but it is also possible to transmit an authentication request Infl not including the orderer personal ID information ID1.

### Third Embodiment

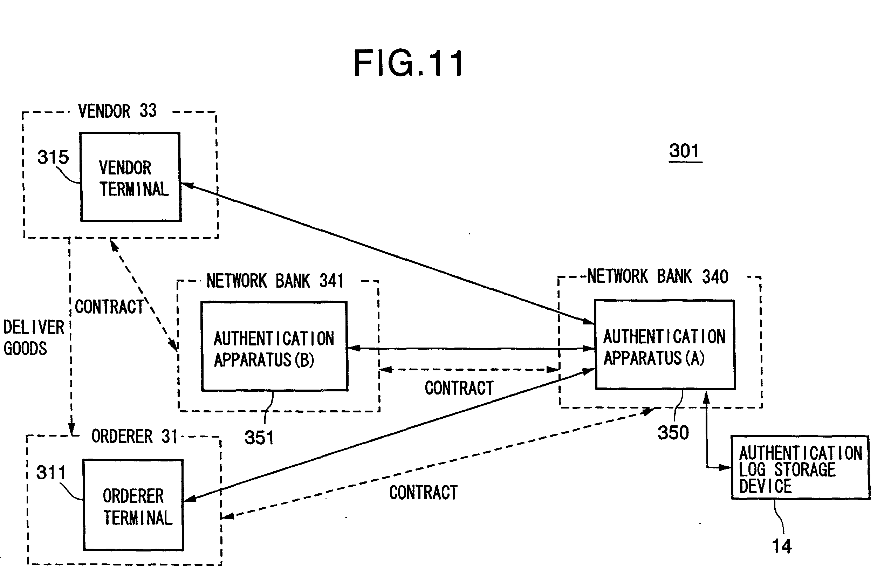

FIG. 11 is a view of the overall configuration of a transaction authentication system 301 of the present embodiment.

As shown in FIG. 11, the transaction authentication system 301 comprises, for example, an orderer terminal 311 of the orderer 31, a vendor terminal 315 of the vendor 33, an authentication apparatus 350 of a network bank 340, an authentication apparatus 351 of a network bank 341, and the authentication log storage device 14 storing the authentication log connected via a network (communication network) such as the Internet and authenticates the legitimacy of a transaction between the orderer 31 and the vendor 33.

In the present embodiment, for example, the orderer 31 and the network bank 340 conclude a contract relating to authentication, while the vendor 33 and the network bank 341 conclude a contract relating to authentication.

Further, the network bank 340 and the network bank 341 conclude a contract for mutual access for mutual linkage relating to authentication.

The present embodiment is an embodiment corresponding to the seventh to ninth aspects of the invention.

In the present embodiment, the orderer 31 corresponds to the first transactor, while the vendor 33 corresponds to the second transactor of the present invention.

Further, the authentication apparatus 350 corresponds to the authentication apparatus of the seventh aspect of the invention and the first authentication apparatus of the eighth aspect of the invention and ninth aspect of the invention.

Further, the authentication apparatus 351 corresponds to the other authentication apparatus of the seventh aspect of the invention and the second authentication apparatus of the eighth aspect of the invention and ninth aspect of the invention.

Below, an explanation will be made of the apparatuses comprising the transaction authentication system 301.

### [Orderer terminal 311]

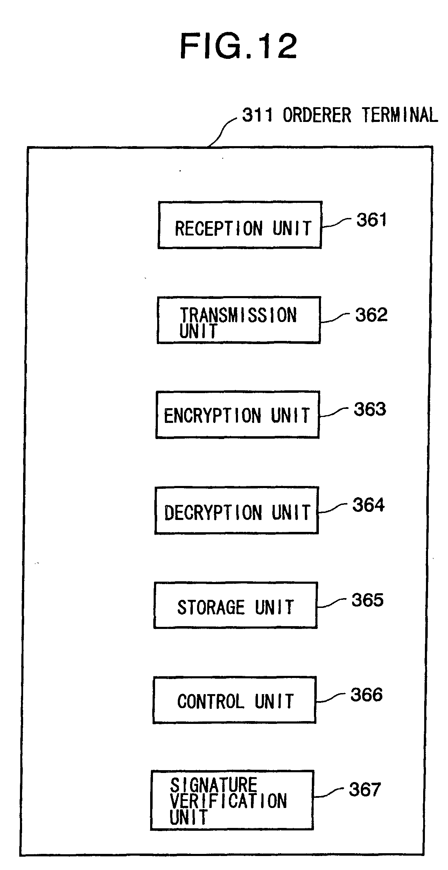

As shown in FIG. 12, the orderer terminal 311 is hardware such as a personal computer, a set top box, or a game machine provided in the home of the orderer 31 and has a reception unit 361, transmission unit 362, encryption unit 363, decryption unit 364, storage unit 365, control unit 366, and signature verification unit 367.

Note that the orderer terminal 311 may also have a bio-authentication unit for authenticating that the orderer 31 is a legitimate user by comparing the information obtained from the physical characteristics of the orderer 31 such as a fingerprint with information indicating the physical characteristics stored in the storage unit 365 in advance when used by for example the orderer 31.

The reception unit 361 receives the information or request from the authentication apparatus 350 via a network.

The transmission unit 362 transmits the information or request to the authentication apparatus 350 via the network.

Further, when accessing the descriptive information of the goods etc. provided by the vendor 33, the reception unit 361 and the transmission unit 362 transmit and receive the information or request with the related server.

The encryption unit 363 encrypts the information or request by using a predetermined encryption key.

The decryption unit 364 decrypts the information or request by using the predetermined encryption key.

The storage unit 365 stores for example a secret key K_{31,S} assigned to the orderer 31 when for example the orderer 31 contracts with the network bank 340.

The control unit 366 centrally controls the processing of the components in the orderer terminal 311.

The signature verification unit 367 verifies the signature information produced by for example the authentication apparatus 350 by using a public key K_{40,P} of the network bank 340.

### [Vendor terminal 315]

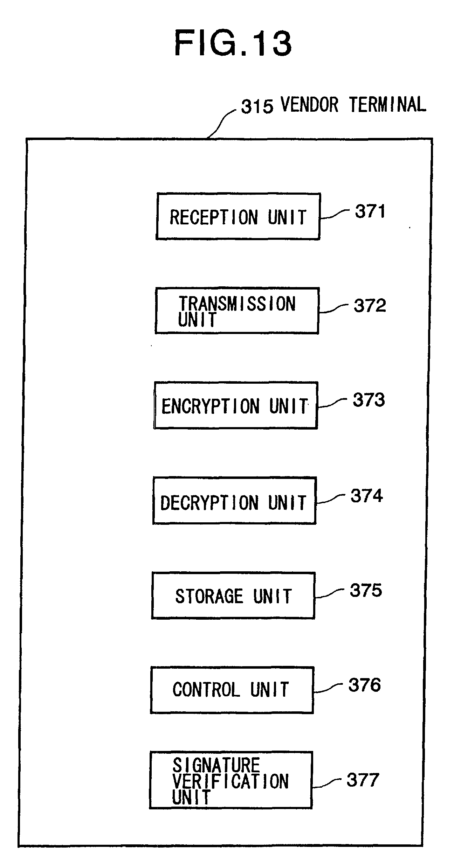

As shown in FIG. 13, the vendor terminal 315 is a server used by a vendor 33 opening up shop in a cybermall or the like and has a reception unit 371, transmission unit 372, encryption unit 373, decryption unit 374, storage unit 375, control unit 376, and signature verification unit 377.

The reception unit 371 receives the information or request from the authentication apparatuses 350 and 351 via the network.

The transmission unit 372 transmits the information or request to the authentication apparatuses 350 and 351 via the network.

Further, the reception unit 371 and the transmission unit 372 transmit for example descriptive information of goods provided by the vendor 33 read from the storage unit 375 to the orderer terminal 311 via the network in response to access from the orderer terminal 311.

The encryption unit 373 encrypts the information or request by using the predetermined encryption key.

The decryption unit 374 decrypts the information or request by using the predetermined encryption key.

The storage unit 375 stores for example a secret key K_{33,S} assigned to the vendor 33 when for example the vendor 33 contracts with the network bank 341.

The control unit 376 centrally controls the processing of the components in the vendor terminal 315.

The signature verification unit 377 verifies the signature information produced by the vendor terminal 315 by using for example a public key K_{33,P} of the vendor 33.

### [Authentication apparatus 350]

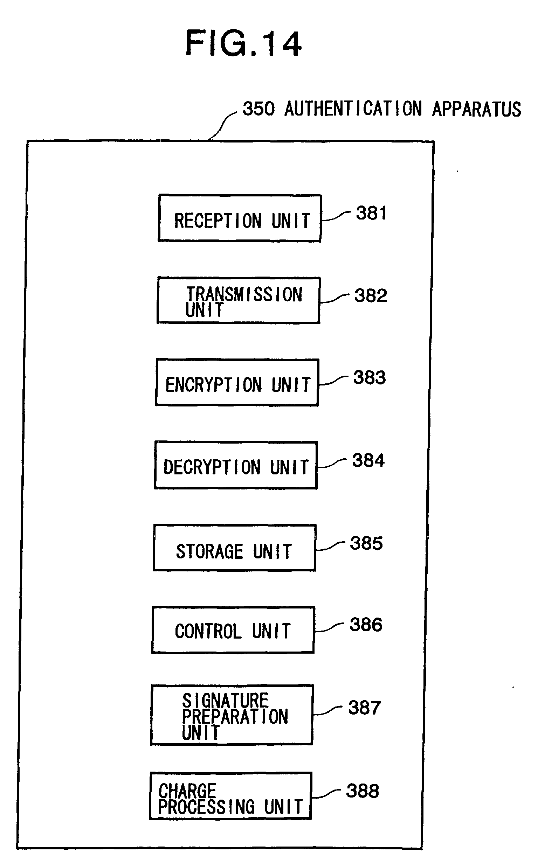

As shown in FIG. 14, the authentication apparatus 350 has a reception unit 381, transmission unit 382, encryption unit 383, decryption unit 384, storage unit 385, control unit 386, signature preparation unit 387, and charge processing unit 388.

Here, the reception unit 381 and the transmission unit 382 correspond to the transmitting and receiving means of the seventh aspect of the invention, the storage unit 385 corresponds to the storage means of the seventh aspect of the invention, and the signature preparation unit 387 corresponds to the signature producing means of the seventh aspect of the invention.

The reception unit 381 receives the information or request from the orderer terminal 311, vendor terminal 315, and authentication apparatus 351 via the network.

The transmission unit 382 transmits the information or request to the orderer terminal 311, vendor terminal 315, and authentication apparatus 351 via the network.

The encryption unit 383 encrypts the information or request by using the predetermined encryption key.

The decryption unit 384 decrypts the information or request by using the predetermined encryption key.

The storage unit 385 stores for example the public key K_{33,P} corresponding to the secret key K_{31,S} assigned to the orderer 31 when for example the orderer 31 contracts with the network bank 340.

The control unit 386 centrally controls the processing of the components in the authentication apparatus 350.

The signature preparation unit 387 produces the signature information by using a secret key K_{40,S} of the network bank 340.

The charge processing unit 388 performs the charge processing for the authentication relating to the transaction by the orderer 31 and performs processing for determining the rate of charging for authentication relating to a transaction with the authentication apparatus 351.

The detailed processing of the components of the authentication apparatus 350 will be described in the example of operation explained later.

### [Authentication apparatus 351]

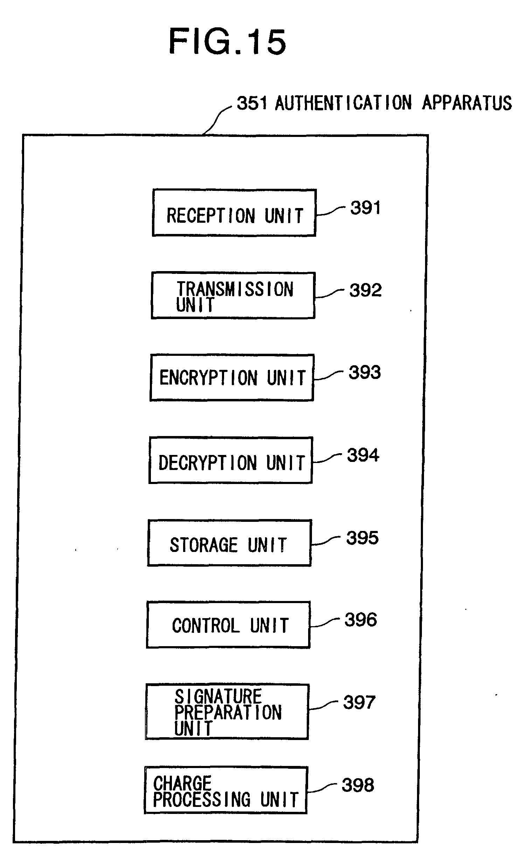

As shown in FIG. 15, the authentication apparatus 351 has a reception unit 391, transmission unit 392, encryption unit 393, decryption unit 394, storage unit 395, control unit 396, signature preparation unit 397, and charge processing unit 398.

The reception unit 391 receives the information or request from the vendor terminal 315 and the authentication apparatus 350 via the network.

The transmission unit 392 transmits the information or request to the vendor terminal 315 and the authentication apparatus 350 via the network.

The encryption unit 393 encrypts the information or request by using the predetermined encryption key.

The decryption unit 394 decrypts the information or request by using the predetermined encryption key.

The storage unit 395 stores for example the public key K_{33,P} corresponding to the secret key K_{33,S} assigned to the vendor 33 when for example the vendor 33 contracts with the network bank 341.

The control unit 396 centrally controls the processing of the components in the authentication apparatus 351.

The signature preparation unit 397 produces the signature information by using a secret key K_{41,S} of the network bank 341.

The charge processing unit 398 performs the charge processing for the authentication relating to the transaction by the vendor 33 and performs the processing for determining the rate of charging for the authentication relating to a transaction with the authentication apparatus 350.

Below, an explanation will be made of an example of the operation of the transaction authentication system 301.

As a prerequisite for starting the following example of operation, a predetermined contract is concluded between the orderer 31 and the network bank 340. The network bank 340 issues the personal key information k1 and the personal ID information ID1 to the orderer 31. The network bank 340 stores a correspondence table of the personal key information k1 and the personal ID information ID1 in the storage unit 385 of the authentication apparatus 350 shown in FIG. 14. Here, the personal key information k1 is an identifier indicating personal information, for example, the contract number of the contractor (orderer 31) contracting with the network bank 340. Further, the personal ID information ID1 is an identifier indicating information relating to charging such as the bank account number of the orderer 31.

Further, the network bank 340 stores its own secret key K_{40,S} in the storage unit 385 of the authentication apparatus 350 shown in FIG. 14 and, at the same time, transmits the public key K_{40,P} corresponding to the related secret key K_{40,S} to the orderer terminal 311. The orderer terminal 311 stores the public key K_{40,P} in the storage unit 365 shown in FIG. 12.

Further, a predetermined contract is concluded between the vendor 33 and the network bank 341. The network bank 341 issues information Z specifying the vendor 33 and the personal ID information ID2 to the vendor 33. The network bank 341 stores the correspondence table of the information Z and the personal ID information ID2 in the storage unit 395 of the authentication apparatus 351 shown in FIG. 15.

Further, the network bank 341 stores its own secret key K_{41,S} in the storage unit 395 of the authentication apparatus 351 shown in FIG. 15 and, at the same time, transmits the public key K_{41,P} corresponding to the related secret key K_{41,S} to the vendor terminal 315. The vendor terminal 315 stores the public key K_{41,P} in the storage unit 375 shown in FIG. 13.

Further, the network bank 340 and the network bank 341 conclude a contract for mutual access relating to the authentication. Note that the authentication apparatus 350 and the authentication apparatus 351 transmit the request and information between them by using public key infrastructure or common key infrastructure based on the related contract.

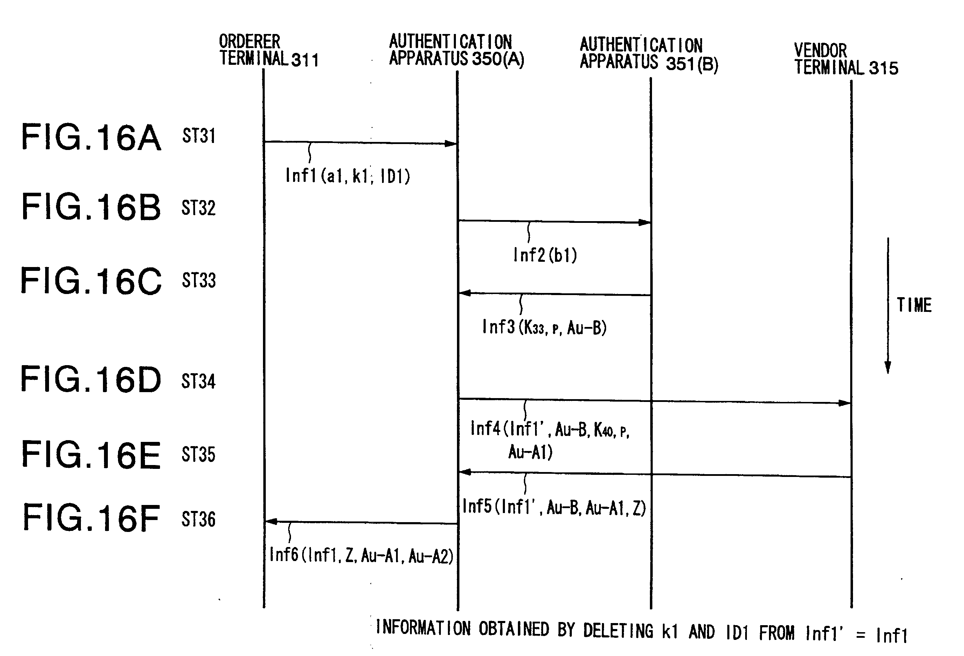

FIGS. 16A to 16F are views for explaining an example of operation of the transaction authentication system 301.

### Step ST31:

When ordering goods from for example a store on the network, that is, the vendor 33, the orderer 31 shown in FIG. 11 inputs information specifying the vendor 33 (for example the name of the vendor 33), the order information a1 indicating the name of goods to be ordered, quantity, etc., the personal key information k1 of the orderer 31, and the personal ID information ID1 of the orderer 31 to the orderer terminal 311 by operating a not illustrated operating means. Note that, the order information a1 includes information specifying the vendor 33.

Next, the encryption unit 363 of the orderer terminal 311 shown in FIG. 12 encrypts the order information a1, personal key information k1, and the personal ID information ID1 by using the predetermined encryption key read from the storage unit 365 and transmits the authentication request Inf1 (first request of the present invention) storing the related encrypted information from the transmission unit 362 via the network to the network bank 340 shown in FIG. 11.

### Step ST32:

When the reception unit 381 receives the authentication request Inf1 from the orderer terminal 311, the authentication apparatus 350 shown in FIG. 14 reads the predetermined encryption key from the storage unit 385 and decrypts the authentication request Inf1 by using the related encryption key at the decryption unit 384.

Next, the authentication apparatus 350 encrypts the request Inf2 (second request of the present invention) storing information b1 specifying the vendor 33 included in the order information a1 stored in the decrypted authentication request Inf1 at the encryption unit 383 by using the predetermined encryption key read from the storage unit 385 under the control of the control unit 386, then transmits the same from the reception unit 381 via the network to the authentication apparatus 351.

### Step ST33:

When the reception unit 391 receives the request Inf2 from the authentication apparatus 350, the control unit 396 of the authentication apparatus 351 shown in FIG. 15 decrypts the related request Inf2 at the decryption unit 394 by using the predetermined encryption key read from the storage unit 395.

Next, the signature preparation unit 397 reads the public key K_{33,P} of the vendor 33 corresponding to the information b1 specifying the vendor 33 stored in the related decrypted request Inf2 from the storage unit 385 and produces signature information Au-B (first signature information of the present invention) indicating its own authentication result by using its own secret key K_{41,S} read from the storage unit 385 for the related public key K_{33,P}.

Next, the encryption unit 393 encrypts the reply Inf3 storing the public key K_{33,P} and the signature information Au-B of the vendor 33 by using the predetermined encryption key read from the storage unit 395, then transmits the same from the transmission unit 392 via the network to the authentication apparatus 350.

### Step ST34:

When the reception unit 381 receives the reply Inf3 from the authentication apparatus 351, the decryption unit 384 of the authentication apparatus 350 shown in FIG. 14 decrypts the reply Inf3 by using the predetermined encryption key read from the storage unit 385.

Next, the signature preparation unit 387 produces signature information Au-Al by using information Inf1' obtained by deleting the personal key information k1 and the personal ID information ID1 from the request Inf1 decrypted at step ST32, the signature information Au-B stored in the decrypted reply Inf3, and its own secret key K_{40,S} read from the storage unit 385 for its own public key K_{40,P} read from the storage unit 385.

Next, the control unit 386 generates the request Inf4 (third request of the present invention) storing the information Inf1', signature information Au-B, its own public key K_{40,P}, and the produced signature information Au-A1.

Next, the encryption unit 383 encrypts the generated request Inf4 by using the public key K_{33,P} of the vendor 33 received from the authentication apparatus 351 at step ST34, then transmits the same from the transmission unit 382 to the vendor terminal 315 via the network.

### Step ST35:

The decryption unit 374 of the vendor terminal 315 decrypts the request Inf4 by using its own secret key K_{33,S} read from the storage unit 375 when the reception unit 371 receives the request Inf4 from the authentication apparatus 350.

Next, the signature verification unit 377 of the vendor terminal 315 verifies the signature information Au-B stored in the decrypted request Inf4 by using the public key K_{41,P} of the authentication apparatus 351 read from the storage unit 375. Further, the signature information verification unit verifies the signature information Au-A1 stored in the request Inf4 by using the public key K_{40,P} of the authentication apparatus 350 stored in the decrypted request Inf4.

The control unit 376 of the vendor terminal 315 generates a reply Inf5 (predetermined reply of the present invention) storing the information Inf1' stored in the request Inf4, signature information Au-B and Au-A1, and information Z specifying the vendor 33 when the legitimacy of the signature information Au-B and Au-Al is authenticated as a result of the verification by the signature verification unit.

Next, the transmission unit 372 of the vendor terminal 315 decrypts the generated reply Inf5 by using the public key K_{40,P} of the authentication apparatus 350 stored in the decrypted request Inf4, then transmits the same from the transmission unit 372 via the network to the authentication apparatus 350.

When the legitimacy of the signature information Au-B and Au-Al is authenticated by the vendor terminal 315, for example the vendor 33 sends out the goods or the like ordered by the orderer 31 to the orderer 31 or provides the service ordered by the orderer 31 to the orderer 31 based on the order information a1 in the information Inf1' stored in the request Inf4.

### Step ST36:

When the reception unit 381 receives the reply Inf5 from the vendor terminal 315, the decryption unit 384 of the authentication apparatus 350 decrypts Inf5 by using the its own secret key K_{40,S} read from the storage unit 385, produces predetermined transaction log information by using the order information a1 stored in the request Inf1 and the information Z specifying the vendor 33 stored in the related decrypted Inf5, and stores this in the storage unit 385. The related log information is used when the network bank 340 accounts the orderer 31.

Further, the signature preparation unit 387 of the authentication apparatus 350 produces signature information Au-A2 (second signature information of the present invention) indicating the its own authentication result using its own secret key K_{40,S} for the request Infl received at step ST32, the information Z included in the reply Inf5, and the signature information Au-A1 produced at step ST34.

Next, the control unit 386 of the authentication apparatus 350 produces a reply Inf6 storing the request Inf1, information Z, signature information Au-Al, and signature information Au-A2.

Next, the encryption unit 383 of the authentication apparatus 350 encrypts the produced reply Inf6 by using the predetermined encryption key read from the authentication apparatus 350, then transmits the same from the transmission unit 382 via the network to the orderer terminal 311.

At the orderer terminal 311, the received reply Inf6 is decrypted at the decryption unit 364 by using the predetermined encryption key read from the storage unit 365 shown in FIG. 12.

Next, the signature verification unit 366 of the orderer terminal 311 confirms that the related transaction with the vendor terminal 315 was authenticated for legitimacy by verifying the signature information Au-A1 and Au-A2 stored in the related decrypted reply Inf6 by using the public key K_{40,P} of the network bank 340 read from the storage unit 365.

As explained above, according to the transaction authentication system 301, the personal key information k1 and the personal ID information ID1 of the orderer 31 are not transmitted from the authentication apparatus 350 to the authentication apparatus 351, therefore the transfer of personal information of the orderer 31 to the other network bank 341 with which the orderer 31 does not contract can be avoided.

Further, according to the transaction authentication system 301, the authentication apparatus 350 directly communicates with the vendor terminal 315 of the vendor 33 by using the public key K_{33,P} and the signature information Au-B of the vendor 33 received from the authentication apparatus 351, whereby a log of the related transaction can be stored in the authentication apparatus 350.

Further, according to the transaction authentication system 301, by verifying the signature information Au-B of the authentication apparatus 350 contracted by itself, the vendor 33 can confirm the legitimacy of the related transaction.

Further, according to the transaction authentication system 301, by just transmitting the requests Inf2 and Inf3 shown in FIGS. 16A to 16F between the authentication apparatuses 350 and 351, the transaction between the orderer 31 and the vendor 33 can be authenticated, and the amount of communication between the authentication apparatuses 350 and 351 can be reduced.

Further, according to the transaction authentication system 301, by communicating between the charge processing unit 388 of the authentication apparatus 350 shown in FIG. 14 and the charge processing unit 398 of the authentication apparatus 351 shown in FIG. 15, the rate of the charging for the authentication relating to a transaction between the orderer 31 and the vendor 33 can be flexibly determined.

As explained above, according to the transaction authentication system 301, transactions among a plurality of transactors contracting with different authentication managers can be authenticated with a high reliability and efficiently. As a result, it becomes possible to increase the number of the contractors (transactors) contracting with the related authentication managers, lower the cost such as a membership fees charged to each contractor, and further promote electronic commercial transactions.

The present invention is not limited to the above embodiment.

For example, in the above embodiment, the case where the network banks 340 and 341 performed the work of authenticating transactions by using the authentication apparatuses 350 and 351 was illustrated, but it is also possible to perform the work of authenticating transactions by using the authentication apparatuses 350 and 351 by managers other than the network banks 340 and 341.

Further, in the above embodiment, the case where the authentication processing was carried out in cooperation between the authentication apparatus 350 of the network bank 340 with which the orderer 31 contracted and the authentication apparatus 351 of the network bank 341 with which the vendor 33 contracted was illustrated, but the present invention can be applied even in the case where the authentication processing is carried out in cooperation among three or more authentication apparatuses where three or more transactors contract with authentication managers different from each other.

Further, in the above embodiment, the case where the authentication request Inf1 including the encrypted order information a1, personal key information k1, and personal ID information ID1 was transmitted from the orderer terminal 311 to the authentication apparatus 350 as in step ST31 shown in FIG. 16A was illustrated, but it is also possible to transmit the authentication request Infl including the order information a1 and personal key information k1 from the orderer terminal 311 to the authentication apparatus 350. When doing this, the information relating to the charging, that is, the personal ID information ID1, is not transmitted via the network, therefore the illegitimate acquisition and misuse of the personal ID information ID1 on the network can be avoided.

Further, in the present invention, it is also possible to transmit the signature information Au-A2 (second signature information of the present invention) from the authentication apparatus 350 to the vendor terminal 315.

### Fourth Embodiment

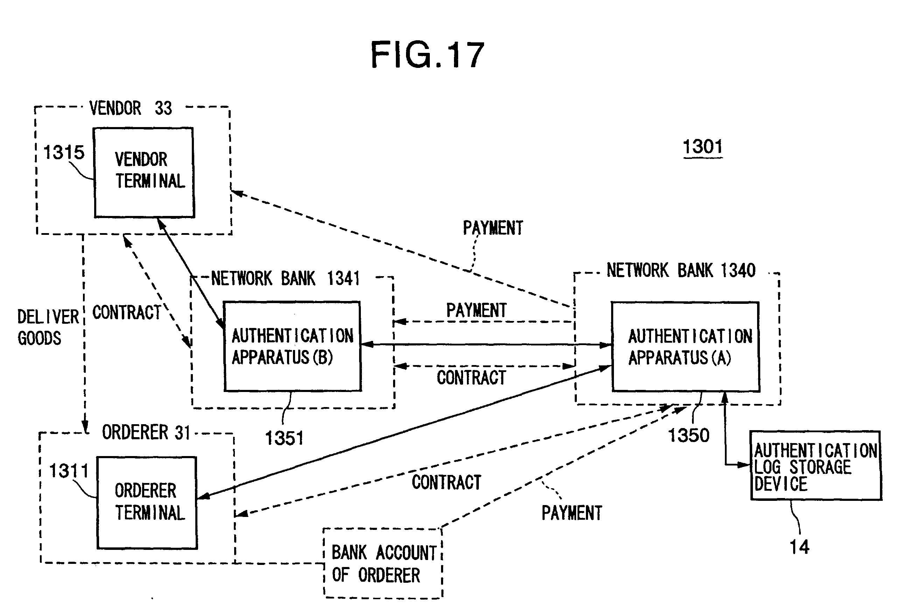

FIG. 17 is a view of the overall configuration of a transaction authentication system 1301 of the present embodiment.

As shown in FIG. 17, the transaction authentication system 1301, for example, comprises an orderer terminal 1311 of the orderer 31, a vendor terminal 1315 of the vendor 33, an authentication apparatus 1350 of a network bank 1340, an authentication apparatus 1351 of a network bank 1341, and the authentication log storage device 14 storing the authentication log connected via a network (communication network) such as the Internet and authenticates the legitimacy of the transactions between the orderer 31 and the vendor 33.

In the present embodiment, for example, the orderer 31 and the network bank 1340 conclude a contract relating to authentication, while the vendor 33 and the network bank 1341 conclude a contract relating to authentication.

Further, the network bank 1340 and the network bank 1341 conclude a contract of mutual access for mutual linkage relating to authentication.

The present embodiment is an embodiment corresponding to the 10th to 12th aspects of the inventions.

In the present embodiment, the orderer 31 corresponds to the first transactor of the present invention, while the vendor 33 corresponds to the second transactor of the present invention.

Further, the authentication apparatus 1350 corresponds to the authentication apparatus of the 11th aspect of the invention and the first authentication apparatuses of the 10th aspect of the invention and the 12th aspect of the invention.

Further, the authentication apparatus 1351 corresponds to the other authentication apparatus of the 11th aspect of the invention and the second authentication apparatuses of the 10th aspect of the invention and the 12th aspect of the invention.

Below, an explanation will be made of the apparatuses comprising the transaction authentication system 1301.

### [Orderer terminal 1311]

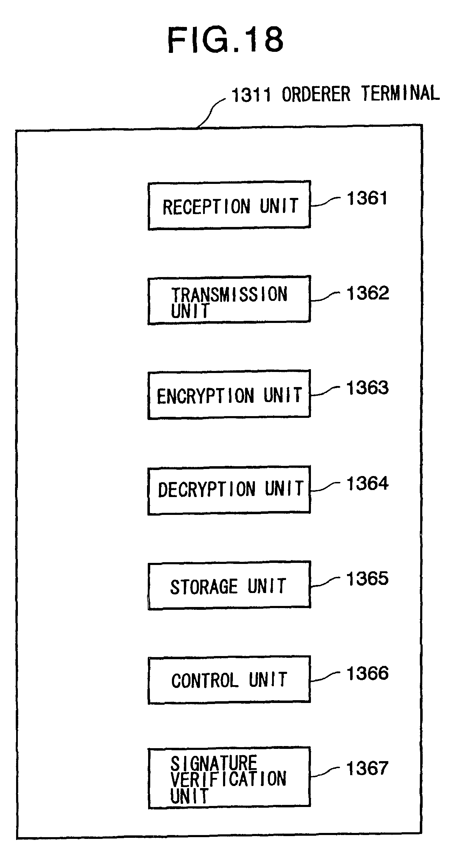

As shown in FIG. 18, the orderer terminal 1311 is for example hardware such as a personal computer, set top box, or game machine provided in the home of the orderer 31 and has a reception unit 1361, transmission unit 1362, encryption unit 1363, decryption unit 1364, storage unit 1365, control unit 1366, and signature verification unit 1367.

Note that the orderer terminal 1311 may have a bio-authentication unit for authenticating the orderer 31 as a legitimate user by comparing information obtained from the physical characteristics of the orderer 31 such as a fingerprint with information indicating the physical characteristics stored in the storage unit 1365 in advance when used by for example the orderer 31.

The reception unit 1361 receives the information or request from the authentication apparatus 1350 via the network.

The transmission unit 1362 transmits the information or request to the authentication apparatus 1350 via the network.

Further, when accessing the descriptive information of the goods etc. provided by the vendor 33, the reception unit 1361 and the transmission unit 1362 transmit and receive the information or request with the related server.

The encryption unit 1363 encrypts the information or request by using the predetermined encryption key.

The decryption unit 1364 decrypts the information or request by using the predetermined encryption key.

The storage unit 1365 stores for example a secret key K_{31,S} assigned to the orderer 31 when for example the orderer 31 contracts with the network bank 1340.

The control unit 1366 centrally controls the processing of the components in the orderer terminal 1311.

The signature verification unit 1367 verifies the signature information produced by for example the authentication apparatus 1350 by using a public key K_{40,P} of the network bank 1340.

### [Vendor terminal 1315]

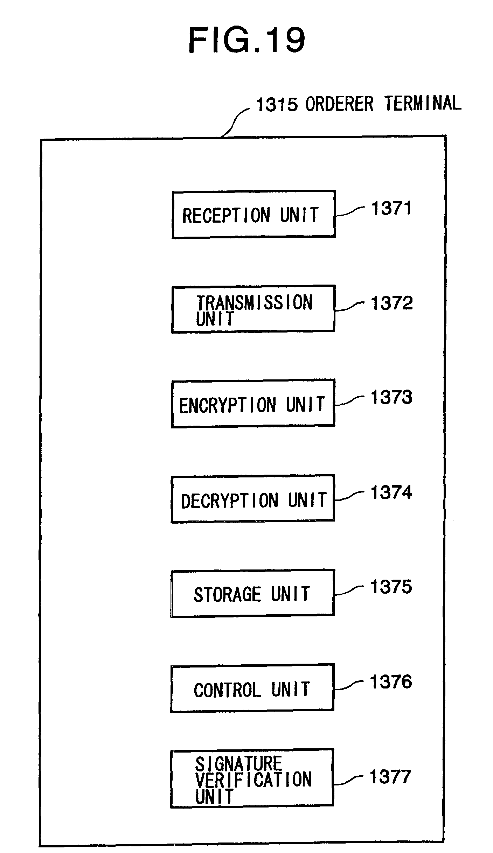

As shown in FIG. 19, the vendor terminal 1315 is a server used by a vendor 33 opening up shop in a cybermall or the like and has a reception unit 1371, transmission unit 1372, encryption unit 1373, decryption unit 1374, storage unit 1375, control unit 1376, and signature verification unit 1377.

The reception unit 1371 receives the information or request from the authentication apparatus 1351 via the network.

The transmission unit 1372 transmits the information or request to the authentication apparatus 1351 via the network.

Further, the reception unit 1371 and the transmission unit 1372 transmit for example descriptive information of goods provided by the vendor 33 read from the storage unit 1375 to the orderer terminal 1311 via the network in response to access from the orderer terminal 1311.

The encryption unit 1373 encrypts the information or request by using the predetermined encryption key.

The decryption unit 1374 decrypts the information or request by using the predetermined encryption key.

The storage unit 1375 stores for example a secret key K_{33,S} assigned to the vendor 33 when for example the vendor 33 contracts with the network bank 1341.

The control unit 1376 centrally controls the processing of the components in the vendor terminal 1315.

The signature verification unit 1377 verifies the signature information produced by the vendor terminal 1315 by using for example a public key K_{33,P} of the vendor 33.

### [Authentication apparatus 1350]

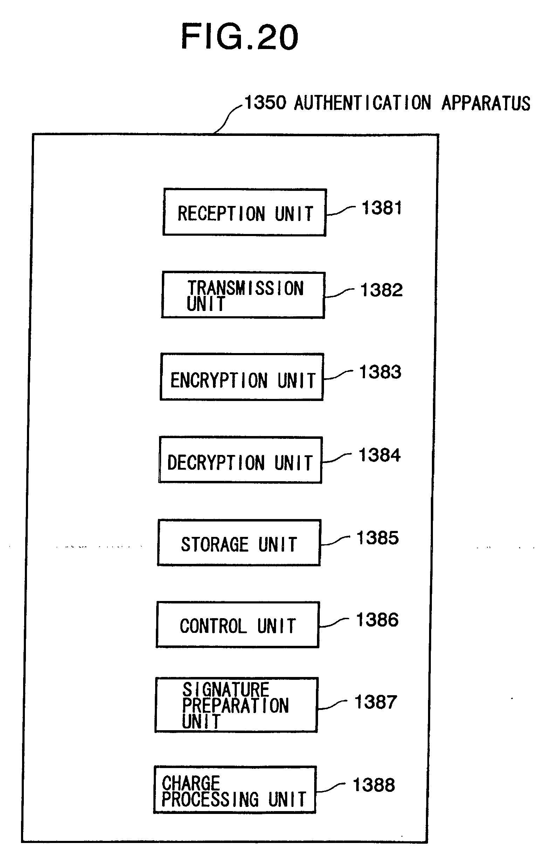

As shown in FIG. 20, the authentication apparatus 1350 has a reception unit 1381, transmission unit 1382, encryption unit 1383, decryption unit 1384, storage unit 1385, control unit 1386, signature preparation unit 1387, and charge processing unit 1388.

Here, the reception unit 1381 and the transmission unit 1382 correspond to the transmitting and receiving means of the 11th aspect of the invention, the storage unit 1385 corresponds to the storage means of the 11th aspect of the invention, and the signature preparation unit 1387 corresponds to the signature producing means of the 11th aspect of the invention.

The reception unit 1381 receives the information or request from the orderer terminal 311, vendor terminal 1315, and authentication apparatus 1351 via the network.

The transmission unit 1382 transmits the information or request to the orderer terminal 1311 and the authentication apparatus 1351 via the network.

The encryption unit 1383 encrypts the information or request by using the predetermined encryption key.

The decryption unit 1384 decrypts the information or request by using the predetermined encryption key.

The storage unit 1385 stores for example the public key K_{33,P} corresponding to the secret key K_{31,S} assigned to the orderer 31 when for example the orderer 31 contracts with the network bank 1340. Further, the storage unit 1385 stores the bank account and the place of contact about transfers of the vendor 33 received from the authentication apparatus 1351.

The control unit 1386 centrally controls the processing of the components in the authentication apparatus 1350.

The signature preparation unit 1387 produces the signature information by using a secret key K_{40,S} of the network bank 1340.

The charge processing unit 1388 performs the charge processing for authentication relating to a transaction by the orderer 31 and performs a processing for determining the rate of charging for authentication relating to a transaction with the authentication apparatus 1351.

Further, the charge processing unit 1388 performs the processing for paying part of the payment received from the orderer 31 to the vendor 33 and having the network bank 1340 receive the remainder as a fee.

Detailed processing of the components of the authentication apparatus 1350 will be described in the example of operation explained later.

### [Authentication apparatus 1351]

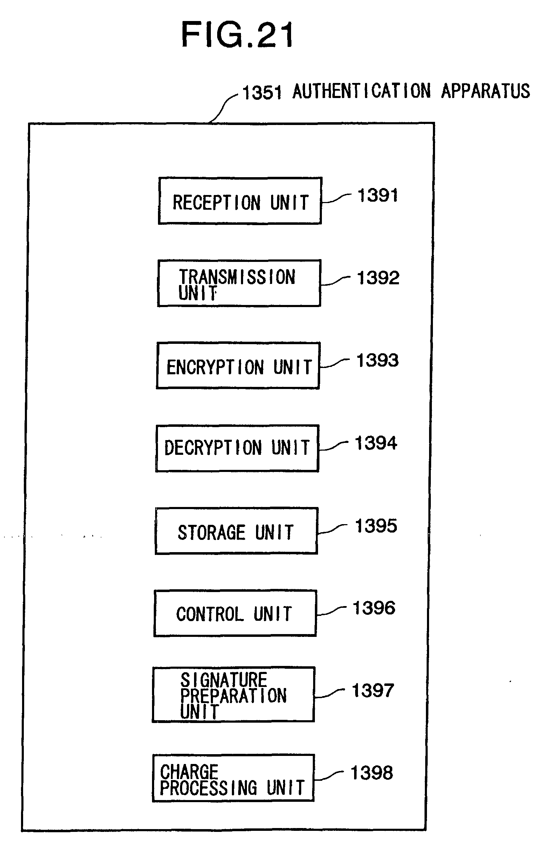

As shown in FIG. 21, the authentication apparatus 1351 has a reception unit 1391, transmission unit 1392, encryption unit 1393, decryption unit 1394, storage unit 1395, control unit 1396, signature preparation unit 1397, and charge processing unit 1398.

The reception unit 1391 receives the information or request from the vendor terminal 1315 and the authentication apparatus 1350 via the network.

The transmission unit 1392 transmits the information or request to the vendor terminal 1315 and the authentication apparatus 1350 via the network.

The encryption unit 1393 encrypts the information or request by using the predetermined encryption key.

The decryption unit 1394 decrypts the information or request by using the predetermined encryption key.

The storage unit 1395 stores for example the public key K_{33,P} corresponding to the secret key K_{33,S} assigned to the vendor 33 when for example the vendor 33 contracts with the network bank 1341.

The control unit 1396 centrally controls the processing of the components in the authentication apparatus 1351.

The signature preparation unit 1397 produces the signature information by using a secret key K_{41,S} of the network bank 1341.

The charge processing unit 1398 performs the charge processing for authentication relating to a transaction by the vendor 33 and performs processing for determining the rate of charging for authentication relating to a transaction with the authentication apparatus 1350.

Below, an explanation will be made of an example of operation of the transaction authentication system 1301.

As a prerequisite for starting the following example of operation, the orderer 31 and the network bank 1340 conclude a predetermined contract. The network bank 1340 issues the personal key information k1 and the personal ID information ID1 to the orderer 31. The network bank 1340 stores a correspondence table of the personal key information k1 and the personal ID information ID1 in the storage unit 1385 of the authentication apparatus 1350 shown in FIG. 20. Here, the personal key information k1 is an identifier indicating personal information for example a contract number of the contractor (orderer 31) contracting with the network bank 1340. Further, the personal ID information ID1 is an identifier indicating the information relating to the charge such as the bank account number of the orderer 31.

Further, the network bank 1340 stores its own secret key K_{40,S} in the storage unit 1385 of the authentication apparatus 1350 shown in FIG. 20 and, at the same time, transmits the public key K_{40,P} corresponding to the related secret key K_{40,S} to the orderer terminal 1311. The orderer terminal 1311 stores the public key K_{40,P} in the storage unit 1365 shown in FIG. 18.

Further, the vendor 33 and the network bank 1341 conclude a predetermined contract. The network bank 1341 issues personal key information Z and personal ID information ID2 to the vendor 33. The network bank 1341 stores the correspondence table of the personal key information Z and the personal ID information ID2 in the storage unit 1395 of the authentication apparatus 1351 shown in FIG. 21.

Further, the network bank 1341 stores its own secret key K_{41,S} in the storage unit 1395 of the authentication apparatus 1351 shown in FIG. 21 and, at the same time, transmits the public key K_{41,P} corresponding to the related secret key K_{41,S} to the vendor terminal 1315. The vendor terminal 1315 stores the public key K_{41,P} in the storage unit 1375 shown in FIG. 19.

Further, the network bank 1340 and the network bank 1341 conclude a contract for mutual access relating to authentication. Note that, the request and information are transmitted between the authentication apparatus 1350 and the authentication apparatus 1351 by using the public key infrastructure or common key infrastructure based on the related contract.

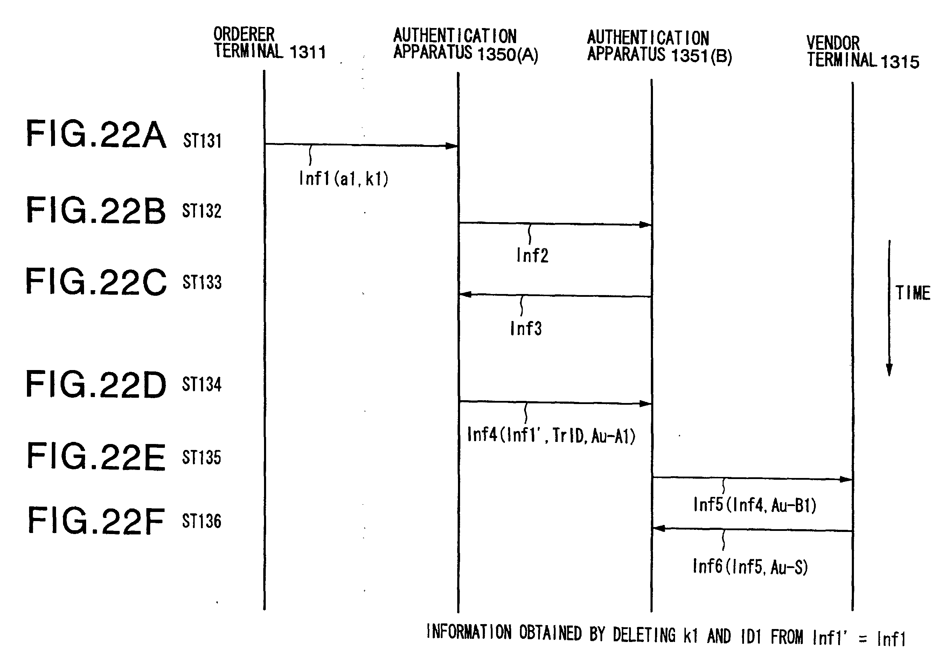

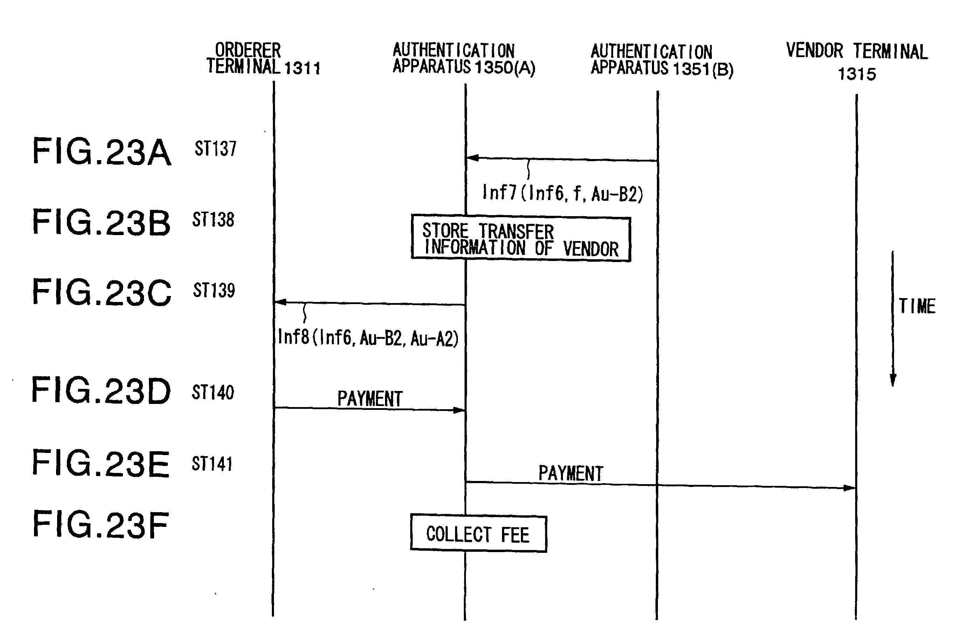

FIGS. 22A to 22F and FIGS. 23A to 23F are views for explaining an example of operation of the transaction authentication system 1301.

### Step ST131:

When ordering goods to for example a store on a network, that is, the vendor 33, the orderer 31 shown in FIG. 17 inputs information specifying the vendor 33 (for example the name of the vendor 33), the order information a1 indicating the name of goods to be ordered, quantity, etc., and the personal key information k1 of the orderer 31 to the orderer terminal 1311 by operating a not illustrated operating means. Note that, the order information a1 includes information specifying the vendor 33, for example, the name of the vendor 33 (name of store).

Next, the encryption unit 1363 of the orderer terminal 1311 shown in FIG. 18 encrypts the order information a1 and the personal key information k1 by using the predetermined encryption key read from the storage unit 1365 and transmits the authentication request Inf1 (first request of the present invention) storing the related encrypted information from the transmission unit 1362 via the network to the authentication apparatus 1350 of the network bank 1340 shown in FIG. 17.

### Step ST132:

When the reception unit 1381 receives the authentication request Inf1 from the orderer terminal 1311, the authentication apparatus 1350 shown in FIG. 20 reads the predetermined encryption key from the storage unit 1385 and decrypts the authentication request Inf1 by using the related encryption key at the decryption unit 1384.

Next, the authentication apparatus 1350 generates the request Inf2 including information specifying the vendor 33 stored in the decrypted authentication request Inf1 under the control of the control unit 1386 and transmits this from the transmission unit 1382 via the network to the authentication apparatus 1351.

### Step ST133:

The authentication apparatus 1351 decides whether or not a contract is concluded between the vendor 33 specified by the information included in the related request Inf2 and the network bank 1341 in response to the request Inf2 received from the authentication apparatus 1350 and transmits the reply Inf3 (answer of the present invention) including the decision result from the transmission unit 1392 via the network to the authentication apparatus 1350.

### Step ST134:

The authentication apparatus 1350 performs the following processing when the reply Inf3 received from the authentication apparatus 1351 indicates the legitimacy of the vendor 33.

The authentication apparatus 1350 generates the request Inf4 (second request of the present invention) storing the information Inf1' obtained by deleting the personal key k1 from the information included in the request Inf1 received at step ST131, a transaction TrID generated for identifying the related transaction, and the signature information Au-Al generated by using the secret key K_{40,S} of the network bank 1340, encrypts this by the public key K_{41,P} of the network bank 1341, and transmits this from the transmission unit 1382 via the network to the authentication apparatus 1351.

### Step ST135:

The authentication apparatus 1351 decrypts the request Inf4 received from the authentication apparatus 1350 by using the secret key K_{41,S} of the network bank 1341, adds signature information Au-B1 generated by using the secret key K_{41,S} of the network bank 1341 to this, and generates the request Inf5 (third request of the present invention). Then, it encrypts the request Inf5 by using the public key K_{33,P} of the vendor 33, then transmits the same from the transmission unit 1392 via the network to the vendor terminal 1351.

### Step ST136:

When decrypting the request Inf5 received from the authentication apparatus 1351 by using the secret key K_{33,S} of the vendor 33 and confirming the acceptance, the vendor terminal 1351 adds signature information Au-S produced by using the secret key K_{33,S} of the vendor 33 to this and thereby generates the reply Inf6 (first reply of the present invention). Then, it encrypts the reply Inf6 by using the public key K_{41,P} of the network bank 1341, then transmits this from the transmission unit 1372 via the network to the authentication apparatus 1351.

### Step ST137:

The authentication apparatus 1351 decrypts the reply Inf6 received from the vendor terminal 1351 by using the secret key K_{41,S} of the network bank 1341, then adds information f indicating the bank account and place of contact for transfers of the vendor 33 and signature information Au-B2 generated by using the secret key K_{41,S} of the network bank 1341 to this to thereby generate a reply Inf7 (second reply of the present invention). Then, it encrypts this by using the public key K_{41,P} of the network bank 1341 and transmits the same from the transmission unit 1392 via the network to the authentication apparatus 1350.

### Step ST138:

The authentication apparatus 1350 decrypts a reply Inf8 received from the authentication apparatus 1351 by using the secret key K_{40,S} of the network bank 1340, then extracts the bank account and place of contact for transfers of the vendor 33 from the reply Inf8 and stores this in the storage unit (database) 1385.

### Step ST139:

The authentication apparatus 1350 generates the reply Inf8 including the information obtained by deleting the bank account and place of contact for transfers of the vendor 33 from the Inf7 included in the reply Inf8 and including the signature information Au-A2 generated by using the secret key K_{40,S} of the network bank 1340. Then, it encrypts this by using a public key K_{31,P} of the orderer 31 and transmits the same from the transmission unit 1382 via the network to the orderer terminal 1311.

### Step ST140:

The charge processing unit 1388 of the network bank 1340 accounts the sum to be paid to the vendor 33 and the fee for the related transaction from the bank account of the orderer 31 registered in advance and transfers this to the account of the network bank 1340.

### Step ST141:

The charge processing unit 1388 of the network bank 1340 transfers the sum to be paid to the vendor 33 in the sum accounted at step ST140 to the bank account of the vendor 33 obtained at step ST138 and, at the same time, notifies this to the vendor 33.

### Step ST142:

The charge processing unit 1388 of the network bank 1340 transfers part of the fee based on the contract in the sum accounted at step ST140 to the account of the network bank 1341.

As explained above, according to the transaction authentication system 1301, the personal key information k1 of the orderer 31 is not transmitted from the authentication apparatus 1350 to the authentication apparatus 1351, so the leakage of the personal information of the orderer 31 to the other network bank 1341 with which the orderer 31 does not contract can be avoided.

Further, according to the transaction authentication system 1301, the vendor 33 can confirm the legitimacy of the related transaction by verifying the signature information Au-B1 of the authentication apparatus 1350 with which it contracts.

As explained above, according to the transaction authentication system 1301, transactions among a plurality of transactors contracting with different authentication managers can be authenticated with a high reliability and efficiently. As a result, it becomes possible to increase the number of the contractors (transactors) contracting with the related authentication managers, lower the cost such as a membership fee charged to each contractor, and further promote electronic commercial transactions.

The present invention is not limited to the above embodiment.

For example, in the above embodiment, the case where the network banks 1340 and 1341 performed the work for authenticating transactions by using the authentication apparatuses 1350 and 1351 was illustrated, but it is also possible for managers other than the network banks 1340 and 1341 to perform the work of authenticating transactions by using the authentication apparatuses 1350 and 1351.

Further, in the above embodiment, the case where the authentication processing was carried out in cooperation between the authentication apparatus 1350 of the network bank 1340 with which the orderer 31 contracted and the authentication apparatus 1351 of the network bank 1341 with which the vendor 33 contracted was illustrated, but the present invention can be applied even when the authentication processing is carried out in cooperation among three or more authentication apparatuses where three or more transactors contract with authentication managers different from each other.

### Fifth Embodiment

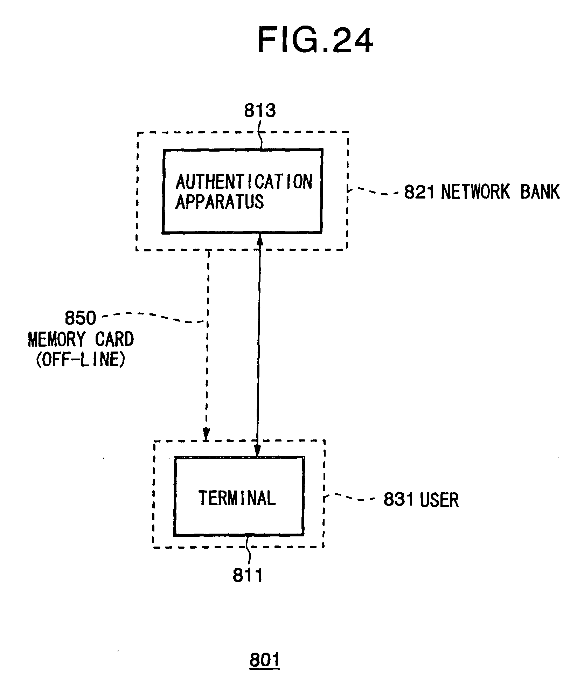

FIG. 24 is a view of the overall configuration of an authentication system 801 of the present embodiment.

As shown in FIG. 24, in the authentication system 802, for example, a terminal 811 used by a user 831 and an authentication apparatus 813 used by a network bank 821 are connected via a network (communication network) such as the Internet. The authentication apparatus 813 provides the authentication information of the user 831.

Note that, the number of the terminals 811 connected to the related network may be any number.

Further, in the present embodiment, the case where the network bank 821 uses the authentication apparatus 813 is illustrated, but the authentication apparatus 813 may be used by an authentication manager other than the network bank 821 as well.

The present embodiment is an embodiment corresponding to the 13th to 15th aspects of the invention, the terminal 811 corresponds to the terminal of the present invention, and the authentication apparatus 813 corresponds to the authentication apparatus of the present invention.

Below, an explanation will be made of the apparatuses comprising the authentication system 801.

### [Terminal 811]

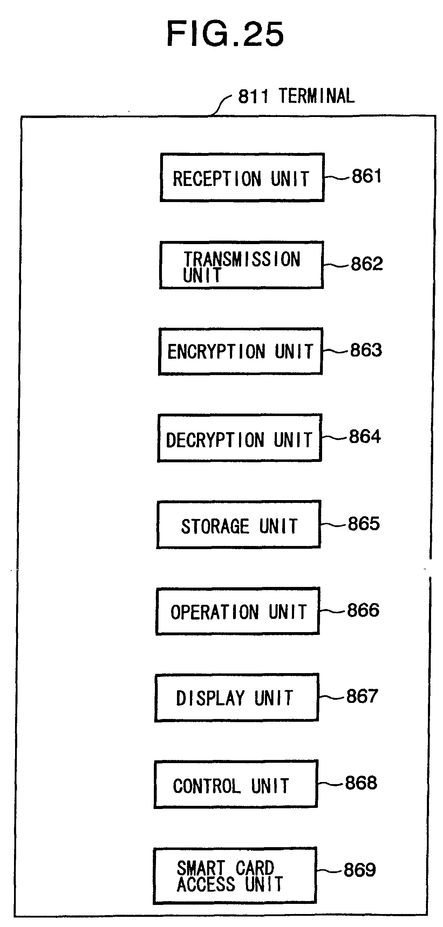

FIG. 25 is a functional block diagram of the terminal 811.

As shown in FIG. 25, the terminal 811 is hardware such as a personal computer, a set top box, or a game machine used by the user 831 and has a reception unit 861, transmission unit 862, encryption unit 863, decryption unit 864, storage unit 865, operation unit 866, display unit 867, control unit 868, and smart card access unit 869.

The reception unit 861 receives the information and request from the authentication apparatus 813 via the network.

The transmission unit 862 transmits the information and request to the authentication apparatus 813 via the network.

Further, the reception unit 861 and the transmission unit 862 transmit and receive the information and request with other servers or terminals via the network.

The encryption unit 863 encrypts the information or request by using the predetermined encryption key.

The decryption unit 864 decrypts the information or request by using the predetermined encryption key.

The storage unit 865 stores authentication information SIGb etc. received from the authentication apparatus 813. Here, the authentication information SIGb is information obtained by dividing authentication information SIG of the user 831 generated by the authentication apparatus 813.

The operation unit 866 is a keyboard, mouse, or the like and outputs an operation signal in accordance with the operation of the user to the control unit 868 or the smart card access unit 869.

The display unit 867 displays an image in accordance with the display signal from the control unit 868.

The control unit 868 centrally controls the processing of the components in the terminal 811.

A detailed explanation will be made next of the processing of the control unit 868 in the example of operation explained later.

The smart card access unit 869 accesses for example the IC memory of the smart card 850 loaded in the terminal 811 by the user.

### [Authentication apparatus 813]

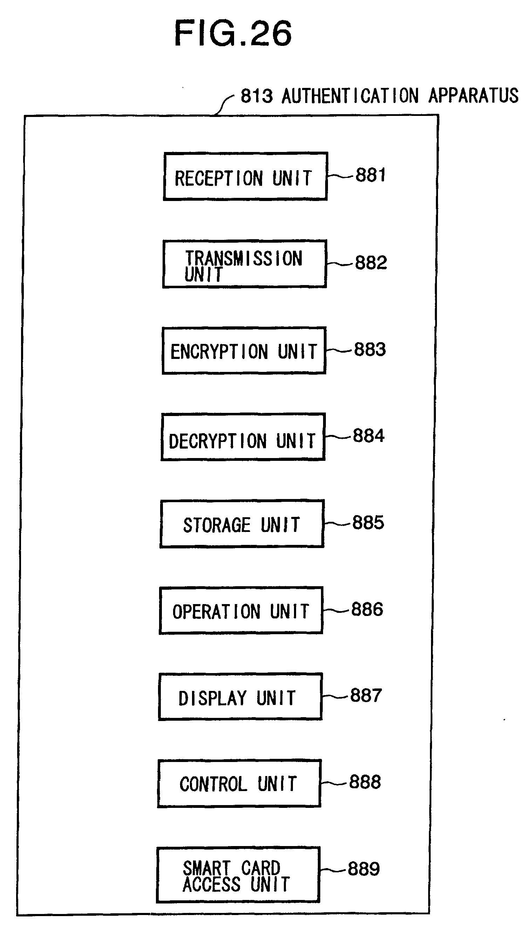

FIG. 26 is a functional block diagram of the authentication apparatus 813.

As shown in FIG. 26, the authentication apparatus 813 has for example a reception unit 881, transmission unit 882, encryption unit 883, decryption unit 884, storage unit 885, operation unit 886, display unit 887, control unit 888, and smart card access unit 889.

Here, the reception unit 881 corresponds to the receiving means of the present invention, the transmission unit 882 corresponds to the transmitting means of the present invention, the storage unit 885 corresponds to the storage means of the present invention, the control unit 888 corresponds to the controlling means of the present invention, and the smart card access unit 889 corresponds to the writing means of the present invention.

The reception unit 881 receives the information or request from the terminal 811 via the network.

The transmission unit 882 transmits the information or request to the terminal 811 via the network.

The encryption unit 883 encrypts the information or request by using the predetermined encryption key.

The decryption unit 884 decrypts the information or request by using the predetermined encryption key.

The storage unit 885 stores the personal information and personal ID information of the registered (contracted) user, authentication information SIG, SIGa, and SIGb generated as explained later, and the apparatus ID information as the destination of download of the authentication information SIGa etc.

Here, the authentication information SIG corresponds to the authentication information of the present invention, the authentication information SIGa corresponds to the first authentication information of the present invention, and the authentication information SIGb corresponds to the second authentication information of the present invention.

The operation unit 886 is a keyboard, mouse, or the like and outputs an operation signal in accordance with the operation of the user to the control unit 888.

The display unit 887 displays an image in response to the display signal from the control unit 888.

The control unit 888 centrally controls the processing of the components in the authentication apparatus 813.

A detailed explanation will be made next of the processing of the control unit 888 in the example of operation explained later.

The smart card access unit 889 writes the authentication information SIGb corresponding to the related user into the IC memory of the smart card 850 issued to the registered user.

Below, an explanation will be made of an example of operation of the authentication system 801.

### [First example of operation]

Here, an explanation will be given of an example of the operation for producing the smart card 850 with the authentication information SIGb obtained by dividing the authentication information SIG by the network bank 821 stored therein and sending this to the user 831.

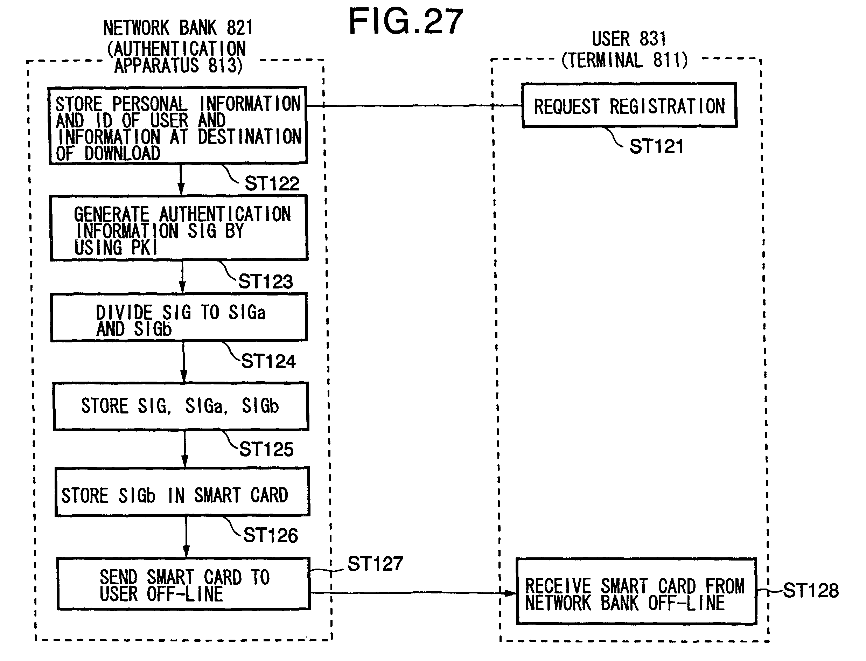

FIG. 27 is a flowchart for explaining the example of operation.

### Step ST121:

The user 831 operates the operation unit 866 of the terminal 811 shown in FIG. 25 to input its own personal information and apparatus ID information of a one or more terminals (terminal 811 in the present embodiment) designated as the destination of download (destination of transmission) of the authentication information SIGa together with the registration request. By this, the registration request including the related input information is transmitted from the transmission unit 862 of the terminal 811 to the authentication apparatus 813 via the network.

### Step ST122:

The authentication apparatus 813 issues the personal ID information inherent in the user 831 in response to the registration request received by the reception unit 881 from the terminal 811 at step ST1 and writes the related personal ID information and the personal information and the information of the destination of download included in the registration request into the storage unit 885 shown in FIG. 26.

### Step ST123:

The authentication apparatus 813 generates the authentication information SIG of the user 831 by using the public key infrastructure (PKI) in response to the registration request.

The related authentication information SIG is information used for the personal authentication of the user 831.

### Step ST124:

The authentication apparatus 813 divides the authentication information SIG generated at step ST3 to the authentication information SIGa and the authentication information SIGb.

### Step ST125:

The authentication apparatus 813 writes the authentication information SIG, SIGa, and SIGb into'the storage unit 885 linked with the personal ID information of the terminal 811.

### Step ST126:

The smart card access unit 889 of the authentication apparatus 813 writes the personal ID information and authentication information SIGb of the user 831 into the IC memory of the smart card 850 issued to the user 831.

At this time, the authentication information SIGb may be encrypted at the encryption unit 883 shown in FIG. 26, then written into the IC memory of the smart card 850.

### Step ST127:

The manager of the network bank 821 sends the smart card 850 after being processed at step ST6 to the user 831 off-line, for example, by mail.

The user 831 receives the smart card 850 sent by the network bank 821.

### [Second example of operation]

In this example of operation, an explanation will be made of an example of operation where the user 831 acquires authentication information at the terminal 811 by using the smart card 850.

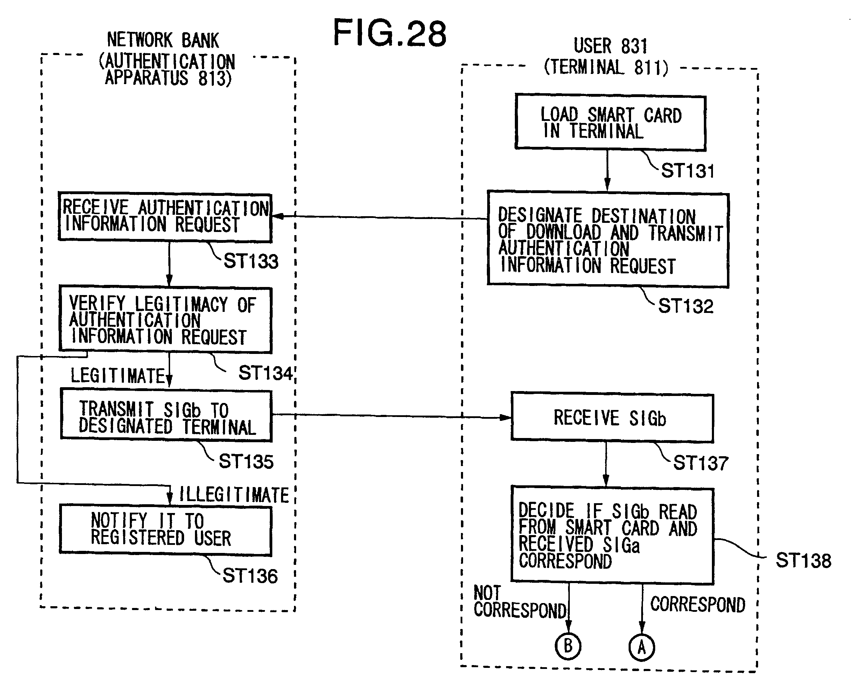

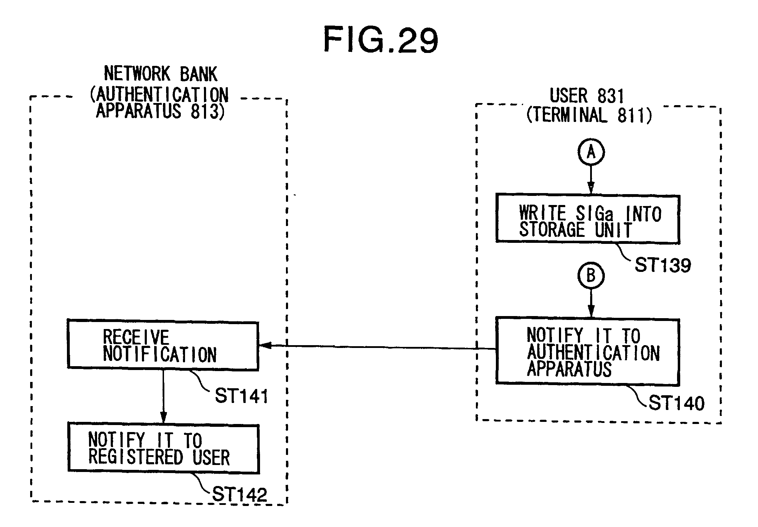

FIG. 28 and FIG. 29 are flowcharts for explaining the related example of operation.

### Step ST131:

The user 831 loads the smart card 850 in the smart card access unit 869 of the terminal 811.

### Step ST132:

The user 831 operates the operation unit 866 shown in FIG. 25 to input its own personal ID information and the apparatus ID information of the terminal 811 of the destination of download together with the authentication information request.

By this, the authentication information request including the related input information is transmitted via the network from the transmission unit 862 of the terminal 811 to the authentication apparatus 813.

### Step ST133:

The reception unit 881 of the authentication apparatus 813 receives the authentication information request transmitted by the terminal 811 at step ST12.

### Step ST134:

The control unit 888 of the authentication apparatus 813 reads the information of the destination of download corresponding to the personal ID information included in the authentication information request received by the reception unit 881 at step ST13 from the storage unit 885 shown in FIG. 26, decides whether or not the information of the destination of download included in the authentication information request exists in the related read information of the destination of download, decides that the authentication information request is legitimate when deciding that it exists, and decides that the authentication information request is illegitimate when deciding that it does not exist.

### Step ST135:

When deciding that the authentication information request is legitimate, the control unit 888 of the authentication apparatus 813 reads the authentication information SIGa corresponding to the personal ID information included in the authentication information request from the storage unit 885 and transmits the related read authentication information SIGa to the terminal (terminal 811 in the present embodiment) specified by the designated apparatus ID information via the transmission unit 882.

### Step ST136:

On the other hand, the control unit 888 of the authentication apparatus 813 reads the apparatus ID information of the destination of download corresponding to the personal ID information included in the authentication information request from the storage unit 885 when deciding that the authentication information request is illegitimate and transmits a notification indicating that the smart card 850 was illegitimately used to the apparatus specified by the related read apparatus ID information via the transmission unit 882.

### Step ST137:

The reception unit 861 of the terminal 811 receives the authentication information SIGa from the authentication apparatus 813.

### Step ST138:

The control unit 868 of the terminal 811 decides whether or not the authentication information SIGa received by the reception unit 861 at step ST14 and the authentication information SIGb stored in the smart card 850 correspond.

### Step ST139:

When deciding they correspond at step ST18, the control unit 868 of the terminal 811 writes the authentication information SIGa received by the reception unit 861 at step ST17 into the storage unit 865.

By this, the control unit 868 of the terminal 811 restores the authentication information SIG by using the authentication information SIGa and SIGb stored in the storage unit 865.

### Step ST140:

When deciding that they do not correspond at step ST16, the control unit 868 of the terminal 811 transmits a notification indicating this from the transmission unit 862 to the authentication apparatus 813 via the network.

### Step ST141:

The reception unit 881 of the authentication apparatus 813 receives the notification from the terminal 811.

### Step ST142:

The authentication apparatus 813 transmits a notification indicating the illegitimate usage of the smart card 850 to the terminal of the corresponding normally registered user from the transmission unit 882 via the network.

As explained above, according to the authentication system 801, the smart card 850 stores only the authentication information SIGb of part of the authentication information SIG, the authentication apparatus 813 verifies the legitimacy of the user in response to the authentication information request from the terminal 811, the authentication apparatus 813 transmits the remaining authentication information SIGa to the terminal 811, and the terminal 811 restores the authentication information SIG inside it, so even in the case where the smart card 850 is stolen or lost, the illegitimate user cannot obtain the authentication information SIG only by the smart card 850. For this reason, illegitimate usage such as impersonation using the smart card 850 can be prevented.

The present invention is not limited to the above embodiment.

In the above embodiment, the case of designating the terminal 811 transmitting the authentication information request as the destination of download was illustrated, but another terminal can be designated too. By this, when there are a plurality of terminals in the home, if the smart card 850 is loaded in one terminal, the authentication information of the user of the smart card 850 can be obtained even at other terminals.

### Sixth Embodiment

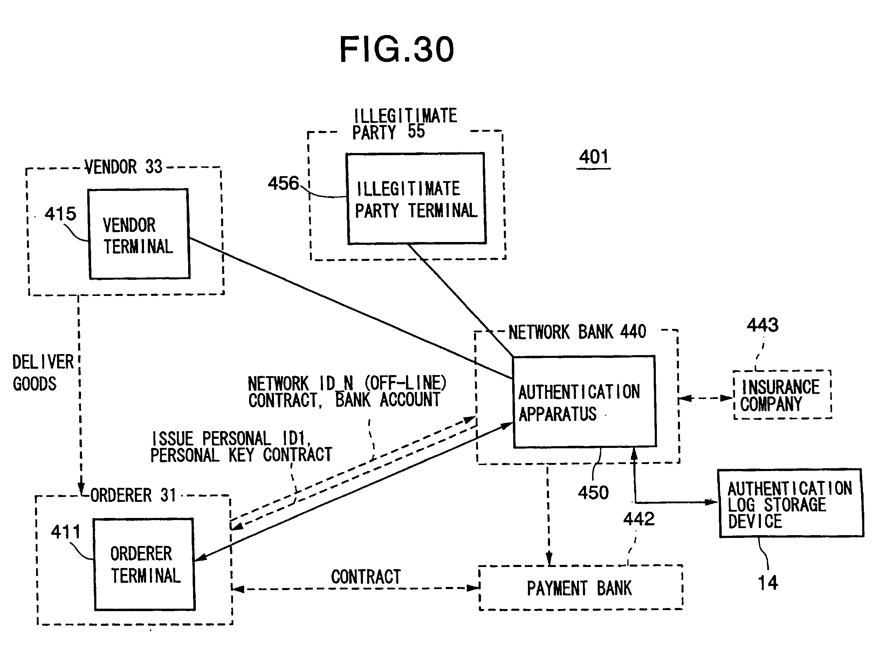

FIG. 30 is a view of the overall configuration of a transaction authentication system 401 of the present embodiment.

As shown in FIG. 30, the transaction authentication system 401 comprises, for example, an orderer terminal 411 of the orderer 31, a vendor terminal 415 of the vendor 33, an authentication apparatus 450 of a network bank 440, and the authentication log storage device 14 storing the authentication log are connected via a network (communication network) such as the Internet and authenticates the legitimacy of a transaction between the orderer 31 and the vendor 33 at the authentication apparatus 450.

Note that the numbers of the orderer terminals 411 and the vendor terminals 415 connected to the related network may be any numbers.

In the present embodiment, the personal ID information and personal key information of the orderer 31 are not sent to the vendor 33.

In the present embodiment, the authentication apparatus 450 corresponds to the communication apparatus of the 16th aspect of the invention and first communication apparatus of the 17th and 18th aspects of the invention, while the vendor terminal 415 or illegitimate party terminal 456 corresponds to the second communication apparatus of the 17th and 18th aspects of the invention.

In the present embodiment, for example, the orderer 31 and vendor 33 and the network bank 440 conclude a contract relating to the authentication performed. Further, the orderer 31 and an accounting bank 442, for example, conclude a contract indicating that the account relating to the authenticated transaction is to be performed by the network bank 440. Further, the network bank 440 and an insurance company 443 conclude an insurance contract for damage occurred by electronic commercial transactions involving the network bank 440.

Below, an explanation will be made of the apparatuses comprising the transaction authentication system 401.

### [Orderer terminal 411]

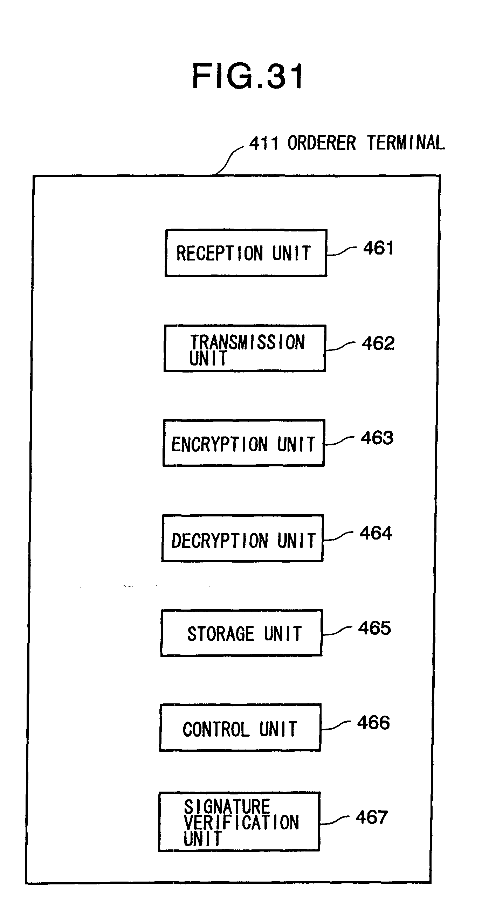

As shown in FIG. 31, the orderer terminal 411 is for example hardware such as a personal computer, set top box, or game machine provided in the home of the orderer 31 and has a reception unit 461, transmission unit 462, encryption unit 463, decryption unit 464, storage unit 465, control unit 466, and signature verification unit 467.

Note that, when used by the orderer 31, the orderer terminal 411 may have a bio-authentication unit for authenticating the orderer 31 as a legitimate user by comparing the information obtained from the physical characteristics of the orderer 31 such as a fingerprint and information indicating the physical characteristics stored in the storage unit 465 in advance.

Here, the reception unit 461 corresponds to the second receiving means of the 17th aspect of the invention, while the transmission unit 462 corresponds to the second transmitting means of the 17th aspect of the invention.

The reception unit 461 receives the information or request from the authentication apparatus 450 via the network.

The transmission unit 462 transmits the information or request to the authentication apparatus 450 via the network.

Further, the reception unit 461 and the transmission unit 462 transmit and receive information or request with the related server via the network when accessing the descriptive information of the goods or the like provided by the vendor 33.

The encryption unit 463 encrypts the information or request by using the predetermined encryption key.

The decryption unit 464 decrypts the information or request by using the predetermined encryption key.

The storage unit 465 stores the secret key K_{31,S} or the like produced by the orderer 31.

The signature verification unit 467 verifies for example the signature information produced by the authentication apparatus 450 by using the public key K_{40,P} of the network bank 440.

The control unit 466 centrally controls the processing of the components in the orderer terminal 411.

The control unit 466 encrypts for example all of the order information a1, personal key information k1 (personal identification information for identifying the user of the present invention), and the personal ID information ID1 (personal identification information of the present invention) or encrypts individual information in accordance with the operation by the orderer 31 and generates the authentication request Inf1 storing the related encrypted information.

Here, the personal key information k1 and the personal ID information ID1 are identifiers assigned to the related orderer 31 when the orderer 31 registers itself in the network bank 440. For example, the personal key information k1 is an identifier indicating personal information such as the contract number of the contractor (orderer 31) contracting with the network bank 440. Further, the personal ID information ID1 is an identifier indicating the information relating to charging such as the bank account number of the orderer 31.

Further, when receiving the authentication reply Inf4 from the authentication apparatus 450 after transmitting the authentication request Inf1 to the authentication apparatus 450, the control unit 466 performs control for outputting the authentication result included in the authentication reply Inf4 via a predetermined display device or audio output device.

### [Vendor terminal 415]

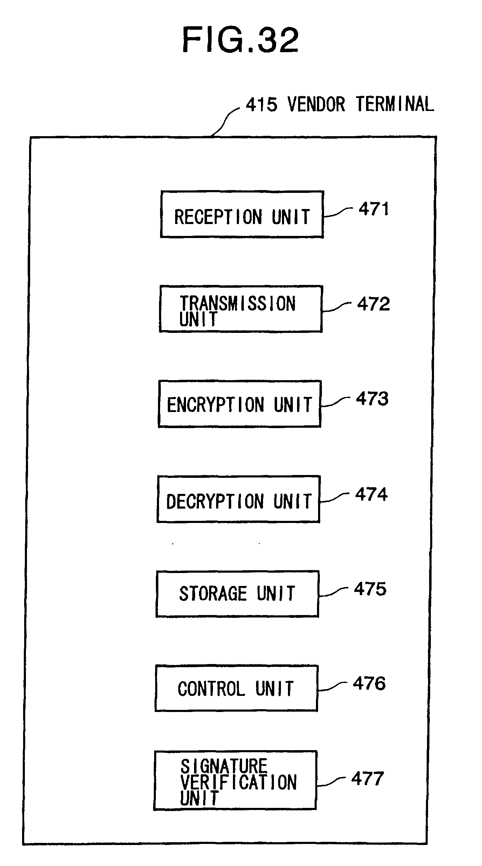

As shown in FIG. 32, the vendor terminal 415 is a server used by a vendor 33 opening up a store in a cybermall or the like and has a reception unit 471, transmission unit 472, encryption unit 473, decryption unit 474, storage unit 475, control unit 476, and signature verification unit 477.

The reception unit 471 receives the information or request from the authentication apparatus 450 via the network.

The transmission unit 472 transmits the information or request to the authentication apparatus 450 via the network.

Further, the reception unit 471 and the transmission unit 472 transmit the descriptive information of for example the goods provided by the vendor 33 read from the storage unit 475 to the orderer terminal 411 via the network in response to access from the orderer terminal 411.

The encryption unit 473 encrypts the information or request by using the predetermined encryption key.

The decryption unit 474 decrypts the information or request by using the predetermined encryption key.

The storage unit 475 stores the secret key K_{33,S} etc. produced by the vendor 33.

The control unit 476 centrally controls the processing of the components in the vendor terminal 415.

The signature verification unit 477 verifies the signature information produced by the authentication apparatus 450 by using for example the public key K_{40,P} of the network bank 440.

### [Authentication apparatus 450]

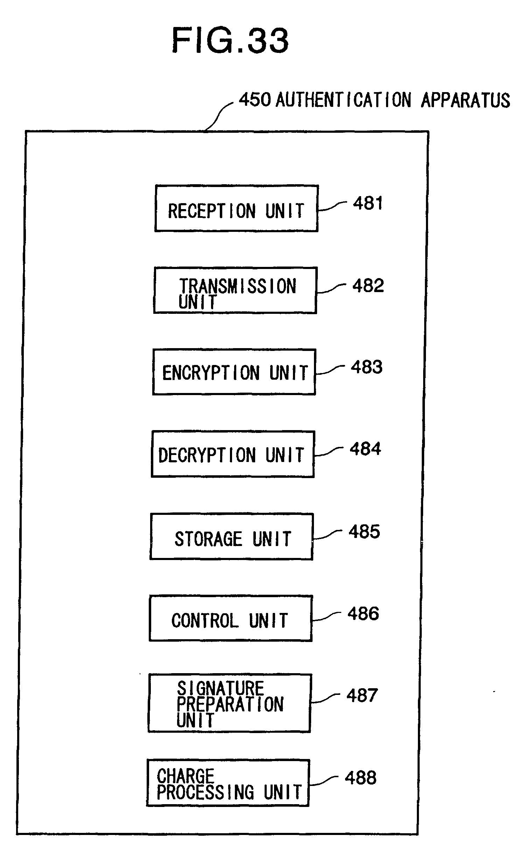

As shown in FIG. 33, the authentication apparatus 450 has a reception unit 481, transmission unit 482, encryption unit 483, decryption unit 484, storage unit 485, control unit 486, signature preparation unit 487, and charge processing unit 488.

Here, the reception unit 481 corresponds to the receiving means of the 16th aspect of the invention and the receiving means of the 17th aspect of the invention. The transmission unit 482 corresponds to the first transmitting means of the 16th aspect of the invention and the first transmitting means of the 17th aspect of the invention. The storage unit 485 corresponds to the storage means of the 16th aspect of the invention and the 17th aspect of the invention. The control unit 486 corresponds to the processing means of the 16th aspect of the invention and the 17th aspect of the invention.

The reception unit 481 receives the information or request from the orderer terminal 411 and the vendor terminal 415 via the network.

The transmission unit 482 transmits the information or request to the orderer terminal 411 and the vendor terminal 415 via the network.

The encryption unit 483 encrypts the information or request by using the predetermined encryption key.

The decryption unit 484 decrypts the information or request by using the predetermined encryption key.

The storage unit 485 stores the correspondence table of the personal key information k1 and the personal ID information ID1 of the orderer 31 and the network ID_N of the orderer 31 (information of the destination of transmission of the present invention) in the storage unit 485 of the authentication apparatus 450 shown in FIG. 33 when the orderer 31 contracts with the network bank 440.

Here, the network ID_N is an identifier for unambiguously identifying the user of the related network, that is, the orderer 31, registered by the orderer 31 in the network bank 440 off-line, inside the network.

Further, the storage unit 485 stores the public key K_{31,P} corresponding to the secret key K_{31,S} produced by the orderer 31, the public key K_{33,P} corresponding to the secret key K_{33,S} produced by the vendor 33, and so on when the orderer 31 and the vendor 33 contract with the network bank 440.

The control unit 486 centrally controls the processing of the components in the authentication apparatus 450.

The signature preparation unit 487 produces the signature information by using the secret key K_{40,S} of the network bank 440.

The charge processing unit 488 performs the charge processing for the authentication relating to the transaction by the orderer 31.

The detailed processing of the components of the authentication apparatus 450 will be described in the example of operation explained later.

Below, an explanation will be made of an example of the operation of the transaction authentication system 401.

As the prerequisite of the start of the related example of operation, the orderer 31 and the network bank 440 conclude a predetermined contract, and the network bank 440 issues the personal key information k1 and the personal ID information ID1 to the orderer 31.

Further, the orderer 31 registers the network ID_N for identifying the related orderer 31 inside the network in the network bank 440 under an environment where the secrecy is held, for example, off-line.

The network bank 440 stores the correspondence table of the personal key information k1, personal ID information ID1, and network ID_N of the orderer 31 in the storage unit 485 of the authentication apparatus 450 shown in FIG. 33.

Further, the network bank 440 stores its own secret key K_{40,S} in the storage unit 485 of the authentication apparatus 450 shown in FIG. 33 and, at the same time, transmits the public key K_{40,P} corresponding to the related secret key K_{40,S} to the orderer terminal 411 and the vendor terminal 415. The orderer terminal 411 stores the public key K_{40,P} in the storage unit 465 shown in FIG. 31. The vendor terminal 415 stores the public key K_{40,P} in the storage unit 475 shown in FIG. 32.

Further, the vendor 33 and the network bank 440 conclude a predetermined contract, and the network bank 440 issues information Z specifying the vendor and the personal ID information ID2 to the vendor 33. The network bank 440 stores the correspondence table of the information Z and the personal ID information ID2 in the storage unit 485 of the authentication apparatus 450 shown in FIG. 33.

Below, an explanation will be made of the operation of the transaction authentication system 401 when the orderer 31 requests authentication from the authentication apparatus 450.

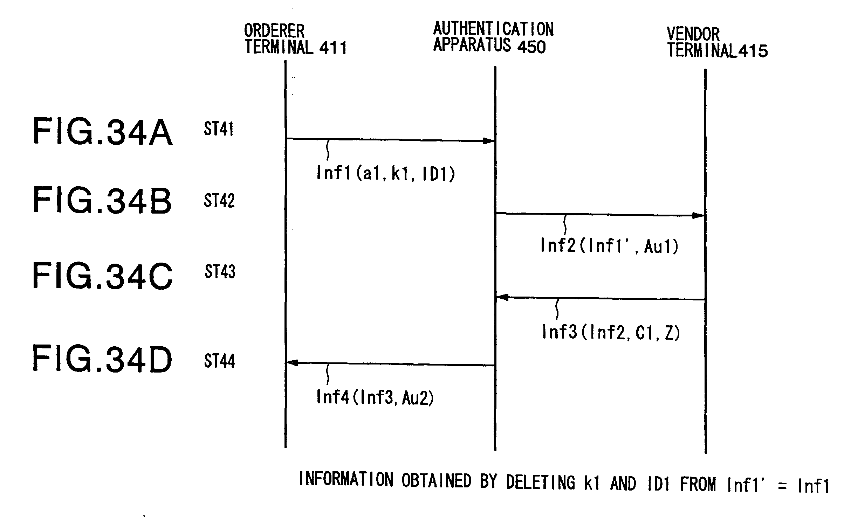

FIGS. 34A to 34D are views for explaining the related operation of the transaction authentication system 401.

### Step ST41:

The orderer 31 shown in FIG. 30 inputs the order information a1 indicating the name of goods to be ordered and quantity, etc., the personal key information k1 of the orderer 31, and the personal ID information ID1 of the orderer 31 to the orderer terminal 411 by operating a not illustrated operating means when ordering goods to for example a store on the network, that is, the vendor 33. Note that, the order information a1 includes information specifying the vendor 33.

Next, the encryption unit 463 of the orderer terminal 411 shown in FIG. 31 encrypts all of the order information a1, personal key information k1, and personal ID information ID1 by using the public key K_{40,P} of the network bank 440 read from the storage unit 465 and transmits the authentication request Inf1 (request of the present invention) storing the related encrypted information from the transmission unit 462 via the network to the authentication apparatus 450 of the network bank 440 shown in FIG. 30.

### Step ST42:

When the reception unit 481 receives the authentication request Inf1 from the orderer terminal 411, the authentication apparatus 450 shown in FIG. 33 reads the secret key K_{40,S} of the network bank 440 from the storage unit 485 and decrypts the authentication request Inf1 at the decryption unit 484 by using the related secret key K_{40,S}.

Next, the authentication apparatus 450 produces the signature information Au1 by using secret key K_{40,S}. read read from the storage unit 485 for the information Inf1' obtained by deleting the personal key information k1 and the personal ID information ID1 from the decrypted authentication request Inf1 under the control of the control unit 486.

Next, the authentication apparatus 450 generates the request Inf2 storing the information Inf1' and the signature information Au1.

Next, the encryption unit 483 encrypts the generated request Inf2 by using the public key K_{33,P} of the vendor 33 read from the storage unit 485 shown in FIG. 33 and then transmits the same from the transmission unit 482 via the network to the vendor terminal 415.

### Step ST43:

When the reception unit 471 receives the request Inf2 from the authentication apparatus 450, the decryption unit 474 of the vendor terminal 415 decrypts the request Inf2 by using its own secret key K_{33,S} read from the storage unit 475.

Next, the signature verification unit 477 of the vendor terminal 415 verifies the signature information Au1 stored in the decrypted request Inf2 by using the public key K_{40,P} of the authentication apparatus 450 read from the storage unit 475.

The control unit 476 of the vendor terminal 415 stores the information Inf1' stored in the request Inf2 in the storage unit 475 shown in FIG. 32 when the legitimacy of the signature information Au1 is authenticated as a result of the verification by the signature verification unit. The vendor 33 generates the acceptance confirmation information c1 indicating the shipping schedule of goods etc. to the orderer 31 based on the order information a1 in the information Inf1'.

Next, the control unit 476 generates the reply Inf3 storing the request Inf2, the acceptance confirmation information c1, and the information Z specifying itself.

Next, the transmission unit 472 of the vendor terminal 415 encrypts the generated reply Inf3 at the encryption unit 473 by using the public key K_{40,P} of the network bank 440 read from the storage unit 475, then transmits the same from the transmission unit 472 via the network to the authentication apparatus 450.

The vendor 33 ships the goods etc. ordered by the orderer 31 to the orderer 31 or provides the service ordered by the orderer 31 to the orderer 31 based on the order information a1 in the information Inf1' stored in the request Inf2.

### Step ST44:

When the reception unit 481 receives the reply Inf3 from the vendor terminal 415, the decryption unit 484 of the authentication apparatus 450 decrypts Inf3 by using secret key K_{40,S} read from the storage unit 485, produces the predetermined transaction log information by using the order information a1 stored in the request Inf1 and the information Z of the vendor 33 stored in the related decrypted Inf3, and stores this in the storage unit 485. The related log information is used when the network bank 440 accounts the orderer 31.

Further, the signature preparation unit 487 of the authentication apparatus 450 produces the signature information Au2 by using secret key K_{40,S} for the reply Inf3 received at step ST43.

Next, the control unit 486 of the authentication apparatus 450 produces the authentication reply Inf4 storing the reply Inf3 and the signature information Au2.

Next, the encryption unit 483 of the authentication apparatus 450 encrypts the produced and authenticated reply Inf4 by using the public key K_{31,P}, then specifies the destination of transmission based on the network ID_N of the orderer 31 read from the storage unit 485 corresponding to the personal ID information ID1 and transmits the same from the transmission unit 482 to the orderer terminal 411 via the network.

At the orderer terminal 411, the received authentication reply Inf4 is decrypted at the decryption unit 464 by using the secret key K_{31,S} of the orderer 31 read from the storage unit 465 shown in FIG. 31.

Next, the signature verification unit 466 of the orderer terminal 411 verifies the signature information Au2 stored in the related decrypted authentication reply Inf4 by using the public key K_{40,P} of the network bank 440 read from the storage unit 465.

When the legitimacy is confirmed by the related verification, the control unit 466 outputs the output in accordance with the order information a1 and the information indicating the content of the transaction stored in the authentication reply Inf4 from a not illustrated display or speaker of the orderer terminal 411.

Below, an explanation will be made of the operation of the transaction authentication system 401 when an illegitimate party 55 shown in FIG. 30 which illegitimately acquired the personal ID1 and personal key information k1 of the orderer 31 transmits the authentication request to the authentication apparatus 450 by using the illegitimate party terminal 456 as its own terminal.

Here, the configuration of the illegitimate party terminal 456 is the same as for example the orderer terminal 411 shown in FIG. 31.

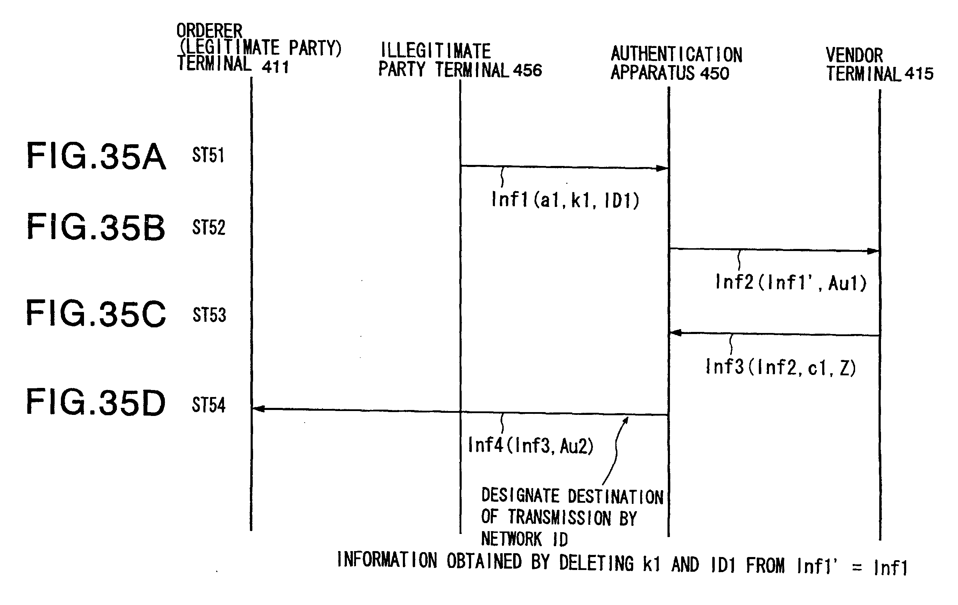

FIGS. 35A to 35D are views for explaining the related operation of the transaction authentication system 401.

### Step ST51:

The illegitimate party 55 shown in FIG. 30 inputs the order information a1 indicating the name, quantity, etc. of the goods to be ordered, the illegitimately acquired personal key information k1 of the orderer 31, and the illegitimately acquired personal ID information ID1 of the orderer 31 to the illegitimate party terminal 456 by operating the not illustrated operating means when ordering the goods to the vendor 33.

Next, the encryption unit 463 shown in FIG. 31 of the illegitimate party terminal 456 encrypts all of the order information a1, personal key information k1, and personal ID information ID1 by using the public key K_{40,P} of the network bank 440 read from the storage unit 465 and transmits the authentication request Inf1 storing the related encrypted information from the transmission unit 462 via the network to the authentication apparatus 450 of the network bank 440 shown in FIGS. 23A to 23F.

### Step ST52:

The authentication apparatus 450 shown in FIG. 33 performs similar processing to that of step ST42 for the related authentication request Inf1 when the reception unit 481 receives the authentication request Inf1 from the illegitimate party terminal 456.

### Step ST53:

The processing of step ST53 is the same as the processing of step ST43 explained before.

### Step ST54:

The processing of step ST54 is the same as the processing of step ST44 explained before.

Namely, even when the illegitimate party 55 transmits the authentication request Inf1 to the authentication apparatus 450 by using the illegitimate party terminal 456, the reply thereof, that is, the authentication reply Inf4, is transmitted to the orderer terminal 411 based on the network ID_N of the orderer 31 stored in the storage unit 485 of the authentication apparatus 450.

Due to this, the orderer 31 can learn that an illegitimate authentication request was made using its own personal ID information ID1 based on the received authentication reply Inf4 and notifies this to the network bank 440 or the like.

As explained above, according to the transaction authentication system 401, the authentication apparatus 450 transmits the authentication reply Inf4 to the destination of transmission designated by the network ID_N registered by the orderer 31 in the network bank 440 off-line. Therefore, for example, when a person illegitimately acquiring the personal information ID1 of the orderer 31 requests authentication from the authentication apparatus 450 by using the related personal information ID1, the orderer 31 can learn that an illegitimate transaction was made using its own personal information ID by the authentication reply Inf4 transmitted from the authentication apparatus 450 to the orderer terminal 411 based on the network ID_N registered in the authentication apparatus 450.

For this reason, according to the transaction authentication system 401, illegitimate transactions using the personal ID information of others can be effectively suppressed.

As explained above, according to the transaction authentication system 401, the reliability of electronic commercial transactions can be improved, the number of the contractors (transactors) contracting with the related authentication manager can be increased, the cost such as the membership fee charged to each contractor can be lowered, and it becomes possible to further promote electronic commercial transactions.

The present invention is not limited to the above embodiment.

For example, in the above embodiment, authentication processing was illustrated as the processing performed by the processing means of the present invention, but the present invention can also be applied to the case where processing such as charge processing is carried out other than the above.

Further, in the above embodiment, the case where the network bank 440 performed the work of authenticating transaction by using the authentication apparatus 450 was illustrated, but it is also possible if a manager different from the network bank 440 performs the work for authenticating transactions by using the authentication apparatus 450.

### Seventh Embodiment

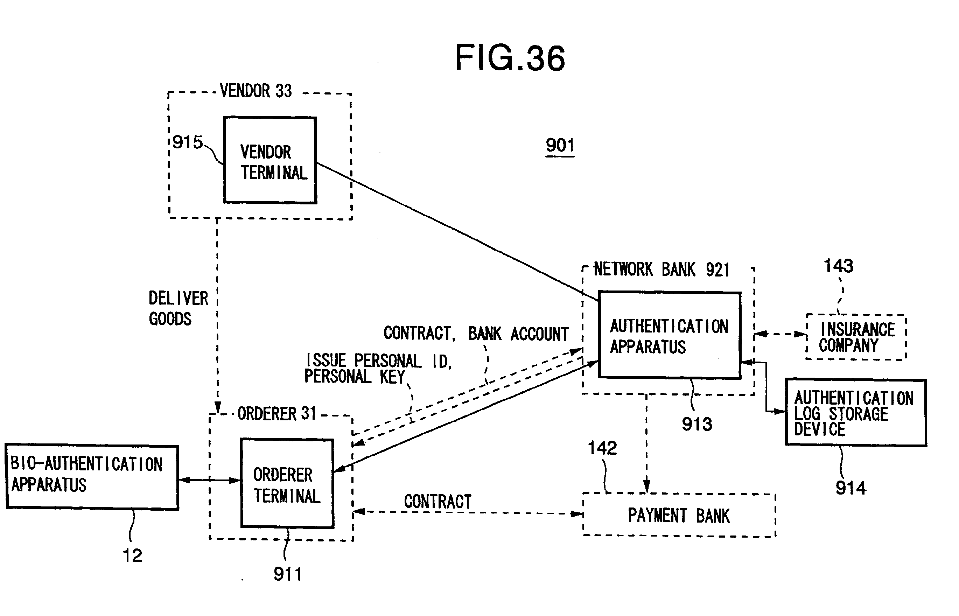

FIG. 36 is a view of the configuration of a transaction authentication system 901 in the present embodiment.

The transaction authentication system 901 has an order terminal 911 by which the orderer 31 performs the order processing, the bio-authentication apparatus 12 for authenticating that the orderer 31 is the party in question by utilizing the bio-characteristics of the orderer 31, an authentication apparatus 913 used by a network bank (or transaction authentication authority administration company) 921 and authenticating the commercial transaction information, an authentication log storage device 914 storing the authentication log, and a vendor terminal 915 by which the vendor 33 performs the acceptance processing.

In the present embodiment, the personal ID information and the personal key information of the orderer 31 are not sent to the vendor 33.

The present embodiment is an embodiment corresponding to the 19th to 21st aspects of the invention, the orderer terminal 911 corresponds to the first communication apparatus of the present invention, the authentication apparatus 913 corresponds to the authentication apparatus of the present invention, and the vendor terminal 915 corresponds to the second communication apparatus of the present invention. Further, the orderer 31 corresponds to the first transactor of the present invention, while the vendor 33 corresponds to the second transactor of the present invention.

### [Orderer terminal 911]

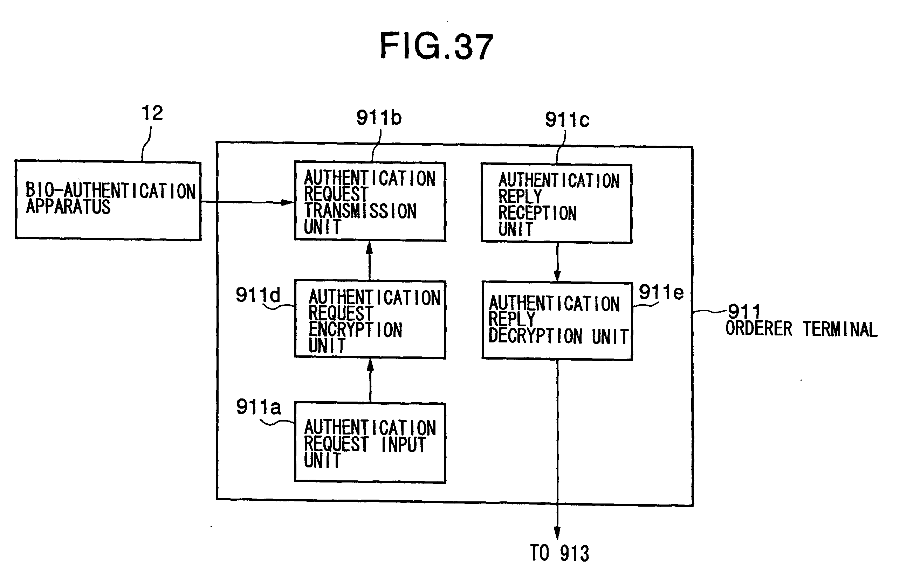

FIG. 37 is a functional block diagram of the orderer terminal 911.

The orderer terminal 911 is a terminal used by a general user contracting for usage of the present system, that is, the orderer 31.

The orderer terminal 911 has an authentication request input unit 911a, authentication request transmission unit 911b, authentication reply reception unit 911c, authentication request encryption unit 911d, and authentication reply decryption unit 911e as shown in FIG. 37.

The authentication request input unit 911a inputs the order information a1 and the orderer personal key information k1 (personal key information of the first transactor of the present invention) in accordance with for example the operation of the keyboard by the orderer 31. Note that, in the present embodiment, the personal key information is information relating to the charging of the corresponding party.

The order information a1, for example, describes the name, address, and contact information of the orderer 31, the personal key information k2 (personal identification information of the second transactor of the present invention) of the vendor 33, and the content of the goods or service to be ordered.

The authentication request transmission unit 911b transmits the authentication request Inf1 (first request of the present invention) including the order information a1 and the orderer personal key information input to the authentication request input unit 911a to the authentication apparatus 913.

The authentication reply reception unit 911c receives the authentication reply Inf4 from the authentication apparatus 913.

The authentication request encryption unit 911d encrypts the authentication request Inf1.

The authentication reply decryption unit 911e decrypts the authentication reply Inf4.

### [Bio-authentication apparatus 912]

The bio-authentication apparatus 912 is an apparatus for performing personal authentication of the user by using so-called biometrics and specifically compares physical characteristics such as a fingerprint of the user (orderer 31) acquired in advance and stored in the bio-authentication apparatus 912 with a fingerprint or the like of the user to be actually authenticated to authenticate the party in question according to coincidence or incoincidence thereof. Note that the storage device of the bio-authentication apparatus 912 for storing information such as the fingerprint of the user in question is configured to be electrically cut off from the outside, so the information thereof is not leaked to the outside.

### [Authentication apparatus 913]

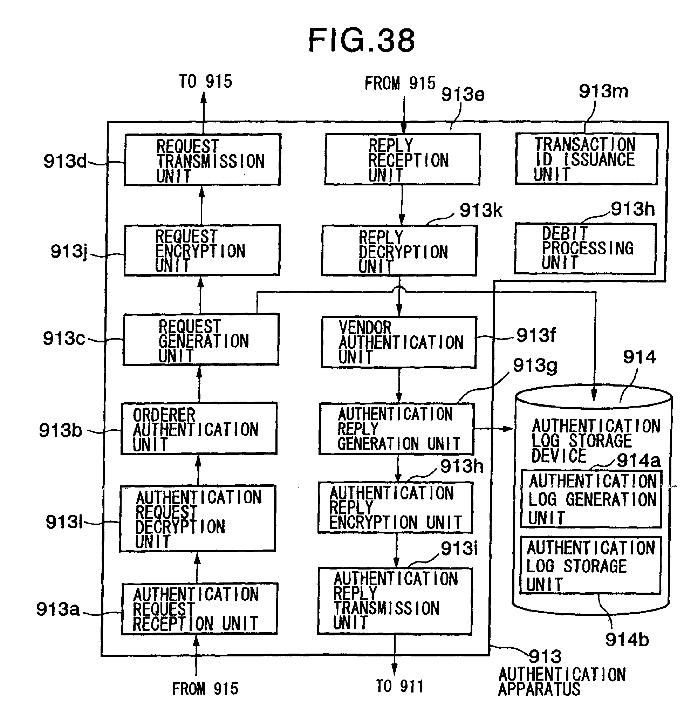

FIG. 38 is a functional block diagram of the authentication apparatus 913.

The authentication apparatus 913 is an apparatus used by the network bank 921 administering the present system.

The authentication apparatus 913 has an authentication request reception unit 913a, orderer authentication unit 913b, request generation unit 913c, request transmission unit 913d, reply reception unit 913e, vendor authentication unit 913f, authentication reply generation unit 913g, authentication reply encryption unit 913h, authentication reply transmission unit 913i, request encryption unit 913j, reply decryption unit 913k, authentication request decryption unit 913l, transaction ID issuance unit 913m, and account processing unit 913n as shown in FIG. 38.

Here, the authentication request reception unit 913a corresponds to the first receiving means of the present invention, the orderer authentication unit 913b and the request generation unit 913c correspond to the first authenticating means of the present invention, the request transmission unit 913d corresponds to the first transmitting means of the present invention, the reply reception unit 913e corresponds to the second receiving means of the present invention, the vendor authentication unit 913f and the authentication reply generation unit 913g correspond to the second authenticating means of the present invention, the authentication reply transmission unit 913i corresponds to the second transmitting means of the present invention, the transaction ID issuance unit 913m corresponds to the transaction identification information issuing means of the present invention, and the account processing unit 913n corresponds to the account processing means of the present invention.

The authentication request reception unit 913a receives the authentication request Inf1 transmitted by the orderer terminal 911.

The orderer authentication unit 913b authenticates the orderer 31 by using the orderer personal key information k1 included in the authentication request Inf1 and generates the authentication information Au1 (first authentication information of the present invention).

The request generation unit 913c generates the information In1a by deleting the personal key information k1 from the authentication request Inf1, and generates the request Inf2 (second request of the present invention) including the related information Inf1a and including the authentication information Au1.

The request transmission unit 913d transmits the request Inf2 to the vendor terminal 915.

The reply reception unit 913e receives the reply Inf3 (reply of the present invention) from the vendor terminal 915.

The vendor authentication unit 913f authenticates the vendor 33 by using the identification information of the vendor 33 included in the reply Inf3, that is, the personal key information k2, and the transaction ID (transaction identification information of the present invention) and generates the authentication information Au2 (second identification information of the present invention).

The authentication reply generation unit 913g adds the authentication information Au2 to the reply Inf3 and generates the authentication reply Inf4.

The authentication reply encryption unit 913h encrypts the authentication reply Inf4.

The authentication reply transmission unit 913i transmits the encrypted authentication reply Inf4 to the orderer terminal 911.

The request encryption unit 913j encrypts the request Inf2 generated by the request generation unit 913c.

The reply decryption unit 913k decrypts the reply Inf3.

The authentication request decryption unit 913l decrypts the authentication request Inf1.

The transaction ID issuance unit 913m issues the transaction ID for identifying the transaction concerned in the related authentication request Inf1 when the authentication request reception unit 913a receives the authentication request Inf1 from the orderer terminal 911.

The account processing unit 913n performs the account processing of transactions between the orderer 31 and the vendor 33 while communicating with the server of the accounting bank 142.

### [Authentication log storage device 914]

As shown in FIG. 38, the authentication log storage device 914 has an authentication log generation unit 914a and authentication log storage unit 914b.

The authentication log generation unit 914a generates the log information indicating that the authentication request Inf1 is received from the orderer 31, the log information indicating that the request Inf2 is transmitted to the vendor 33, the log information indïcating that the authentication reply Inf3 is received from the vendor 33, and the log information indicating that the authentication reply Inf4 is transmitted to the orderer 31 and stores them in the authentication log storage unit 914b in connection with the transaction ID issued by the transaction ID issuance unit 913m at the time of reception of the authentication request Infl.

### [Vendor terminal 915]

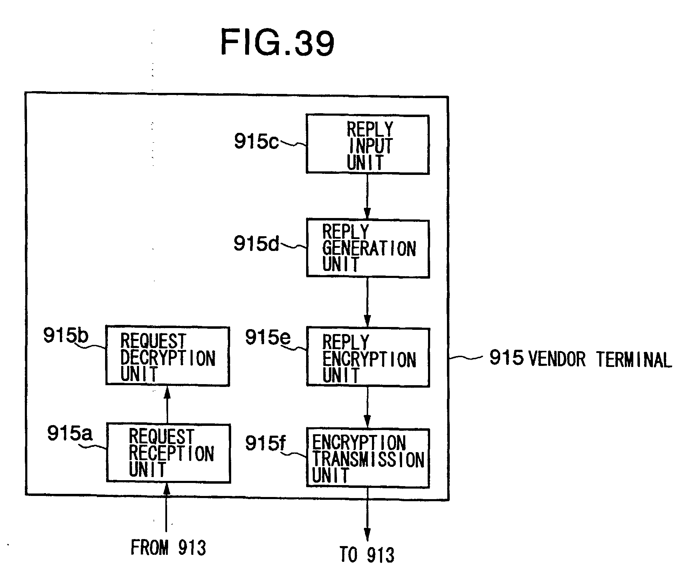

FIG. 39 is a functional block diagram of the vendor terminal 915.

The vendor terminal 915 is used by the vendor of the goods or the like contracting for usage of the present system, that is, the vendor 33 of the goods.

The vendor terminal 915 has a request reception unit 915a, request decryption unit 915b, reply input unit 915c, reply generation unit 915d, reply encryption unit 915e, and reply transmission unit 915f.

The request reception unit 915a receives the request Inf2 from the authentication apparatus 913.

The request decryption unit 915b decrypts the request Inf2.

The reply input unit 915c inputs the acceptance confirmation information C1 and the information Z specifying the vendor 33 in accordance with the operation by the user.

The reply generation unit 915d generates the reply Inf3 including the request Inf2, acceptance confirmation information C1, and information Z of the vendor 33.

The reply encryption unit 915e encrypts the reply Inf3.

The reply transmission unit 915f transmits the encrypted reply Inf3 to the authentication apparatus 913.

In the transaction authentication system 901 of the present embodiment, a third party in the commercial transaction, that is, the network bank 921 (or transaction authentication authority), is interposed between the orderer 31 and the vendor 33 of the parties to the electronic commercial transaction. The network bank 921 authenticates the electronic commercial transactions performed between the parties by using the authentication apparatus 913, whereby illegitimacy of electronic commercial transactions is prevented. The commercial transaction parties desiring to use the transaction authentication system 901 first conclude a usage contract of the authentication apparatus 13 with this network bank 921.

For example, as shown in FIG. 36, the orderer 31 sends the information required for the contract with the network bank (transaction authentication authority administration company) 921 by using the Internet, mail, or the like. As the information sent here, other than the name, address, etc. of the orderer 31, there can be mentioned the bank account of an accounting bank 142 contracting with the orderer 31 from which the price or the like is to be accounted. The network bank 921 receiving this information issues the personal ID information for proving the legitimacy of the account when accounting the bank 142 and the personal key information for identifying the orderer 31 in the present system with respect to the contracted orderer 31. The personal ID information issued here is also sent to the bank 142. The bank 142 authenticates this personal ID information when accounting for the goods or the like so as to prevent illegitimate accounting.

Note that, in FIG. 36, the explanation was only made of the case where the orderer 31 concluded a usage contract, but the vendor of the goods or the like, that is, the vendor 33 of the goods, also concludes a usage contract with the network bank 921 by a similar process. Further, here, the personal ID information and the personal key information were individually issued, but it is also possible to employ a format wherein the personal key information can also be used as the personal ID information and separate personal ID information is not issued.

Next, an explanation will be made of the operation of the transaction authentication system 901.

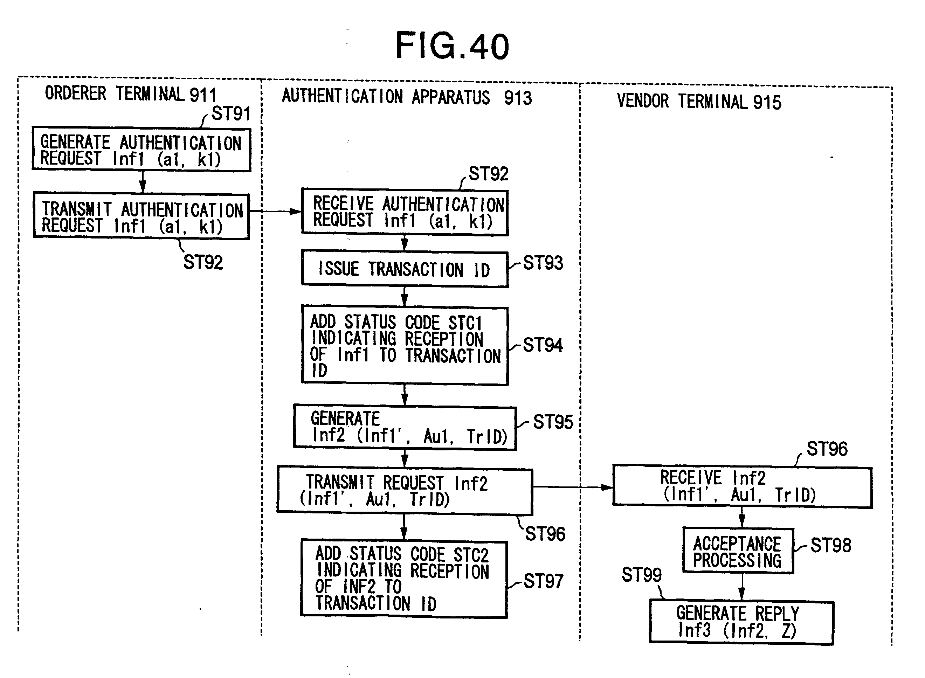

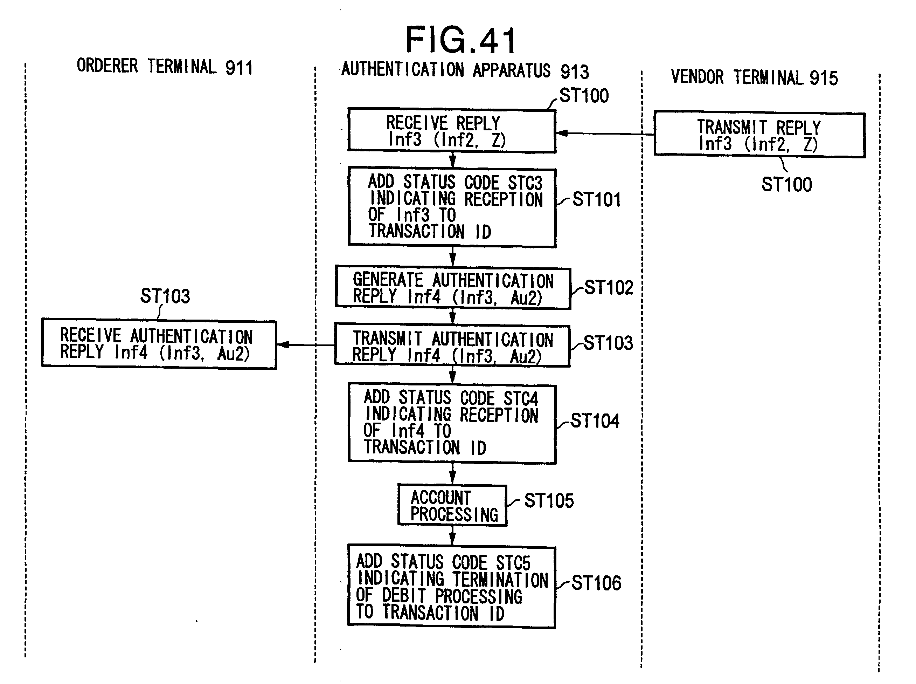

FIG. 40 and FIG. 41 are flowcharts for explaining the operation of the transaction authentication system 901.

### Step ST91:

The orderer 31 desiring to purchase the goods by the electronic commercial transaction first obtains information relating to the goods from a commercial transaction site or the like of the Internet and selects the goods desired to be purchased.

The orderer 31 selecting the goods to be purchased next performs the order processing of the selected goods by using the orderer terminal 911 shown in FIG. 37 owned by the orderer 31.

The order processing is carried out by the orderer using the authentication request input unit 911a to input the order information a1 for designating the goods desired to be purchased, quantity, etc. and the personal key information of the orderer 31, that is, the orderer personal key information k1. Here, the orderer personal key information k1 may be manually input by the orderer 31 whenever he or she performs the order processing or may be automatically input at the time of order processing.

Due to this, the authentication request Inf1 including the input order information a1 and orderer personal key information k1 is generated.

At this time, the authentication request transmission unit 911b has an illegitimate transmission prevention function for inhibiting the transmission of the authentication request Inf1 for preventing an illegitimate order by a third party and an erroneous order due to a childish prank. The processing of step ST92 is not carried out in this state.

For this reason, the orderer 31 desiring to perform an electronic commercial transaction must authenticate itself by using the bio-authentication apparatus 12 and disarm this illegitimate transmission prevention function.

For example, when the bio-authentication apparatus 12 is for authenticating the orderer 31 by a fingerprint of the orderer 31, the orderer 31 makes the bio-authentication apparatus 12 read his or her fingerprint. The bio-authentication apparatus 12 reading the fingerprint of the orderer 31 compares the read fingerprint with the fingerprint data of the orderer 31 in question which was acquired in advance and stored inside the apparatus and decides whether or not the read fingerprint is that of the orderer 31 in question.

Then, when it decides that the read fingerprint is that of the orderer 31 in question, the bio-authentication apparatus 12 gives the information indicating that the authentication was established to the authentication request transmission unit 911b. The authentication request transmission unit 911b receiving this information cancels the illegitimate transmission prevention function and transmits the sent authentication request to the authentication apparatus 913 owned by the transaction authentication authority 32.

### Step ST92:

The authentication request Inf1 generated at step ST91 is encrypted at the authentication request encryption unit 911d, then transmitted via the authentication request transmission unit 911b to the authentication apparatus 913.

The authentication request Inf1 transmitted to the authentication apparatus 913 shown in FIG. 38 is received at the authentication request reception unit 913a, decrypted by the authentication request decryption unit 9131, then sent to the orderer authentication unit 913b.

Next, the orderer authentication unit 913b decides whether or not the orderer is the legitimate orderer 31 by using the orderer personal key information k1 included in the authentication request Inf1 and the personal key information of the contractor stored in the not illustrated storage device.

Then, when it decides that the orderer is the legitimate orderer 31, the processing of step ST93 is carried out.

### Step ST93:

The transaction ID issuance unit 913m of the authentication apparatus 913 shown in FIG. 38 issues a transaction ID (IDTr) for identifying the transaction concerned in the authentication request Inf1 received at step ST92.

### Step ST94:

The authentication log generation unit 914a of the authentication log storage device 914 adds a status code STC1 indicating the reception of the authentication request Inf1 from the orderer terminal 911 at step ST92 to the transaction ID (IDTr) generated at step ST93.

Then, it writes the authentication request Inf1 added with the status code STC1 into the authentication log storage unit 914b.

### Step ST95:

The authentication request Inf1 received at step ST93 is sent to the request generation unit 913c. The request generation unit 913c generates the request Inf2 (second request of the present invention) including the information Infla generated by deleting the personal key information k1 from the authentication request Inf1 and including the authentication Au1 and the transaction ID (IDTr).

### Step ST96:

Te request Inf2 generated at step ST95 is encrypted at the request encryption unit 913j, then is transmitted via the request transmission unit 913d to the vendor terminal 915.

The request Inf2 transmitted to the vendor terminal 915 is received by the request reception unit 915a, then decrypted by the request decryption unit 915b.

### Step ST97:

The authentication log generation unit 914a of the authentication log storage device 914 adds a status code STC2 indicating that the request Inf2 is transmitted to the vendor terminal 915 at step ST96 to the transaction ID (IDTr) written in the authentication log storage unit 914b at step ST4.

At this time, it is confirmed if the status code STC1 has been already added to the related transaction ID (IDTr). If it has not been added, error processing is carried out.

### Step ST98:

The vendor 33 performs the acceptance processing of the goods based on the request Inf2 decrypted at step ST6.

The acceptance processing is carried out by the vendor 33 using the reply input unit 915c by the vendor 33 to input the acceptance confirmation information C1 and the information z specifying the vendor 33. Here, the information Z may be manually input by the vendor 33 whenever it performs the acceptance processing or may be automatically input at the time of shipping processing.

### Step ST99:

The reply generation unit 915d of the vendor terminal 915 generates the reply Inf3 including the request Inf2, acceptance confirmation information C1, and information Z of the vendor 33.

### Step ST100:

The reply Inf3 generated at step ST99 is encrypted at the reply encryption unit 915e of the vendor terminal 915, then is transmitted via the reply transmission unit 915f to the authentication apparatus 913.

The reply Inf3 transmitted to the authentication apparatus 913 is received at the reply reception unit 913e shown in FIG. 38 and decrypted by the reply decryption unit 913k.

### Step ST101:

The authentication log generation unit 914a of the authentication log storage device 914 adds a status code STC3 indicating that the reply Inf3 is received from the vendor terminal 915 at step ST100 to the transaction ID written in the authentication log storage unit 914b at step ST4.

At this time, it is confirmed if the status codes STC1 and STC2 have been already added to the related transaction ID (IDTr). When they have not been added, error processing is carried out.

### Step ST102:

The reply Inf3 received at step ST100 is sent to the vendor authentication unit 913f.

Then, the vendor authentication unit 913f decides whether or not the vendor is the legitimate vendor 33 by using the information Z included in the reply Inf3 and the personal key information of the contractor stored in the not illustrated storage device.

Then, when it decides that the vendor is the legitimate vendor 33, it sends the reply Inf3 to the authentication reply generation unit 913g. The authentication reply generation unit 913g generates the authentication reply Inf4 including the reply Inf3 and including the authentication information Au2 indicating that the authentication was established.

### Step ST103:

The authentication reply Inf4 generated at step ST102 is encrypted at the authentication reply encryption unit 913h, then transmitted via the authentication reply transmission unit 913i to the orderer terminal 911.

The authentication reply Inf4 transmitted to the orderer terminal 911 is received at the authentication reply reception unit 911c shown in FIG. 37, then decrypted by the authentication reply decrypting means 911e. The orderer 31 confirms this decrypted authentication reply Inf4 and thereby can learn that its own order for goods was properly received.

### Step ST104:

The authentication log generation unit 914a of the authentication log storage device 914 adds a status code STC4 indicating that the authentication reply Inf4 was transmitted to the orderer terminal 911 at step ST103 to the transaction ID (IDTr) written in the authentication log storage unit 914b at step ST94.

### Step ST105:

In response to an instruction from the account processing unit 913n, the network bank 921 accounts the sum accompanying the related transaction from the bank account of the accounting bank 142 with which the orderer 31 contracts by using the personal key information k1 of the orderer 31. This accounting is possible by accounting the bank account at the network bank 921, then transferring the sum to the bank account of the vendor 33 or by directly transferring the sum from the bank account of the orderer 31 to the bank account of the vendor 33.

Further, the vendor 33 provides the goods or service to the orderer 31 based on the order information a1.

### Step ST106:

The authentication log generation unit 914a generates a status code STC5 indicating that the account processing is terminated and adds the status code STC5 to the related transaction ID (Tr).

As explained above, according to the transaction authentication system 901, since the authentication apparatus 913 manages the log information of one series of procedures performed between the orderer 31 and the vendor 33, it is possible to effectively avoid the vendor 33 accounting the account of the orderer 31 at the accounting bank 142 several times for one order by using the transaction ID intentionally or by negligence.

Further, according to the transaction authentication system 901, acts of impersonation illegitimately using the transaction ID can be easily found and coped with.

Further, according to the transaction authentication system 901, by authenticating electronic commercial transactions between the orderer 31 and the vendor 33 using the orderer terminal 911 and the vendor terminal 915 by using the authentication apparatus 913, the reliability of electronic commercial transactions can be raised.

Further, according to the transaction authentication system 901, since the request Inf2 transmitted from the authentication apparatus 913 to the vendor terminal 915 does not include the personal key information k1 of the vendor 33, the personal key information relating to the charging of the orderer 31 is not supplied to the vendor 33. For this reason, the illegitimate usage of the personal key information can be effectively suppressed.

Further, according to the transaction authentication system 901, even when a third party places a false order or tampers with information by stealing the orderer personal key information k1, the authentication reply Inf4 with respect to the order is transmitted to the normal orderer 31, so the normal orderer 31 can learn of the existence of the false order or tampering by a third party. It becomes possible to effectively prevent illegitimacy in electronic transactions by this.

Further, since the authentication apparatus 913 authenticates the authentication request Inf1 and the reply Inf3, the reliability of the information handled in the electronic commercial transactions increases, and it becomes possible to effectively prevent illegitimacy in electronic transactions.

Further, since the authentication log storage device 914 stores the authentication request Inf1 and the reply Inf3, it becomes possible for a third party to objectively prove the log of the electronic commercial transactions. It therefore becomes possible to effectively prevent illegitimate acts performed between parties to the electronic commercial transactions by this.

Further, since the authentication request Inf1, request Inf2, reply Inf3, and authentication reply Inf4 are transmitted encrypted, it becomes possible to effectively prevent the tampering, theft, etc. of information by third parties.

Further, since the authentication request transmission unit 911b transmits the authentication request only when it is authenticated that the orderer 31 is the party in question by the bio-authentication apparatus 12, it becomes possible to prevent illegitimate orders by third parties and erroneous orders due to childish pranks or the like.

### Eighth Embodiment

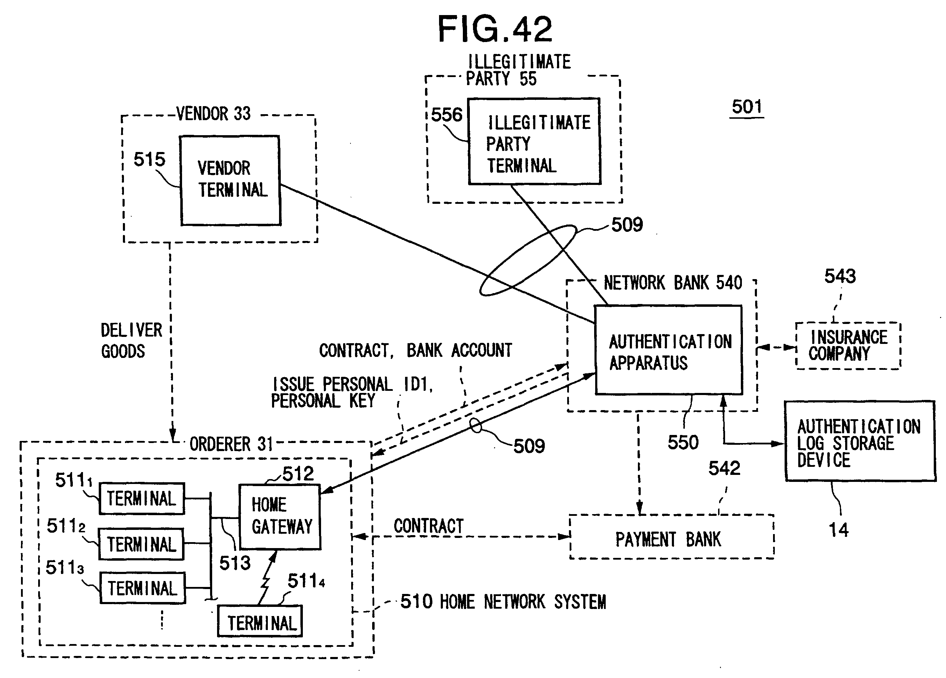

FIG. 42 is a view of the overall configuration of a transaction authentication system 501 of the present embodiment.

As shown in FIG. 42, the transaction authentication system 501, for example, is comprised of an orderer terminal 511 of the orderer 31, a vendor terminal 515 of the vendor 33, an authentication apparatus 550 of a network bank 540, and the authentication log storage device 14 for storing the authentication log connected via an external network (communication network) 509 such as the Internet and authenticates the legitimacy of the transaction between the orderer 31 and the vendor 33 at the authentication apparatus 550.

Note that the numbers of home network systems (orderer terminal systems) 10 and the vendor terminals 515 connected to the related external network 509 may be any numbers.

In the present embodiment, the personal ID information and the personal key information of the orderer 31 are not sent to the vendor 33.

The present embodiment is an embodiment corresponding to the 22nd to 24th aspects of the invention.

In the present embodiment, the home network system 510 corresponds to the communication control apparatus of the present invention, the terminals 511₁ to 511₄ correspond to the first communication apparatus of the present invention, and the authentication apparatus 550 corresponds to the second communication apparatus of the present invention.

In the present embodiment, the orderer 31 and vendor 33 and the network bank 540 conclude a contract relating to for example the authentication. Further, the orderer 31 and the accounting bank 542, for example, conclude a contract indicating that the transaction authenticated by the network bank 540 is to be accounted. Further, the network bank 540 and an insurance company 543 conclude an insurance contract for damage occurring due to the electronic commercial transaction concerned in the network bank 540.

Below, an explanation will be made of the apparatuses comprising the transaction authentication system 501.

### [Home network system 510]

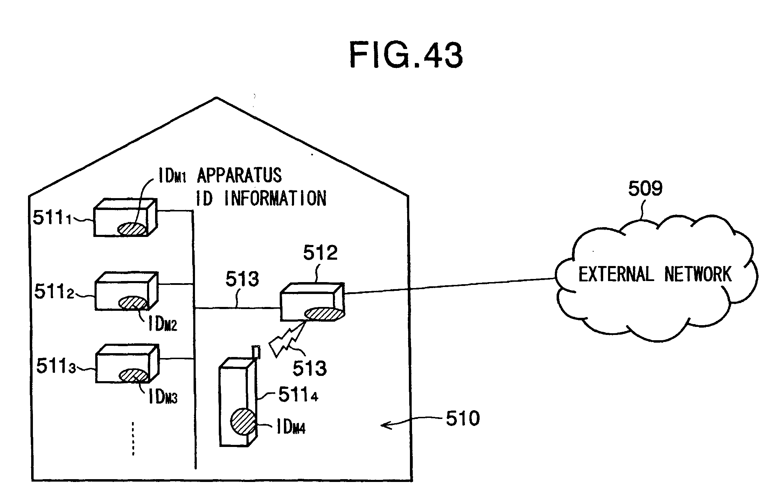

As shown in FIG. 42 and FIG. 43, the home network system 510 is constructed in the home of each orderer 31. A home gateway 512 of the home network system 510 is connected by wire or wirelessly to the external network 509 to which the vendor terminal 515 and authentication apparatus 550 shown in FIG. 42 are connected.

Further, the home gateway 512, for example, has connected to it the terminals 511₁, 511₂, 511₃, and 511₄ by wire or wirelessly via the internal network 13 in the home.

The terminals 511₁ to 511₄ are for example a digital television receiver, personal computer, telephone set, or game machine.

Each of the terminals 511₁ to 511₄ is for example assigned apparatus ID information for identifying the related terminal at the manufacturer. The related apparatus ID information is stored in the internal memory of each terminal. For example, apparatus ID information ID_{M1} is assigned to the terminal 511₁, apparatus ID information ID_{M2} is assigned to the terminal 511₂, apparatus ID information ID_{M3} is assigned to the terminal 511₃, and apparatus ID information ID_{M4} is assigned to the terminal 511₄.

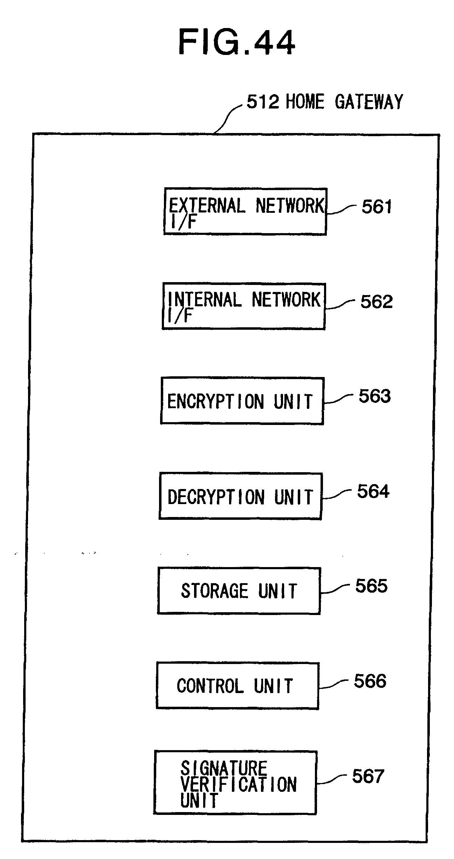

FIG. 44 is a view of the configuration of the home gateway 512.

The home gateway 512 has for example an external network I/F 561, internal network I/F 562, encryption unit 563, decryption unit 564, storage unit 565, control unit 566, and signature verification unit 567.

Here, the external network I/F 561 and the internal network I/F 562 correspond to the transmitting means and receiving means of the 22nd aspect of the invention and the first transmitting means and second receiving means of the 23rd aspect of the invention. Further, the storage unit 565 corresponds to the storage means of the 22nd aspect of the invention and the first storage means of the 23rd aspect of the invention. Further, the control unit 566 corresponds to the controlling means of the 22nd aspect of the invention and the 23rd aspect of the invention.

The external network I/F 561 transmits and receives the information or request with the authentication apparatus 550 via the external network 509.

The internal network I/F 562 transmits and receives the information or request with the terminals 511₁ to 511₄ via the internal network 13.

The encryption unit 563 encrypts the information or request by using a predetermined encryption key.

The decryption unit 564 decrypts the information or request by using the predetermined encryption key.

The storage unit 565 stores for example the apparatus ID information ID_{M1} to ID_{M4} received via the internal network 13 from the terminals 511₁ to 511₄ which have turned on when the power supply of the home gateway 512 is supplied.

Further, the storage unit 565 stores for example the secret key K_{31,S} produced by the orderer 31.

The signature verification unit 567 verifies for example the signature information produced by the authentication apparatus 550 by using the public key K_{40,P} of the network bank 540.

The control unit 566 centrally controls the processing of the components in the orderer terminal 511.

The control unit 566 generates the log information indicating the log of the communication between the terminals 511₁ to 511₄ and the authentication apparatus 550 via the home gateway 512 and stores this in the storage unit 565.

For this reason, by just accessing the log information stored in the storage unit 565, the log of the communication using the terminals 511₁ to 511₄ provided in the home can be easily learned, so management becomes easy.

Further, the control unit 566 controls the corresponding terminals 511₁ to 511₄ to enter the operating state when learning of access to the terminals 511₁ to 511₄ in a stand-by state via the external network 509.

The control unit 566 encrypts for example all of the order information a1, personal key information k1 (personal identification information of the present invention), personal ID information ID1 (personal identification information of the present invention), and apparatus ID information ID_{M1} to ID_{M4} (apparatus identification information of the present invention) received by the internal network I/F 562 from the terminals 511₁ to 511₄ or encrypts individual information in accordance with the operation by the orderer 31 and generates the authentication request Inf1 storing the related encrypted information.

Further, the control unit 566 detects whether or not the apparatus ID information indicating the transmitting apparatus of the authentication request included in the authentication reply Inf4 and any of the apparatus ID information ID_{M1} to ID_{M4} read from the storage unit 565 coincide when receiving the authentication reply Inf4 from the authentication apparatus 550 after transmitting for example the authentication request Inf1 to the authentication apparatus 550. When they coincide, it decides that a legitimate transaction is being carried out, while when they do not coincide, it decides that an illegitimate transaction was carried out and notifies this to at least one of the vendor terminal 515 and authentication apparatus 550.

### [Vendor terminal 515]

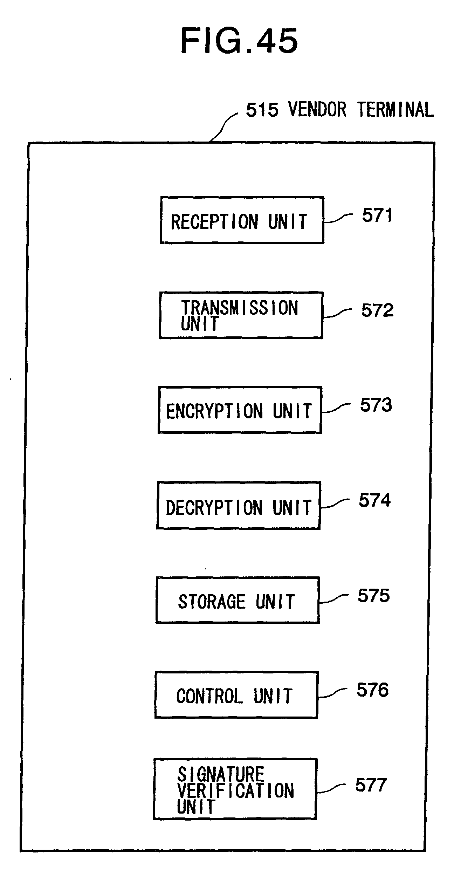

As shown in FIG. 45, the vendor terminal 515 is a server used by a vendor 33 opening up shop in a cybermall or the like and has a reception unit 571, transmission unit 572, encryption unit 573, decryption unit 574, storage unit 575, control unit 576, and signature verification unit 577.

The reception unit 571 receives the information or request from the authentication apparatus 550 via the external network 509.

The transmission unit 572 transmits the information or request to the authentication apparatus 550 via the external network 509.

Further, the reception unit 571 and the transmission unit 572 transmit for example descriptive information of goods provided by the vendor 33 read from the storage unit 575 to the orderer terminal 511 via the network in response to access from the orderer terminal 511.

The encryption unit 573 encrypts the information or request by using the predetermined encryption key.

The decryption unit 574 decrypts the information or request by using the predetermined encryption key.

The storage unit 575 stores for example the secret key K_{33,S} produced by the vendor 33.

The control unit 576 centrally controls the processing of the components in the vendor terminal 515.

The signature verification unit 577 verifies the signature information produced by the authentication apparatus 550 by using for example the public key K_{40,P} of the network bank 540.

### [Authentication apparatus 550]

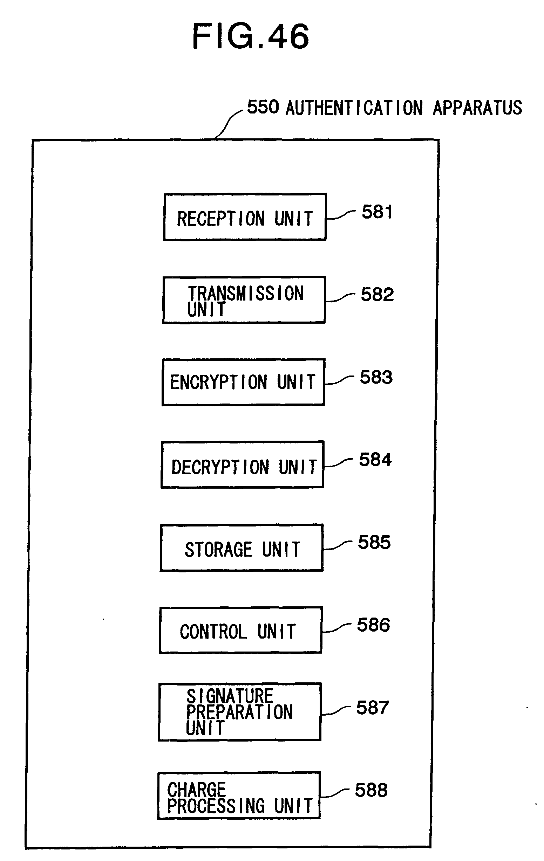

As shown in FIG. 46, the authentication apparatus 550 has a reception unit 581, transmission unit 582, encryption unit 583, decryption unit 584, storage unit 585, control unit 586, signature preparation unit 587, and charge processing unit 588.

Here, the reception unit 581 corresponds to the second receiving means of the 23rd aspect of the invention, the transmission unit 582 corresponds to the second transmitting means of the 23rd aspect of the invention, the storage unit 585 corresponds to the second storage means of the 23rd aspect of the invention, and the control unit 586 corresponds to the processing means of the 23rd aspect of the invention.

The reception unit 581 receives the information or request from the home gateway 512 and vendor terminal 515 via the external network 509.

The transmission unit 582 transmits the information or request to the home gateway 512 and the vendor terminal 515 via the external network 509.

The encryption unit 583 encrypts the information or request by using the predetermined encryption key.

The decryption unit 584 decrypts the information or request by using the predetermined encryption key.

The storage unit 585 stores the correspondence table of the personal key information k1 and the personal ID information ID1 of the orderer 31 with the address of the home gateway 512 when the orderer 31 contracts with the network bank 540. Further, the storage unit 585 stores for example the public key K_{31,P} corresponding to the secret key K_{31,S} produced by the orderer 31 and the public key K_{33,P} corresponding to the secret key K_{33,S} produced by the vendor 33 when the orderer 31 and the vendor 33 contract with the network bank 540.

The control unit 586 centrally controls the processing of the components in the authentication apparatus 550.

The signature preparation unit 587 produces the signature information by using the secret key K_{40,S} of the network bank 540.

The charge processing unit 588 performs the charge processing for authentication relating to the transaction by the orderer 31.

The detailed processing of the components of the authentication apparatus 550 will be described in the example of operation explained later.

Below, an explanation will be made of an example of operation of the transaction authentication system 501.

In the related example of operation, an explanation will be made of the case where the orderer 31 shown in FIG. 42 places an order for goods or services provided by the vendor 33 by operating the terminal 511₁ shown in FIG. 43.

Note that, as the prerequisite for starting the related example of operation, the following procedures and processing are carried out.

Namely, the orderer 31 and the network bank 540 conclude a predetermined contract, and the network bank 540 issues the personal key information k1 and the personal ID information ID1 to the orderer 31.

The network bank 540 stores the correspondence table of the personal key information k1, personal ID information ID1, and the address of the home gateway 512 in the storage unit 585 of the authentication apparatus 550 shown in FIG. 46. Here, the personal key information k1 is an identifier indicating personal information for example the contract number of the contractor (orderer 31) contracting with the network bank 540. Further, the personal ID information ID1 is an identifier indicating information relating to charging such as the bank account number of the orderer 31.

Further, the network bank 540 stores secret key K_{40,S} in the storage unit 585 of the authentication apparatus 550 shown in FIG. 46 and, at the same time, transmits the public key K_{40,P} corresponding to the related secret key K_{40,S} to the home gateway 512 and the vendor terminal 515. The home gateway 512 stores the public key K_{40,P} in the storage unit 565 shown in FIG. 44. The vendor terminal 515 stores the public key K_{40,P} in the storage unit 575 shown in FIG. 45.

Further, the vendor 33 and the network bank 540 conclude a predetermined contract, and the network bank 540 issues information Z specifying the vendor 33 and personal ID information ID2 to the vendor 33. The network bank 540 stores the correspondence table of the personal key information Z and the personal ID information ID2 in the storage unit 585 of the authentication apparatus 550 shown in FIG. 46.

Further, the apparatus ID information ID_{M1} to ID_{M4} received by the home gateway 512 via the internal network 13 from the terminals 511₁ to 511₄, turned on when the power of the home gateway 512 is turned on, are stored in the storage unit 565 shown in FIG. 44.

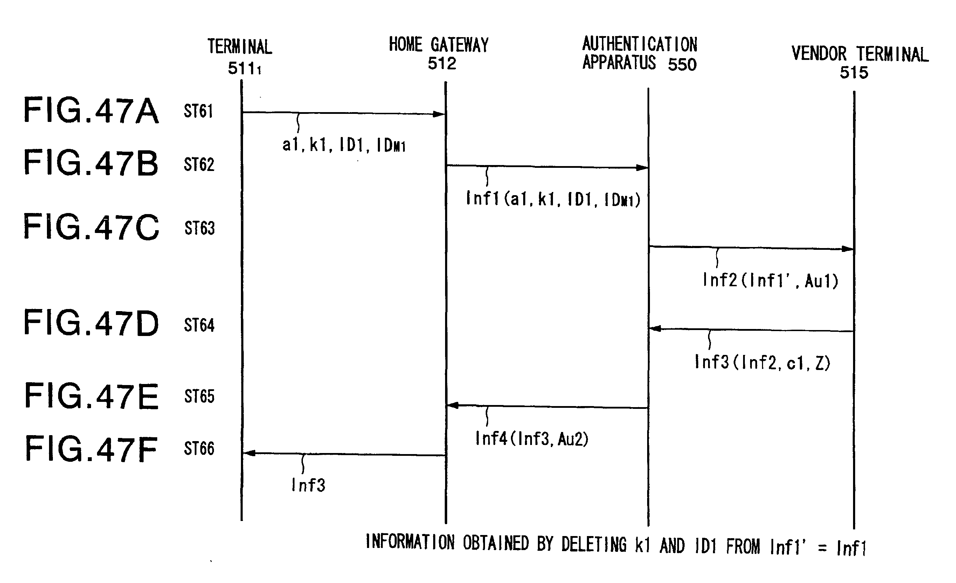

FIGS. 47A to 47F are views for explaining the example of operation of the transaction authentication system 501.

### Step ST61:

The orderer 31 shown in FIG. 42 inputs the order information a1 indicating the name, quantity, etc. of the goods to be ordered, the personal key information k1 of the orderer 31, and the personal ID information ID1 of the orderer 31 to the terminal 511₁ by operating the not illustrated operating means when ordering goods to the vendor 33, for example, a store on network. Note that, the order information a1 includes information specifying the vendor 33.

The terminal 511₁ transmits the related input order information a1, personal key information k1 of the orderer 31, and personal ID information ID1 of the orderer 31 and the apparatus ID information ID_{M1} read from the internal memory via the internal network 13 to the home gateway 512.

### Step ST62:

The home gateway 512 shown in FIG. 44 receives the order information a1, personal key information k1, personal ID information ID1, and apparatus ID information ID_{M1} at the internal network I/F 562 and encrypts all of them at the encryption unit 563.

The home gateway 512 transmits the authentication request Inf1 (request of the present invention) storing the related encrypted information from the external network I/F 561 shown in FIG. 44 via the external network 509 to the authentication apparatus 550 of the network bank 540 shown in FIG. 42.

### Step ST63:

The authentication apparatus 550 shown in FIG. 46 reads the secret key K_{40,S} of the network bank 540 from the storage unit 585 when the reception unit 581 receives the authentication request Inf1 from the home gateway 512 and decrypts the authentication request Inf1 by using the related secret key K_{40,S} at the decryption unit 584.

Next, the authentication apparatus 550 produces the signature information Au1 by using secret key K_{40,S}. read from the storage unit 585 for the information Inf1' obtained by deleting the personal key information k1 and the personal ID information ID1 from the decrypted authentication request Inf1 under the control of the control unit 586.

Next, the authentication apparatus 550 generates the request Inf2 storing the information Inf1' and signature information Au1.

Next, the encryption unit 583 encrypts the generated request Inf2 by using the public key K_{33,P} of the vendor 33 read from the storage unit 585 shown in FIG. 46, then transmits the same from the transmission unit 582 via the external network 509 to the vendor terminal 515.

### Step ST64:

The decryption unit 574 of the vendor terminal 515 decrypts the request Inf2 by using its own secret key K_{33,S} read from the storage unit 575 when the reception unit 571 receives the request Inf2 from the authentication apparatus 550.

Next, the signature verification unit 577 of the vendor terminal 515 verifies the signature information Au1 stored in the decrypted request Inf2 by using the public key K_{40,P} of the authentication apparatus 550 read from the storage unit 575.

The control unit 576 of the vendor terminal 515 stores the information Inf1' stored in the request Inf2 in the storage unit 575 shown in FIG. 45 when the legitimacy of the signature information Au1 is authenticated as a result of the verification by the signature verification unit. The vendor 33 generates the acceptance confirmation information c1 indicating the shipping schedule etc. of the goods or the like to the orderer 31 based on the order information a1 in the information Inf1'.

Next, the control unit 576 generates the reply Inf3 storing the request Inf2, acceptance confirmation information c1, and information Z specifying itself.

Next, the transmission unit 572 of the vendor terminal 515 encrypts the generated reply Inf3 at the encryption unit 573 by using the public key K_{40,P} of the network bank 540 read from the storage unit 575, then transmits the same from the transmission unit 572 via the external network 509 to the authentication apparatus 550.

The vendor 33 ships the goods or the like ordered by the orderer 31 to the orderer 31 or provides the service ordered by the orderer 31 to the orderer 31 based on the order information a1 in the information Inf1' stored in the request Inf2.

### Step ST65:

When the reception unit 581 receives the reply Inf3 from the vendor terminal 515, the decryption unit 584 of the authentication apparatus 550 decrypts Inf3 by using the secret key K_{40,S} read from the storage unit 585, produces the predetermined transaction log information by using the order information a1 stored in the request Inf1 and the information Z of the vendor 33 stored in the related decrypted Inf3, and stores this in the storage unit 585. The related log information is used when the network bank 540 accounts the orderer 31.

Further, the signature preparation unit 587 of the authentication apparatus 550 produces the signature information Au2 by using the secret key K_{40,S} for the reply Inf3 received at step ST64.

Next, the control unit 586 of the authentication apparatus 550 produces the authentication reply Inf4 storing the reply Inf3 and the signature information Au2.

Next, the encryption unit 583 of the authentication apparatus 550 encrypts the produced authentication reply Inf4 by using the public key K_{31,P} of the orderer 31 read from the storage unit 585.

Then, the related encrypted reply Inf4 is transmitted from the transmission unit 582 via the external network 509 to the home gateway 512 by using the address of the home gateway 512 stored in the storage unit 585 shown in FIG. 46 in correspondence to the personal ID information ID1.

In the home gateway 512, the received authentication reply Inf4 is decrypted at the decryption unit 564 by using the secret key K_{31,S} of the orderer 31 read from the storage unit 565 shown in FIG. 44.

Next, the signature verification unit 566 of the home gateway 512 verifies the signature information Au2 stored in the related decrypted authentication reply Inf4 by using the public key K_{40,P} of the network bank 540 read from the storage unit 565 and, at the same time, decides whether or not the apparatus ID information ID_{M1} described in the order information a1 in the Inf4 coincides with one of the apparatus ID information ID_{M1} to ID_{M4} stored in the storage unit 565 shown in FIG. 44. In the related example of operation, it is decided that they coincide, and it is confirmed that the related transaction between the orderer 31 and the vendor 33 was legitimately performed.

### Step ST66:

The home gateway 512 transmits the Inf3 included in the reply Inf4 via the internal network 13 to the terminal 511₁.

The terminal 511₁ displays the acceptance confirmation information c1 stored in the related received Inf3 on a display or the like.

Below, an explanation will be made of the operation of the transaction authentication system 501 in the case where an illegitimate party 55 shown in FIG. 42 illegitimately acquiring the personal ID1 and personal key k1 of the orderer 31 transmits the authentication request to the authentication apparatus 550 by using its own terminal, that is, the illegitimate party terminal 556.

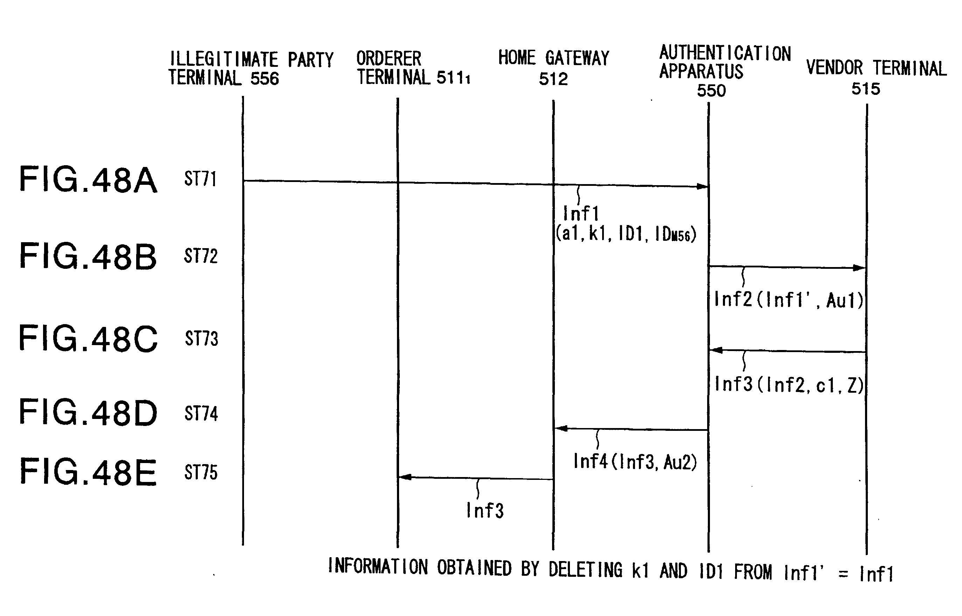

FIGS. 48A to 48E are views for explaining the related operation of the transaction authentication system 501.

### Step ST71:

The illegitimate party 55 shown in FIG. 42 inputs the order information a1 indicating the name and quantity etc. of goods to be ordered, the illegitimately acquired personal key information k1 of the orderer 31, and the illegitimately acquired personal ID information ID1 of the orderer 31 to the illegitimate party terminal 556 by operating a not illustrated operating means when ordering goods from the vendor 33.

The illegitimate party terminal 556 encrypts the order information a1, personal key information k1, personal ID information ID1, and apparatus ID information ID_{M56} read from the internal memory and transmits the authentication request Inf1 storing the related encrypted information via the external network 509 to the authentication apparatus 550 of the network bank 540 shown in FIG. 42.

The authentication apparatus 550 shown in FIG. 46 performs processing similar to that at step ST62 explained above for the related authentication request Inf1 when the reception unit 581 receives the authentication request Inf1 from the illegitimate party terminal 556.

### Step ST72:

The processing of step ST72 is the same as the processing of step ST63 explained above.

### Step ST73:

The processing of step ST73 is the same as the processing of step ST64 explained above.

### Step ST74:

The processing of step ST74 is the same as the processing of step ST65 explained above.

### Step ST75:

The processing of step ST75 is the same as the processing of step ST66 explained above.

In this way, according to the transaction authentication system 501, even when the illegitimate party 55 transmits the authentication request Inf1 to the authentication apparatus 550 by using the illegitimate party terminal 556, the reply thereof, that is, the authentication reply Inf4, is transmitted to the home gateway 512 based on the address of the home gateway 512 stored in the storage unit 585 of the authentication apparatus 550 in correspondence to the personal ID information ID1.

By this, in the home gateway 512, it is decided that the apparatus ID information ID_{M56} included in the authentication reply Inf4 does not coincide with the apparatus ID information ID_{M1} to ID_{M4} stored in the storage unit 565 shown in FIG. 44, so it can be detected that an illegitimate authentication request was made using the personal ID information ID1 of the orderer 31.

For this reason, according to the transaction authentication system 501, illegitimate transactions using the personal ID information of the others can be effectively suppressed.

As explained above, according to the transaction authentication system 501, the reliability of electronic commercial transactions can be improved, the number of the contractors (transactors) contracting with the related authentication manager can be increased, the cost such as the membership fee charged to each contractor can be lower, and it becomes possible to further promote electronic commercial transactions.

Further, according to the transaction authentication system 501, for example, even when the terminal 511₁ breaks down after transmitting the authentication request Inf1 to the authentication apparatus 550 in response to the request from the terminal 511₁ shown in FIG. 42 and FIG. 43, processing in accordance with the authentication reply Inf4 can be adequately carried out in response to the related authentication request Inf1.

Further, according to the transaction authentication system 501, by imparting a function relating to the security accompanied with communication via the external network 509 to the home gateway 512, the level of the security function provided in the terminals 511₁ to 511₄ can be lowered, so the configuration of the terminals 511₁ to 511₄ can be made simpler and more inexpensive.

The present invention is not limited to the above embodiment.

For example, in the above embodiment, the authentication apparatus 550 performing the authentication processing was illustrated as the second communication apparatus of the present invention, but the processing performed by the second communication apparatus may be charge processing too other than the above.

Further, in the above embodiment, the case where the network bank 540 performed the work for authenticating transactions by using the authentication apparatus 550 was illustrated, but it is also possible if a manager different from the network bank 540 performs the work for authenticating transactions by using the authentication apparatus 550.

Further, in the above embodiment, the case where the apparatus ID information of the terminals 511₁ to 511₄ was transmitted to the authentication apparatus 550 was illustrated, but it is also possible to transmit the apparatus ID information of the home gateway 512 to the authentication apparatus 550.

### Ninth Embodiment

Below, an explanation will be made of a transaction authentication system according to this embodiment of the present invention.

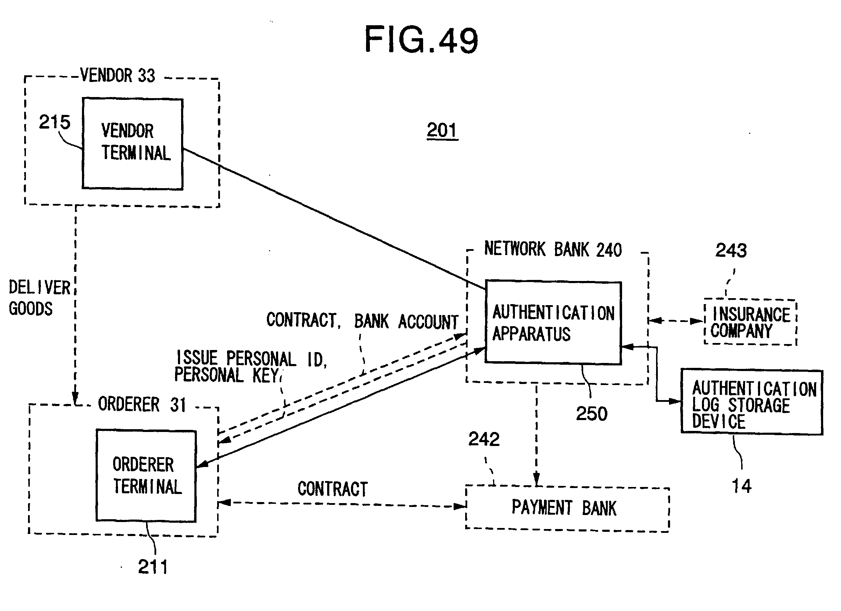

FIG. 49 is a view of the overall configuration of a transaction authentication system 201 of the present embodiment.

As shown in FIG. 49, the transaction authentication system 201, for example, comprises an orderer terminal 211 of the orderer 31, a vendor terminal 215 of the vendor 33, an authentication apparatus 250 of a network bank 240, and the authentication log storage device 14 storing the authentication log connected via a network (communication network) such as the Internet and authenticates the legitimacy of the transaction between the orderer 31 and the vendor 33 at the authentication apparatus 250.

Note that the numbers of the orderer terminals 211 and the vendor terminals 215 connected to the related network may be any numbers.

Further, in the present embodiment, the personal ID information and personal key information of the orderer 31 are not sent to the vendor 33.

The present embodiment is an embodiment corresponding to the 25th to 29th aspects of the invention.

The orderer terminal 211 corresponds to the processing apparatus of the 27th aspect of the invention, while the authentication apparatus 250 corresponds to the authentication apparatus of the present invention.

In the present embodiment, for example, the orderer 31, vendor 33, and the network bank 240 conclude a contract relating to the authentication. Further, the orderer 31 and the accounting bank 242, for example, conclude a contract indicating that a transaction authenticated by the network bank 240 is to be accounted. Further, the network bank 240 and an insurance company 243 conclude an insurance contract for damage occurring due to the electronic commercial transaction concerned in the network bank 240.

Below, an explanation will be made of the apparatuses comprising the transaction authentication system 201.

### [Orderer terminal 211]

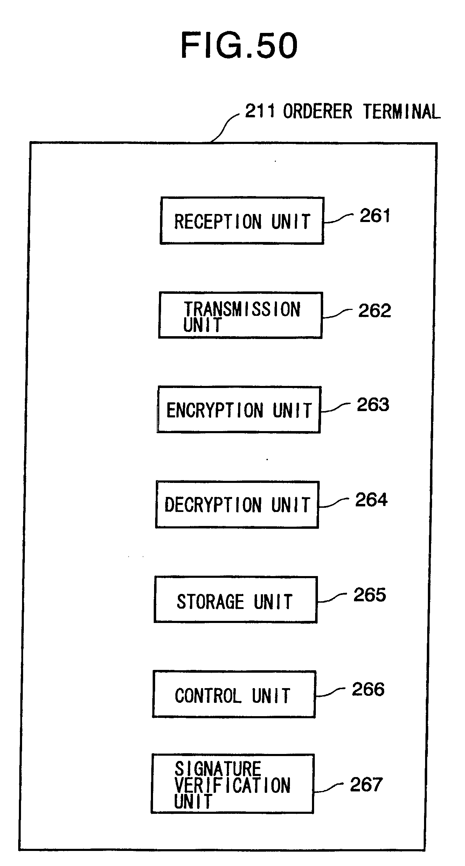

As shown in FIG. 50, the orderer terminal 211 is equipment, for example, a personal computer, set top box, or game machine provided in the home of the orderer 31 and has a reception unit 261, transmission unit 262, encryption unit 263, decryption unit 264, storage unit 265, control unit 266, and signature verification unit 267.

Note that, the orderer terminal 211 may also have a bio-authentication unit for authenticating the orderer 31 as the legitimate user by comparing the information obtained from the physical characteristics of the orderer 31 such as a fingerprint with information indicating the physical characteristics stored in the storage unit 265 in advance when used by for example the orderer 31.

Here, the reception unit 261 corresponds to the receiving means of the 27th aspect of the invention, the transmission unit 262 corresponds to the transmitting means of the 27th aspect of the invention, and the control unit 266 corresponds to the controlling means of the 27th aspect of the invention.

The reception unit 261 receives the information or request from the authentication apparatus 250 via the network.

The transmission unit 262 transmits the information or request to the authentication apparatus 250 via the network.

Further, the reception unit 261 and the transmission unit 262 transmit and receive the information or request with the related server via the network when accessing the descriptive information of goods etc. provided by the vendor 33.

The encryption unit 263 encrypts the information or request by using the predetermined encryption key.

The decryption contract 264 decrypts the information or request by using the predetermined encryption key.

The storage unit 265 stores the apparatus ID information ID_{M} (apparatus identification information of the present invention) attached to the vendor terminal 215 at the manufacturer, secret key K_{33,S} produced by the orderer 31, etc.

The signature verification unit 267 verifies for example the signature information produced by the authentication apparatus 250 by using the public key K_{40,P} of the network bank 240.

The control unit 266 centrally controls the processing of the components in the orderer terminal 211.

The control unit 266 encrypts all of the order information a1, personal key information k1 (personal identification information of the present invention), personal ID information ID1 (personal identification information of the present invention), and the apparatus ID information ID_{M} read from the storage unit 265 or encrypts individual information in accordance with for example the operation by the orderer 31 and generates the authentication request Inf1 storing the related encrypted information.

Further, for example, when receiving the authentication reply Inf4 from the authentication apparatus 250 after transmitting the authentication request Inf1 to the authentication apparatus 250, the control unit 266 detects whether or not the authentication apparatus ID information ID_{M} indicating the transmitting apparatus of the authentication request included in the authentication reply Inf4 and the apparatus ID information ID_{M} of the orderer terminal 211 read from the storage unit 265 coincide. When they coincide, it decides that a legitimate transaction is being carried out, while when they do not coincide, it decides that an illegitimate transaction is being carried out and notifies this to at least one of the vendor terminal 215 and the authentication apparatus 250.

### [Vendor terminal 215]

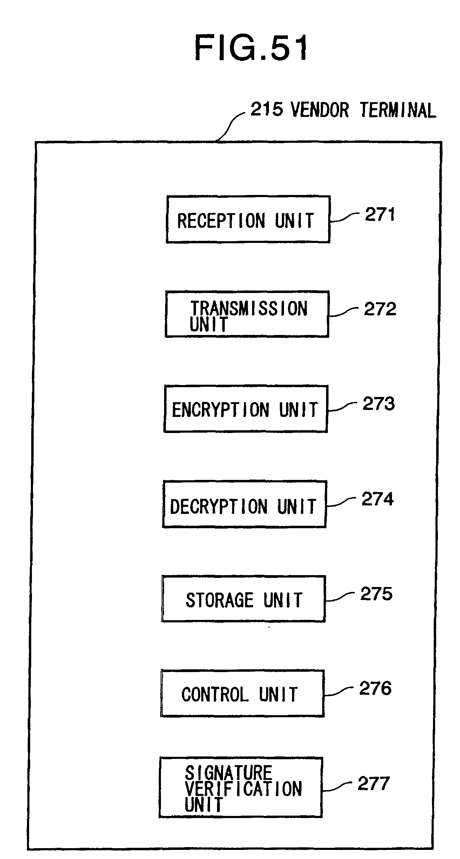

As shown in FIG. 51, the vendor terminal 215 is a server used by a vendor 33 opening up shop in a cybermall or the like and has a reception unit 271, transmission unit 272, encryption unit 273, decryption unit 274, storage unit 275, control unit 276, and signature verification unit 277.

The reception unit 271 receives the information or request from the authentication apparatus 250 via the network.

The transmission unit 272 transmits the information or request to the authentication apparatus 250 via the network.

Further, the reception unit 271 and the transmission unit 272 transmit for example the descriptive information of goods provided by the vendor 33 read from the storage unit 275 to the orderer terminal 211 via the network in response to access from the orderer terminal 211.

The encryption unit 273 encrypts the information or request by using the predetermined encryption key.

The decryption unit 274 decrypts the information or request by using the predetermined encryption key.

The storage unit 275 stores for example the secret key K_{33,S} produced by the vendor 33.

The control unit 276 centrally controls the processing of the components in the vendor terminal 215.

The signature verification unit 277 verifies for example the signature information produced by the authentication apparatus 250 by using the public key K_{40,P} of the network bank 240.

### [Authentication apparatus 250]

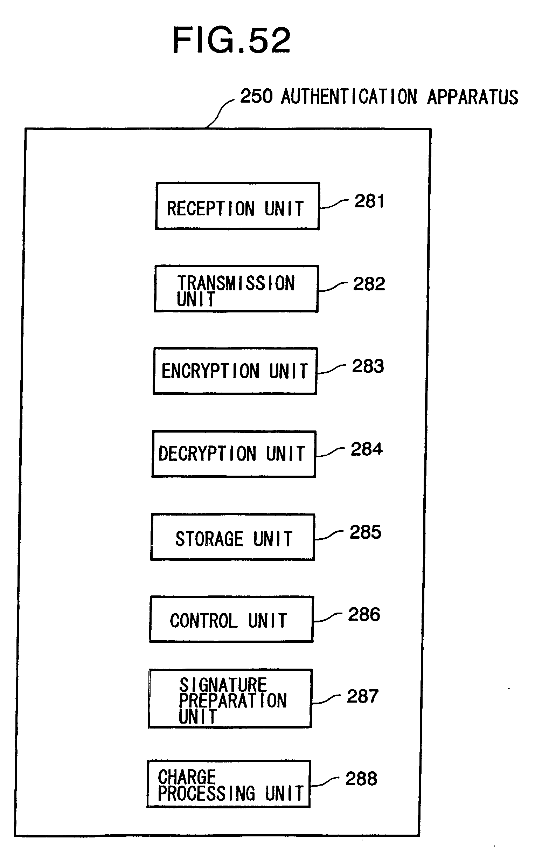

As shown in FIG. 52, the authentication apparatus 250 has a reception unit 281, transmission unit 282, encryption unit 283, decryption unit 284, storage unit 285, control unit 286, signature preparation unit 287, and charge processing unit 288.

Here, the reception unit 281 corresponds to the receiving means of the 25th and 26th aspects of the invention, the transmission unit 282 corresponds to the transmitting means of the 25th and 26th aspects of the invention, the storage unit 285 corresponds to the storage means of the 25th and 26th aspects of the invention, and the control unit 286 corresponds to the authentication processing means of the 25th and 26th aspects of the invention.

The reception unit 281 receives the information or request from the orderer terminal 211 and the vendor terminal 215 via the network.

The transmission unit 282 transmits the information or request to the orderer terminal 211 and the vendor terminal 215 via the network.

The encryption unit 283 encrypts the information or request by using the predetermined encryption key.

The decryption unit 284 decrypts the information or request by using the predetermined encryption key.

The storage unit 285 stores the correspondence table of the personal key information k1 and personal ID information ID1 of the orderer 31 and the address of the orderer terminal 211 (or address, call number, or the like of the set top box of a home with the orderer terminal 211 disposed therein) when the orderer 31 contracts with the network bank 240. Further, the storage unit 285 stores for example the public key K_{31,P} corresponding to the secret key K_{31,S} produced by the orderer 31 and the public key K_{33,P} corresponding to the secret key K_{33,S} produced by the vendor 33 when the orderer 31 and the vendor 33 contract with the network bank 240.

The control unit 286 centrally controls the processing of the components in the authentication apparatus 250.

The signature preparation unit 287 produces the signature information by using the secret key K_{40,S} of the network bank 240.

The charge processing unit 288 performs the charge processing for the authentication relating to the transaction by the orderer 31.

The detailed processing of the components of the authentication apparatus 250 will be described in the example of operation explained later.

Below, an explanation will be made of an example of operation of the transaction authentication system 201.

As a prerequisite for starting the related example of operation, the orderer 31 and the network bank 240 conclude a predetermined contract, and the network bank 240 issues the personal key information k1 and the personal ID information ID1 to the orderer 31.

The network bank 240 stores the correspondence table of the personal key information k1 and personal ID information ID1 and the address of the orderer terminal 211 (or address, call number, or the like of the set top box of a home with the orderer terminal 211 disposed therein) in the storage unit 285 of the authentication apparatus 250 shown in FIG. 52. Here, the personal key information k1 is an identifier indicating personal information for example the contract number of the contractor (orderer 31) contracting with the network bank 240. Further, the personal ID information ID1 is an identifier indicating information relating to the charging such as the bank account number of the orderer 31.

Further, the network bank 240 stores secret key K_{40,S} in the storage unit 285 of the authentication apparatus 250 shown in FIG. 52 and, at the same time, transmits the public key K_{40,P} corresponding to the related secret key K_{40,S} to the orderer terminal 211 and the vendor terminal 215. The orderer terminal 211 stores the public key K_{40,P} in the storage unit 265 shown in FIG. 50. The vendor terminal 215 stores the public key K_{40,P} in the storage unit 275 shown in FIG. 51.

Further, the vendor 33 and the network bank 240 concludes a predetermined contract, and the network bank 240 issues information Z specifying the vendor 33 and the personal ID information ID2 to the vendor 33. The network bank 240 stores the correspondence table of the information Z and the personal ID information ID2 in the storage unit 285 of the authentication apparatus 250 shown in FIG. 52.

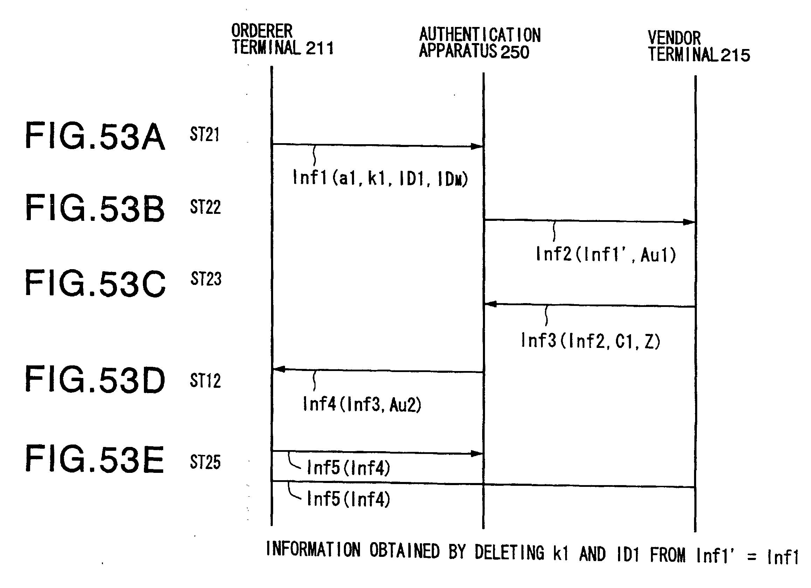

FIGS. 53A to 53E are views for explaining an example of operation of the transaction authentication system 201.

### Step ST21:

The orderer 31 shown in FIG. 49 inputs the order information a1 indicating the name, quantity, etc. of the goods to be ordered, the personal key information k1 of the orderer 31, and the personal ID information ID1 of the orderer 31 to the orderer terminal 211 by operating a not illustrated operating means when ordering goods from for example a store on the network, that is, the vendor 33. Note that, the order information a1 includes information specifying the vendor 33.

Next, the encryption unit 263 of the orderer terminal 211 shown in FIG. 50 encrypts all of the order information a1, personal key information k1, personal ID information ID1, and the apparatus ID information ID_{M} read from the storage unit 265 by using the public key K_{40,P} of the network bank 240 read from the storage unit 265 and transmits the authentication request Inf1 (first request of the present invention) storing the related encrypted information from the transmission unit 262 via the network to the authentication apparatus 250 of the network bank 240 shown in FIG. 49.

### Step ST22:

The authentication apparatus 250 shown in FIG. 52 reads the secret key K_{40,S} of the network bank 240 from the storage unit 285 when the reception unit 281 receives the authentication request Inf1 from the orderer terminal 211 and decrypts the authentication request Inf1 by using the related secret key K_{40,S} at the decryption unit 284.

Next, the authentication apparatus 250 produces the signature information Au1 by using the secret key K_{40,S} read from the storage unit 285 for the information Inf1' obtained by deleting the personal key information k1 and personal ID information ID1 from the decrypted authentication request Inf1 under the control of the control unit 286.

Next, the authentication apparatus 250 generates the request Inf2 storing the information Inf1' and signature information Au1.

Next, the encryption unit 283 encrypts the generated request Inf2 by using the public key K_{33,P} of the vendor 33 read from the storage unit 285 shown in FIG. 52, then transmits the same from the transmission unit 282 via the network to the vendor terminal 215.

### Step ST23:

The decryption unit 274 of the vendor terminal 215 decrypts the request Inf2 by using its own secret key K_{33,S} read from the storage unit 275 when the reception unit 271 receives the request Inf2 from the authentication apparatus 250.

Next, the signature verification unit 277 of the vendor terminal 215 verifies the signature information Au2 stored in the decrypted request Inf2 by using the public key K_{40,P} of the authentication apparatus 250 read from the storage unit 275.

The control unit 276 of the vendor terminal 215 stores the information Inf1' stored in the request Inf2 in the storage unit 275 shown in FIG. 51 when the legitimacy of the signature information Au1 is confirmed as a result of the verification by the signature verification unit. The vendor 33 generates the acceptance confirmation information c1 indicating the shipping schedule of goods etc. to the orderer 31 based on the order information a1 in the information Inf1'.

Next, the control unit 276 generates the reply Inf3 storing the request Inf2, acceptance confirmation information c1, and information Z specifying itself.

Next, the transmission unit 272 of the vendor terminal 215 encrypts the generated reply Inf3 at the encryption unit 273 by using the public key K_{40,P} of the network bank 240 read from the storage unit 275, then transmits the same from the transmission unit 272 via the network to the authentication apparatus 250.

The vendor 33 sends for example the goods ordered by the orderer 31 to the orderer 31 or provides the service ordered by the orderer 31 to the orderer 31 based on the order information a1 in the information Inf1' stored in the request Inf2.

### Step ST24:

The decryption unit 284 of the authentication apparatus 250 decrypts Inf3 by using the secret key K_{40,S}. read from the storage unit 285 when the reception unit 281 receives the reply Inf3 from the vendor terminal 215, produces the predetermined transaction log information by using the order information a1 stored in the request Inf1 and the information Z of the vendor 33 stored in the related decrypted Inf3, and stores this in the storage unit 285. The related log information is used when the network bank 240 accounts the orderer 31.

Further, the signature preparation unit 287 of the authentication apparatus 250 produces the signature information Au2 by using the secret key K_{40,S} for the reply Inf3 received at step ST23.

Next, the control unit 286 of the authentication apparatus 250 produces the authentication reply Inf4 storing the reply Inf3 and the signature information Au2.

Next, the encryption unit 283 of the authentication apparatus 250 encrypts the produced authentication reply Inf4 by using the public key K_{31,P} of the orderer 31 read from the storage unit 285, then transmits the same from the transmission unit 282 via the network to the orderer terminal 211.

### Step ST25:

At the orderer terminal 211, the received authentication reply Inf4 is decrypted at the decryption unit 264 by using the secret key K_{31,S} of the orderer 31 read from the storage unit 265 shown in FIG. 50.

Next, the signature verification unit 266 of the orderer terminal 211 verifies the signature information Au2 stored in the related decrypted authentication reply Inf4 by using the public key K_{40,P} of the network bank 240 read from the storage unit 265 and, at the same time, decides if the apparatus ID information ID_{M} described in the order information a1 in Inf4 coincides with its own apparatus ID information ID_{M} stored in the storage unit 265 of the orderer terminal 211 shown in FIG. 50. When deciding that they coincide, it confirms that the related transaction with the vendor 33 was legitimately carried out. The orderer terminal 211 transmits for example the illegitimate order notification Inf5 storing the authentication reply Inf4 to at least one of the authentication apparatus 250 and the vendor terminal 215 when deciding that the apparatus ID information ID_{M} described in the order information a1 in Inf4 does not coincide with its own apparatus ID information ID_{M} stored in the storage unit 265 of the orderer terminal 211 shown in FIG. 50.

Due to this, the authentication apparatus 250 and the vendor terminal 215 cancel the order corresponding to the authentication request Inf1 issued by the orderer terminal 211.

Further, the orderer terminal 211 can transmit the illegitimacy occurrence notification Inf5 to the payment bank 242 shown in FIG. 49 too.

As explained above, according to the transaction authentication system 201, by automatically inserting the apparatus ID information ID_{M} of the apparatus issuing the authentication request into the authentication request Inf1 in addition to the personal ID information ID1, transmitting the authentication reply Inf4 including the authentication result to the address of the orderer terminal 211 used by the orderer 31 included in the authentication request Inf1 at the authentication apparatus 250, and storing the apparatus ID information ID_{M} of the apparatus issuing the related authentication request in the related authentication reply Inf4, the orderer terminal 211 can detect that an illegitimate authentication request (impersonation) using its own personal ID information ID1 occurring by deciding whether or not the apparatus ID information ID_{M} of the apparatus issuing the related authentication request stored in the authentication reply Inf4 and its own apparatus ID information ID_{M} coincide.

As a result, according to the transaction authentication system 201, illegitimate transactions using the personal ID information of others can be effectively suppressed.

As explained above, according to the transaction authentication system 201, the reliability of electronic commercial transactions can be improved, the number of the contractors (transactors) contracting with the related authentication manager can be increased, the cost such as the membership fee charged to each contractor can be lower, and it becomes possible to further promote electronic commercial transactions.

The present invention is not limited to the above embodiment.

For example, in the above embodiment, the case where it was decided at the orderer terminal 211 if the apparatus ID information ID_{M} described in the order information a1 in the authentication reply Inf4 coincided with its own apparatus ID information ID_{M} stored in the storage unit 265 of the orderer terminal 211 shown in FIG. 50 and, when it was decided that they did not coincide, for example, an illegitimate order notification Inf5 storing the authentication reply Inf4 was transmitted to at least one of the authentication apparatus 250 and the vendor terminal 215 was illustrated, but for example, it is also possible to display that they do not coincide (indicating that an illegitimate transaction was carried out) on the display or the like of the orderer terminal 211 and notify this to the orderer 31.

Further, it is also possible not to have the orderer terminal 211 decide the coincidence of the apparatus ID information ID_{M}, but have the orderer 31 decide it.

Further, when the home gateway is disposed in a home with the orderer terminal 211 disposed therein, it is also possible to register the apparatus ID information ID_{M} of the orderer terminal 211 in the home gateway and decide coincidence of the apparatus ID information ID_{M} at the home gateway when the home gateway receives the authentication reply Inf4 from the authentication apparatus 250.

Further, in the above embodiment, the case where the network bank 240 performed the work for authenticating transactions by using the authentication apparatus 250 was illustrated, but it is also possible if the manager different from the network bank 240 performs the work for authenticating transactions by using the authentication apparatus 250.

Further, in the above embodiment, the case where the authentication request Inf1 including the encrypted order information a1, personal key information k1, personal ID information ID1, and apparatus ID information ID_{M} was transmitted from the orderer terminal 211 to the authentication apparatus 250 as in step ST21 shown in FIG. 53A was illustrated, but it is also possible to transmit the authentication request Inf1 including the order information a1, personal key information k1, and apparatus ID information ID_{M} from the orderer terminal 211 to the authentication apparatus 250. When doing this, the information relating to the charging, that is, the personal ID information ID1, is not transmitted via the network, so illegitimate acquisition and misuse of personal ID information ID1 on the network can be avoided.

Further, in the above embodiment, the case where all of the order information a1, personal key information k1, personal ID information ID1, and the apparatus ID information ID_{M} read from the storage unit 265 was encrypted by using the predetermined encryption key read from the storage unit 265 at the encryption unit 263 of the orderer terminal 211 shown in FIG. 50 was illustrated, but it is also possible to individually encrypt each of the order information a1, personal key information k1, personal ID information ID1, and apparatus ID information ID_{M} read from the storage unit 265.

### 10th Embodiment

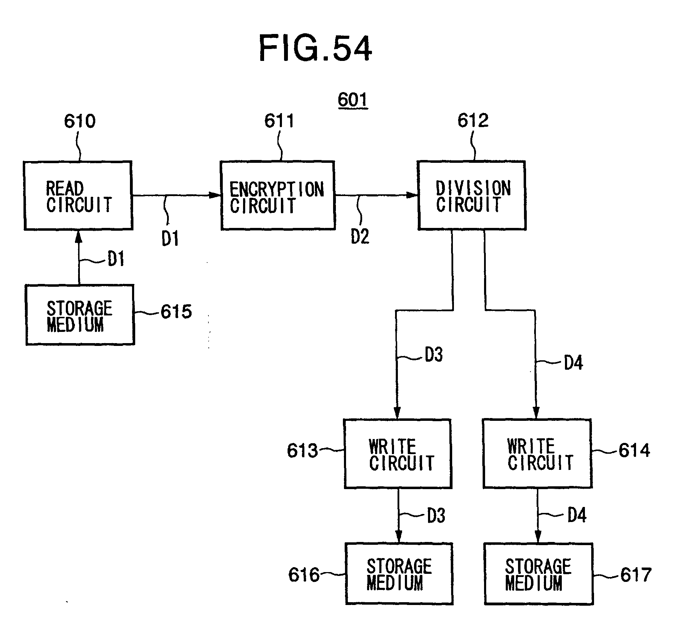

FIG. 54 is a view of the configuration of an information storage device 601 of the present embodiment.

As shown in FIG. 54, the information storage device 601 has a read circuit 610, encryption circuit 611, information division circuit 612, and write circuits 613 and 614.

The present embodiment is an embodiment corresponding to the 30th, 32nd, and 34th aspects of the invention.

The information storage device 601 encrypts the personal information D1 read from the storage medium 615, and then divides each to two modules D3 and D4 independently maintaining the confidentiality of the personal information D1, writes the module D3 into the storage medium 616, and writes the module D4 into the storage medium 617.

In the present embodiment, the storage media 615, 616, and 617 are storage media such as HDD's, portable CD-ROMs, floppy disks, and PC cards.

The read circuit 610 outputs the personal information D1 read from the storage medium 615 to the encryption circuit 611.

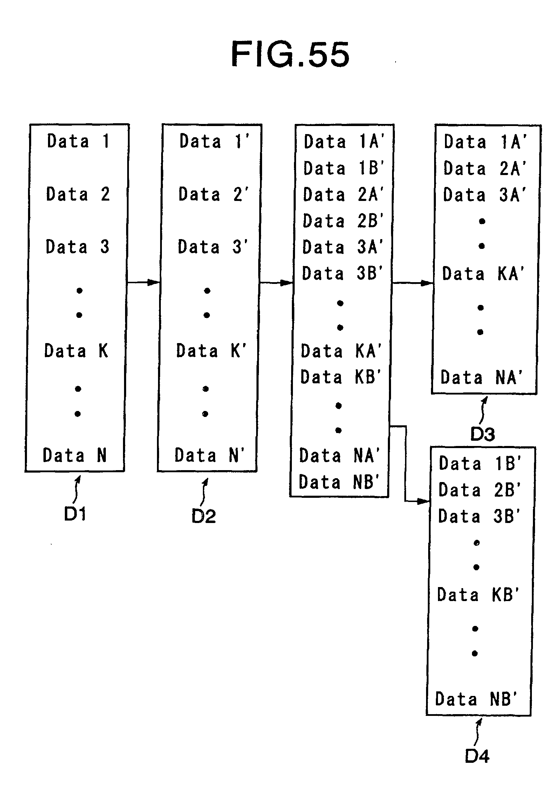

The personal information D1 is comprised of information Data1 to DataN as shown in FIG. 55.

Further, the personal information D1 is information comprising confidentiality, for example, the personal ID information and code number of the user, log information of transactions, and name, address, carrier, and occupation of the user.

The encryption circuit 611 encrypts the personal information D1 input from the read circuit 610 by using the predetermined encryption key to generate personal information D2 and outputs this to the information division circuit 612.

The encrypted personal information D2 is comprised of information Data1' to DataN' obtained by encrypting the information Data1 to DataN.

The information division circuit 612 divides the encrypted personal information D2 input from the encryption circuit 611 to two modules D3 and D4 independently maintaining the confidentiality of the personal information D1, outputs the module D3 to the write circuit 613, and outputs the module D4 to the write circuit 614.

As shown in FIG. 55, the information division circuit 612 divides the information Data1' to DataN' in the information D2 to information Data1A' and Data1B', information Data2A' and Data2B', information Data3A' and Data3B', .... information DataKA' and DataKB', ..... information DataNA' and DataNB'.

Then, the information division circuit 612 outputs the module D3 comprised of the information Data1A', Data2A', Data3A', ...., DataKA', ...., DataNA' to the write circuit 613.

Further, the information division circuit 612 outputs the module D4 comprised of the information Data1B', Data2B', Data3B', ...., DataKB', ...., DataNB' to the write circuit 614.

The write circuit 613 writes the module D3 input from the information division circuit 612 into the storage medium 616.

The write circuit 614 writes the module D4 input from the information division circuit 612 into the storage medium 617.

Below, an explanation will be made of the operation of the information storage device 601.

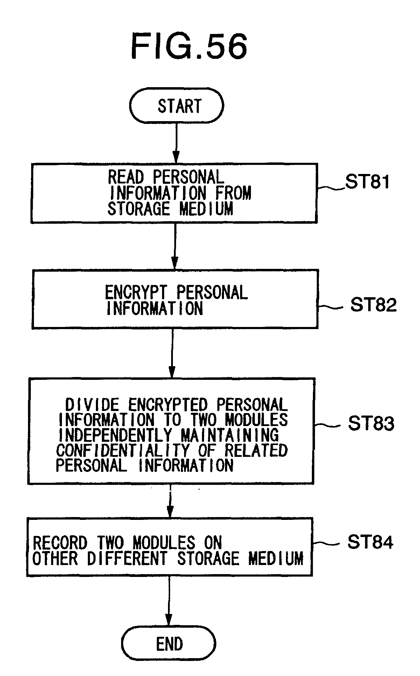

FIG. 56 is a flowchart for explaining the operation of the information storage device 601.

### Step ST81:

By the read circuit 610, the personal information D1 shown in FIG. 55 is read from the storage medium 615 and output to the encryption circuit 611.

### Step ST82:

The encryption circuit 611 encrypts the personal information D1 input from the read circuit 610 by using the predetermined encryption key, generates the personal information D2 shown in FIG. 55, and outputs the related personal information D2 to the information division circuit 612.

### Step ST83:

The information division circuit 612 divides the personal information D2 input from the encryption circuit 611 to two modules D3 and D4 shown in FIG. 55 independently maintaining the confidentiality of the personal information D1.

Then, the module D3 is output from the information division circuit 612 to the write circuit 613, and the module D4 is output from the information division circuit 612 to the write circuit 614.

### Step ST84:

The write circuit 613 writes the module D3 into the storage medium 616.

The write circuit 614 writes the module D4 into the storage medium 617.

As explained above, according to the information storage device 601, as shown in FIG. 55, the personal information D1 is encrypted, then divided to two modules D3 and D4 independently maintaining the confidentiality of the personal information D1. The modules D3 and D4 are recorded on the storage media 616 and 617 physically independent from each other.

For this reason, if the storage media 616 and 617 are separately stored, even if one of the storage media 616 and 617 is stolen and the module recorded on the stolen storage medium is decrypted by the thief, the confidentiality of the personal information D1 is maintained.

### 11th Embodiment

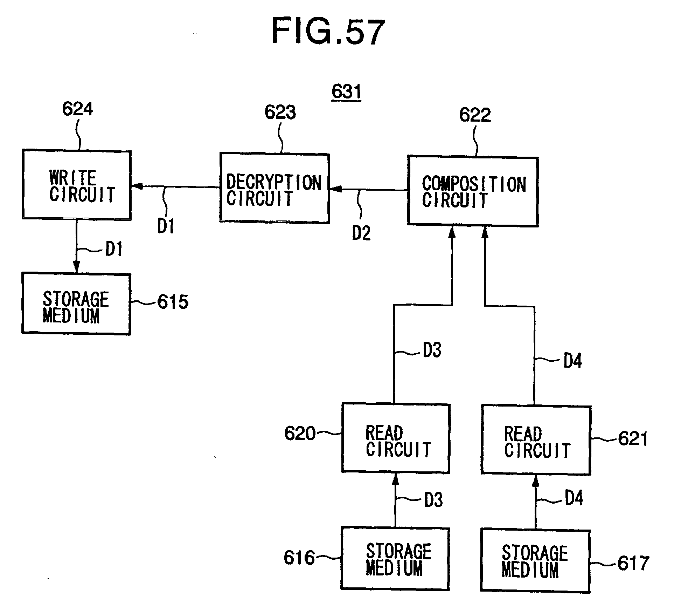

FIG. 57 is a view of the configuration of an information restoration device 631 of the present embodiment.

The information restoration device 631 restores the original personal information D1 from the personal information recorded on the storage media 616 and 617 in a manner divided by the information storage device 601 of the fourth embodiment.

The present embodiment is an embodiment corresponding to the 31st and 33rd aspects of the invention.

As shown in FIG. 57, the information restoration device 631 has read circuits 620 and 621, an information composition circuit 622, decryption circuit 623, and write circuit 624.

In FIG. 57, the storage media 616 and 617 go through the processing shown in FIG. 56 explained in the 10th embodiment and are recorded with the modules D3 and D4.

The read circuit 620 outputs the module D3 read from the storage medium 616 to the information composition circuit 622.

The read circuit 621 outputs the module D4 read from the storage medium 617 to the information composition circuit 622.

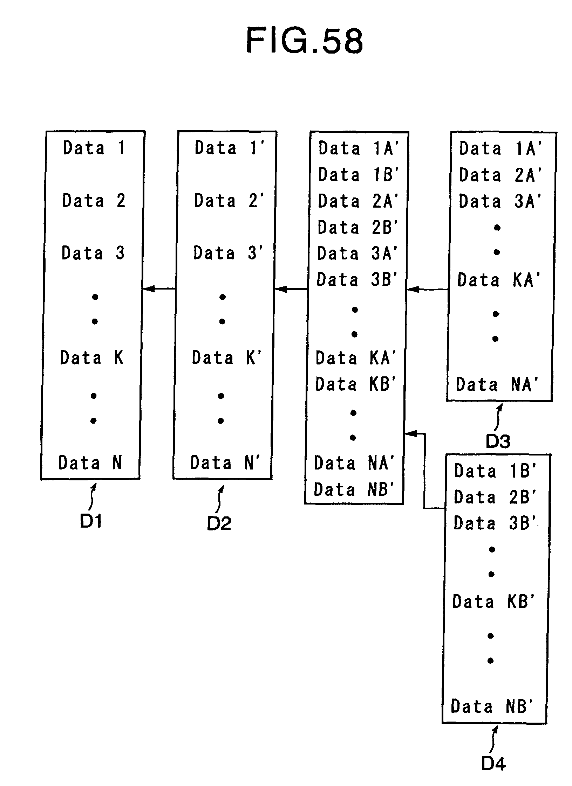

The information composition circuit 622 combines the module D3 input from the read circuit 620 and the module D4 input from the read circuit 621 to generate the personal information D2 and outputs this to the decryption circuit 623 as shown in FIG. 58.

The decryption circuit 623 decrypts the personal information D2 input from the information composition circuit 622 by using the predetermined decryption key to generate the personal information D1 and outputs this to the write circuit 624.

The write circuit 624 writes the personal information D1 input from the decryption circuit 623 into the storage medium 615.

Below, an explanation will be made of the operation of the information restoration device 631.

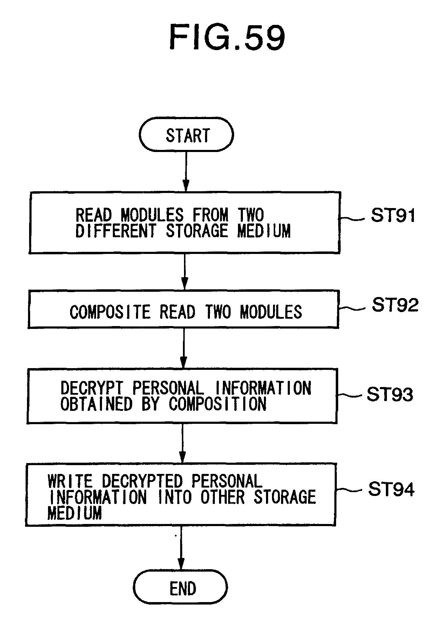

FIG. 59 is a flowchart for explaining the operation of the information restoration device 631.

### Step ST91:

The read circuit 620 reads the module D3 shown in FIG. 58 from the storage medium 616 and outputs it to the information composition circuit 622.

Further, the read circuit 621 reads the module D4 shown in FIG. 58 from the storage medium 617 and outputs it to the information composition circuit 622.

### Step ST92:

The information composition circuit 622, as shown in FIG. 58, combines the module D3 input from the read circuit 620 and the module D4 input from the read circuit 621 to generate the personal information D2.

The personal information D2 is output to the decryption circuit 623 from the information composition circuit 622.

### Step ST93:

The decryption circuit 623 decrypts the personal information D2 input from the information composition circuit 622 by using the predetermined decryption key to generate the personal information D1 and outputs this to the write circuit 624.

### Step ST94:

The write circuit 624 writes the personal information D1 input from the decryption circuit 623 into the storage medium 615.

As explained above, according to the information restoration device 631, by the legitimate party using the related device, the information storage device 601 of the 10th embodiment explained above can restore the personal information D1 from the modules D3 and D4 stored in the different storage media 616 and 617.

### 12th Embodiment

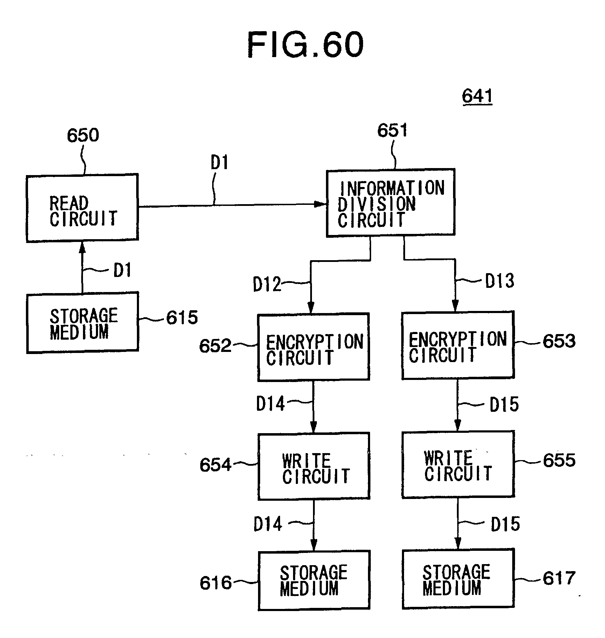

FIG. 60 is a view of the configuration of an information storage device 641 of the present embodiment.

As shown in FIG. 60, the information storage device 641 has a read circuit 650, information division circuit 651, encryption circuits 652 and 653, and write circuits 654 and 655.

The present embodiment is an embodiment corresponding to the 30th, 32nd, and 34th aspects of the invention.

The information storage device 641 divides the personal information D1 read from the storage medium 615 to two modules D12 and D13 independently maintaining the confidentiality of the personal information D1, encrypts them to generate modules D14 and D15, writes the module D14 into the storage medium 616, and writes the module D15 into the storage medium 617.

The read circuit 650 outputs the personal information D1 read from the storage medium 615 to the information division circuit 651.

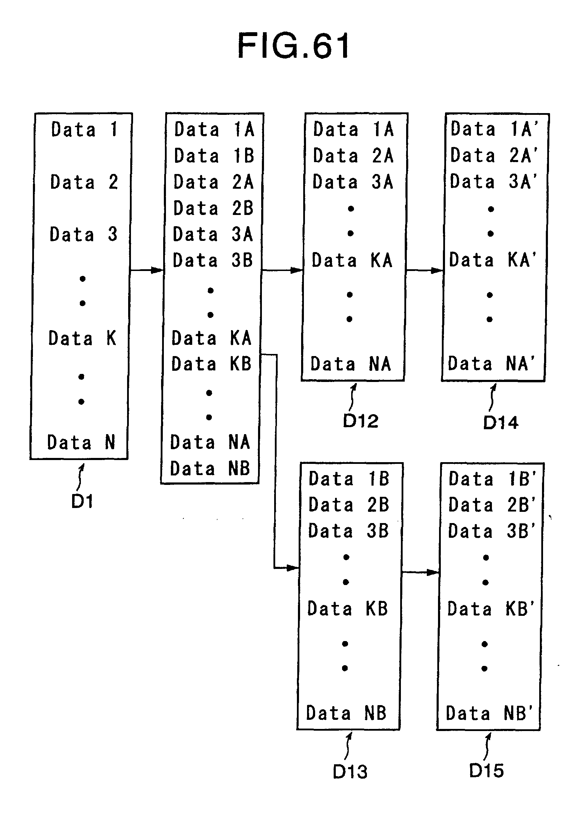

The personal information D1 is comprised of the information Data1 to DataN as shown in FIG. 61. Further, the personal information D1 is confidential information, for example, the personal ID information and code number of the user, log information of transactions, and the name, address, carrier, and occupation of the user.

The information division circuit 651 divides the personal information D1 input from the read circuit 650 to two modules D12 and D13 independently maintaining the confidentiality of the personal information D1, outputs the module D12 to the encryption circuit 652, and outputs the module D13 to the encryption circuit 653.

As shown in FIG. 61, the information division circuit 651 divides the information Data1 to DataN in the information D1 to the information Data1A and Data1B, information Data2A and Data2B, information Data3A and Data3B, ...., information DataKA and DataKB ...., and information DataNA and DataNB.

Then, the information division circuit 651 outputs the module D12 comprised of the information Data1A, Data2A, Data3A, ...., DataKA, ...., and DataNA to the encryption circuit 652.

Further, the information division circuit 651 outputs the module D13 comprised of the information Data1B, Data2B, Data3B, ...., DataKB, ...., and DataNB to the encryption circuit 653.

The encryption circuit 652 encrypts the personal information D12 input from the information division circuit 651 by using the predetermined encryption key to generate the personal information D14 and outputs this to the write circuit 654.

The encrypted personal information D14 is comprised of the information Data1A' to DataNA' obtained by encrypting the information Data1A to DataNA as shown in FIG. 61.

The encryption circuit 653 encrypts the personal information D13 input from the information division circuit 651 by using the predetermined encryption key to generate the personal information D15 and outputs this to the write circuit 655. The encryption key used by the encryption circuit 653 can be the same as the encryption key used by the encryption circuit 652 or can be different from that.

The encrypted personal information D15 is comprised of, as shown in FIG. 61, the information Data1B' to DataNB' obtained by encrypting the information Data1B to DataNB.

The write circuit 654 writes the module D14 input from the encryption circuit 652 into the storage medium 616.

The write circuit 655 writes the module D15 input from the encryption circuit 653 into the storage medium 617.

Below, an explanation will be made of the operation of the information storage device 601.

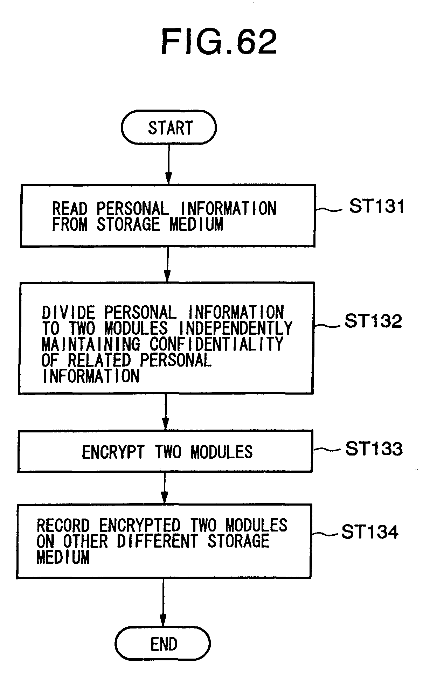

FIG. 62 is a flowchart for explaining the operation of the information storage device 641.

### Step ST131:

The read circuit 650 reads the personal information D1 shown in FIG. 61 from the storage medium 615 and outputs it to the information division circuit 651.

### Step ST132:

The information division circuit 651, as shown in FIG. 61, divides the personal information D1 input from the read circuit 650 to two modules D12 and D13 independently maintaining the confidentiality of the personal information D1, outputs the module D12 to the encryption circuit 652, and outputs the module D13 to the encryption circuit 653.

### Step ST133:

The encryption circuit 652, as shown in FIG. 61, encrypts the personal information D12 input from the information division circuit 651 by using the predetermined encryption key to generate the personal information D14 and outputs this to the write circuit 654.

Further, the encryption circuit 653, as shown in FIG. 61, encrypts the personal information D13 input from the information division circuit 651 by using the predetermined encryption key to generate the personal information D15 and outputs this to the write circuit 655.

### Step ST134:

The write circuit 654 writes the module D14 input from the encryption circuit 652 into the storage medium 616.

The write circuit 655 writes the module D15 input from the encryption circuit 653 into the storage medium 617.

As explained above, the information storage device 641, as shown in FIG. 61, divides the personal information D1 to two modules D12 and D13 independently maintaining the confidentiality of the personal information D1, encrypts them to generate the modules D14 and D15, and records the modules D14 and D15 on the storage media 616 and 617 physically independent from each other.

For this reason, if the storage media 616 and 617 are separately stored, even if one of the storage media 616 and 617 is stolen and the module recorded on the stolen storage medium is decrypted by the thief, the confidentiality of the personal information D1 is maintained.

### 13th Embodiment

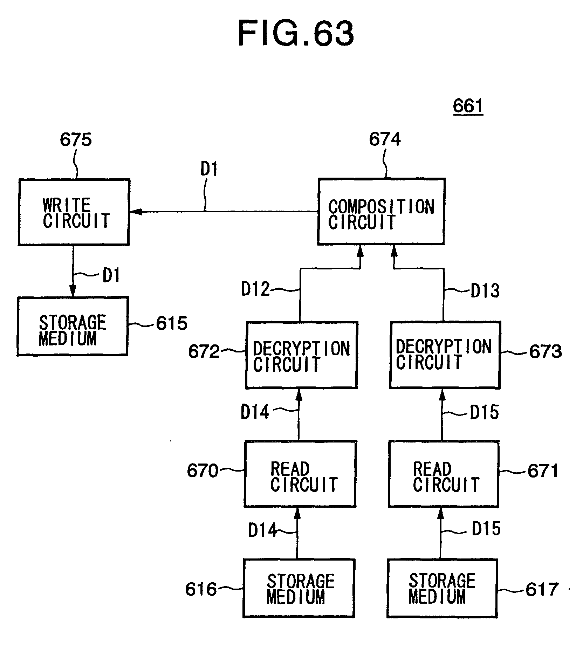

FIG. 63 is a view of the configuration of an information restoration device 661 of the present embodiment.

The information restoration device 661 restores the original personal information D1 from the personal information recorded on the storage media 616 and 617 in a manner divided by the information storage device 641 of the 12th embodiment.

As shown in FIG. 63, the information restoration device 661 has read circuits 670 and 671, decryption circuits 672 and 673, an information composition circuit 674, and write circuit 675.

The present embodiment is an embodiment corresponding to the 31st and 33rd aspects of the invention.

In FIG. 63, the storage media 616 and 617 go through the processing explained in the 12th embodiment and are recorded with the modules D14 and D15.

The read circuit 670 outputs the module D14 read from the storage medium 616 to the decryption circuit 672.

The read circuit 671 outputs the module D15 read from the storage medium 617 to the decryption circuit 673.

The decryption circuit 672 decrypts the module D14 input from the read circuit 670 by using the predetermined decryption key to generate the module D12 and outputs this to the information composition circuit 674.

The decryption circuit 673 decrypts the module D15 input from the read circuit 671 by using the predetermined decryption key to generate the module D13 and outputs this to the information composition circuit 674.

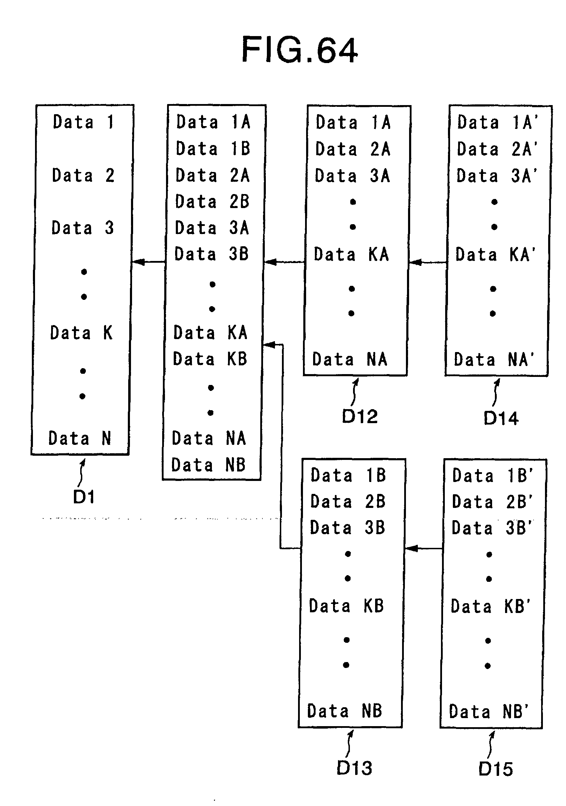

The information composition circuit 674 combines the module D12 input from the decryption circuit 672 and the module D13 input from the decryption circuit 673 to generate the personal information D1 and outputs this to the write circuit 675 as shown in FIG. 64.

The write circuit 675 writes the personal information D1 input from the information composition circuit 674 into the storage medium 615.

Below, an explanation will be made of the operation of the information restoration device 661.

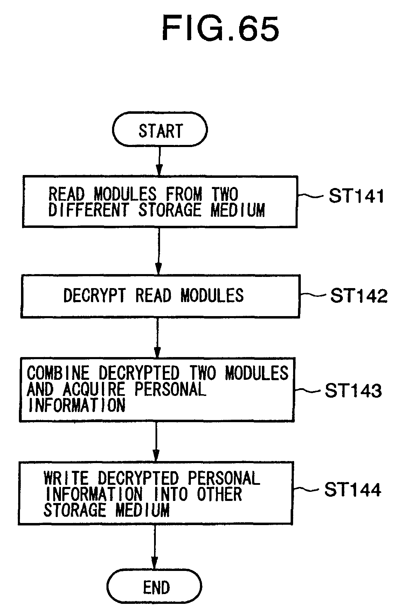

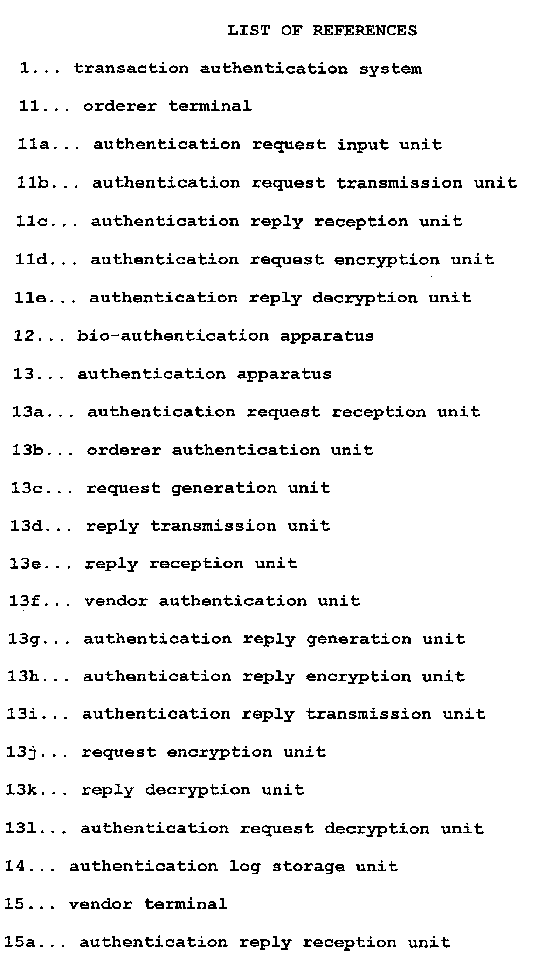

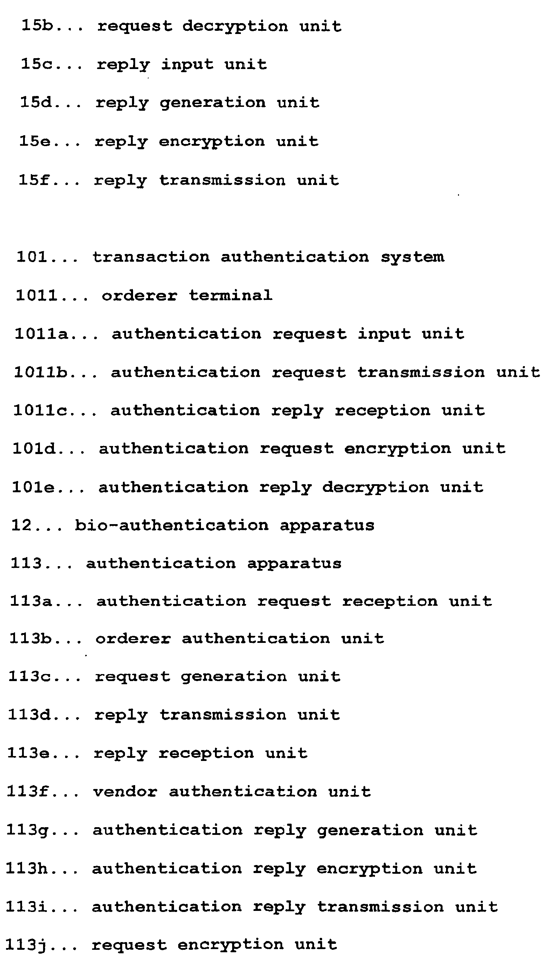

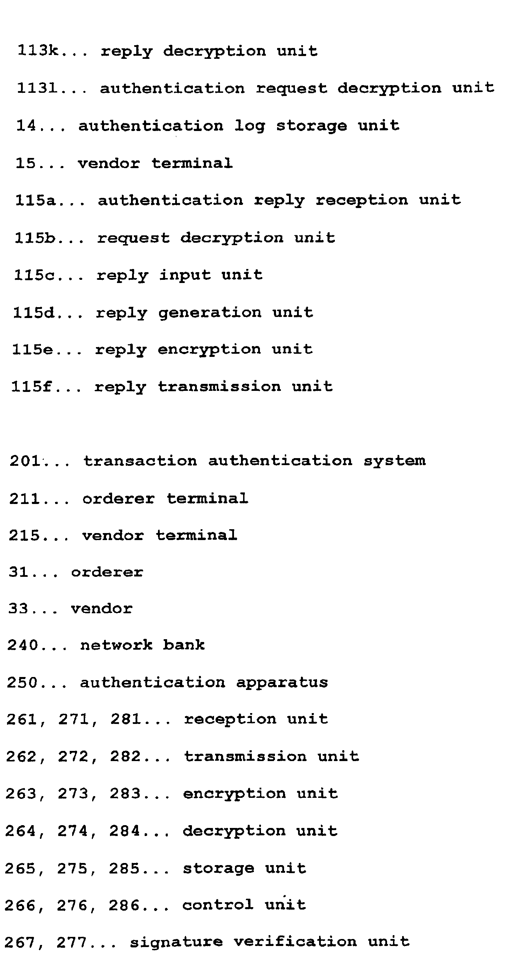

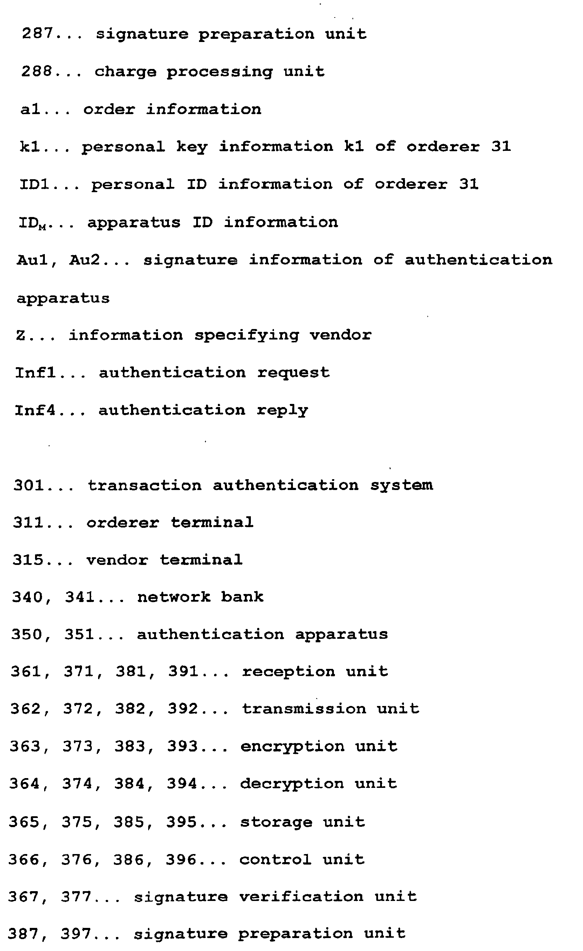

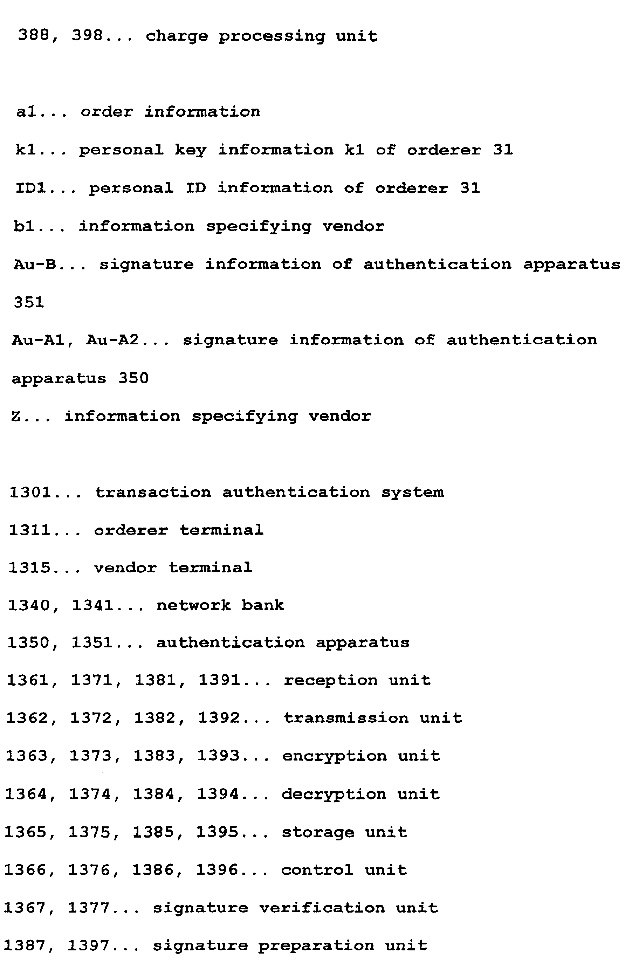

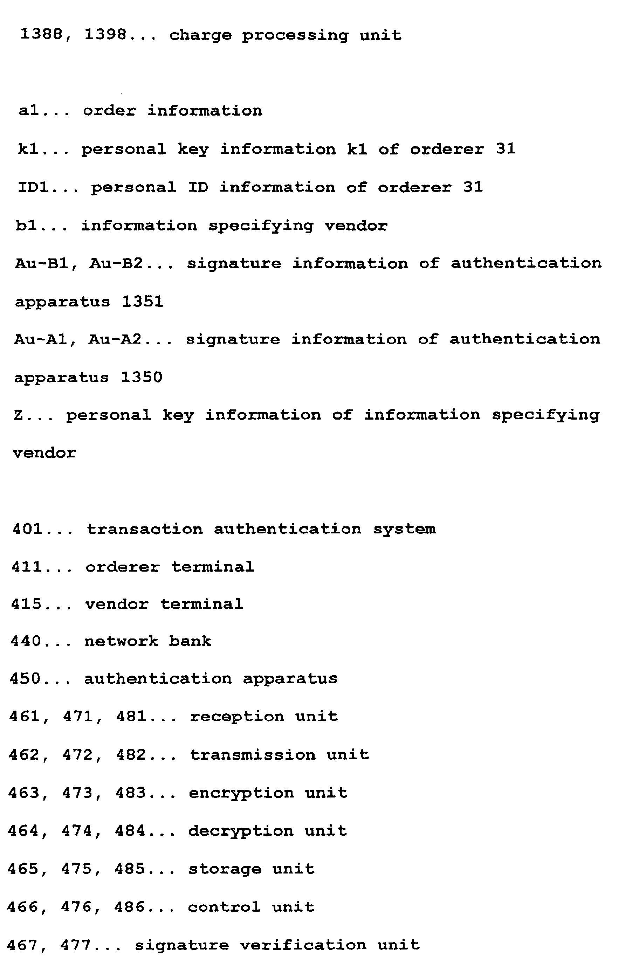

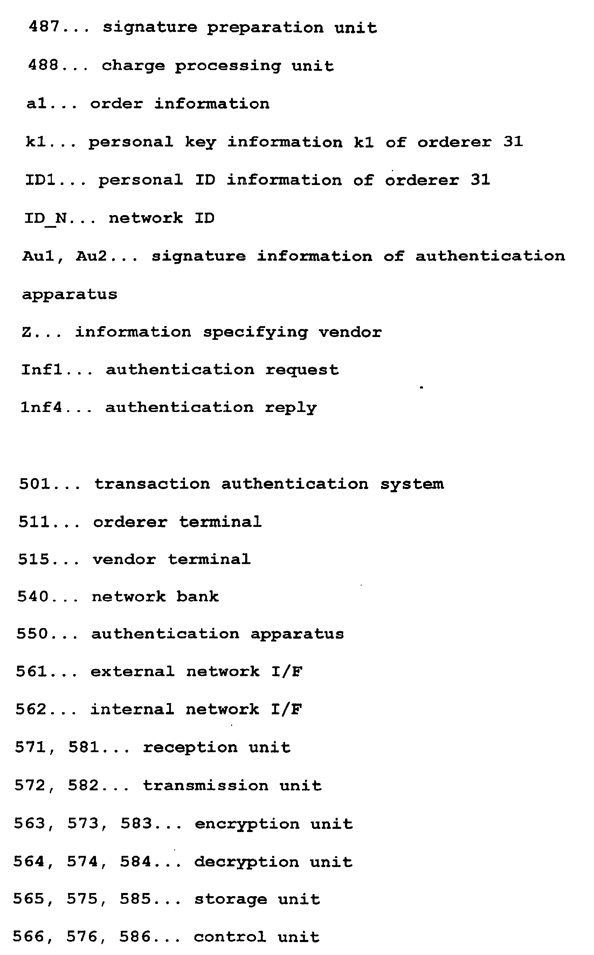

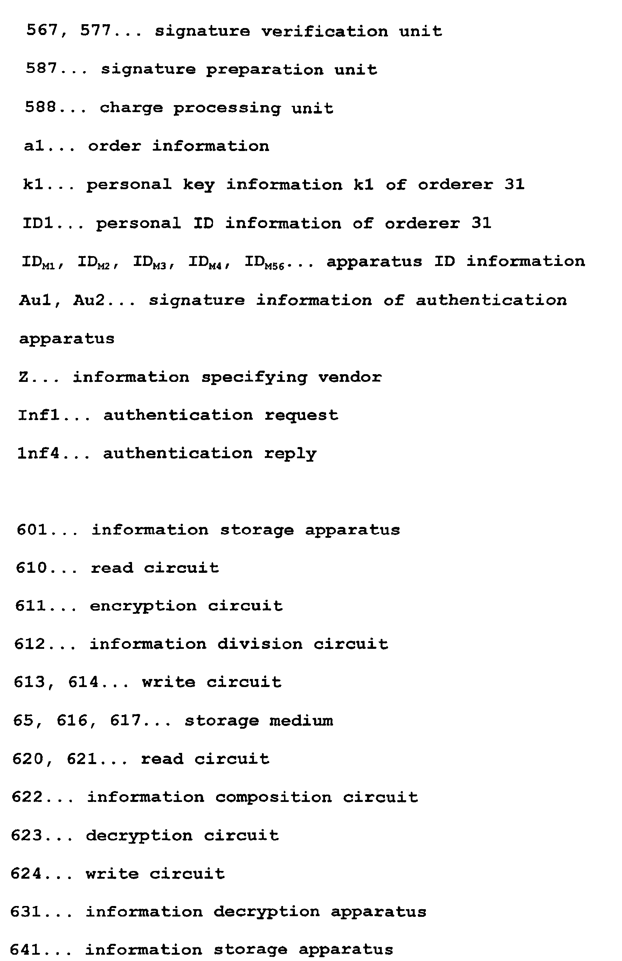

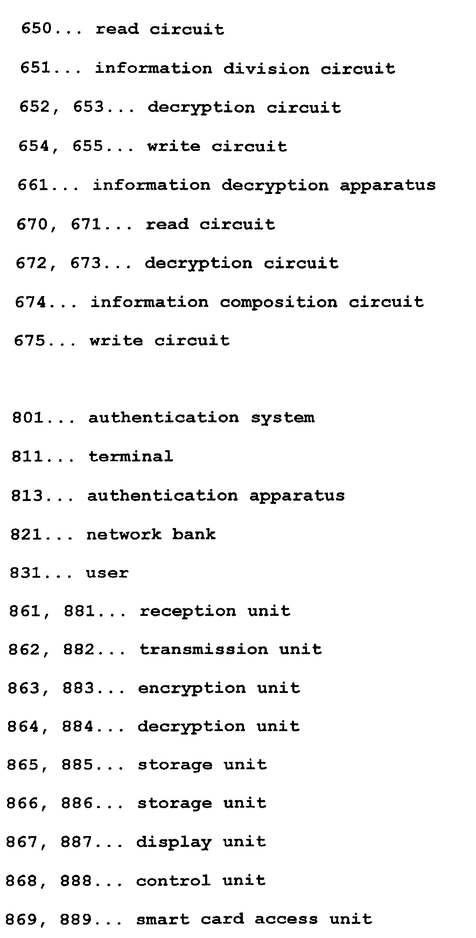

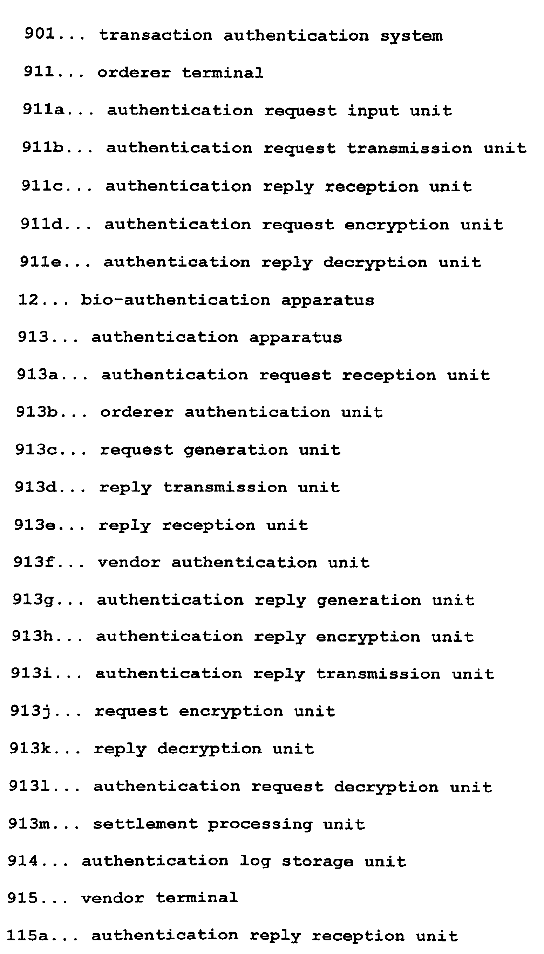

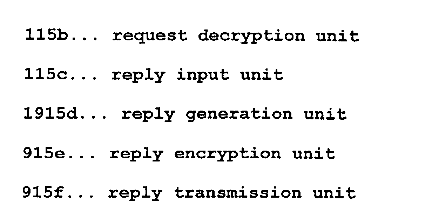

FIG. 65 is a flowchart for explaining the operation of the information restoration device 661.

### Step ST141:

The read circuit 670, as shown in FIG. 64, reads the module D14 from the storage medium 616 and outputs it to the decryption circuit 672.

Further, the read circuit 671 reads the module D15 from the storage medium 617 and outputs it to the decryption circuit 673.

### Step ST142:

The decryption circuit 672 decrypts the module D14 input from the read circuit 670 by using the predetermined decryption key to generate the module D12 and outputs this to the information composition circuit 674.

Further, the decryption circuit 673 decrypts the module D15 input from the read circuit 671 by using the predetermined decryption key to generate the module D13 and outputs this to the information composition circuit 674.

### Step ST143:

The information composition circuit 674, as shown in FIG. 64, combines the module D12 input from the decryption circuit 672 and the module D13 input from the decryption circuit 673 to generate the personal information D1 and outputs this to the write circuit 675.

### Step ST144:

The write circuit 675 writes the personal information D1 input from the information composition circuit 674 into the storage medium 615.

As explained above, according to the information restoration device 631, by the legitimate party using the related device, the information storage device 641 of the 12th embodiment can restore the personal information D1 from the modules D14 and D15 stored in the different storage media 616 and 617.

The present invention is not limited to the above embodiment.

For example, in the above embodiment, the case where a plurality of modules obtained by dividing the personal information were recorded on different storage media was illustrated, but it is also possible to record the related plurality of modules in different regions of the same storage medium. In this case, if it is made secret which module is recorded in which region of the storage medium, a party illegitimately acquiring the related storage medium cannot learn how to combine the modules read from the storage medium and cannot restore the personal information.

Further, in the above embodiment, the case where the information was encrypted either before or after the division of the predetermined information was illustrated, but the present invention can be applied both when encrypting the information either before or after the division of the predetermined information and when encrypting the information both before and after the division of the predetermined information.

Further, in the above embodiment, the personal information was illustrated as the predetermined information of the present invention, but other than that, it can be video or audio or other information as well.

Further, in the above embodiment, the case where the personal information was divided to two and recorded on two storage media 616 and 617 was illustrated, but it is also possible if the personal information is divided to three or more and recorded on three or more storage media.

### INDUSTRIAL APPLICABILITY

As explained above, according to the present invention, an authentication apparatus, processing apparatus, authentication system, and method thereof capable of raising the security of electronic commercial transactions via the network can be provided.

Further, according to the present invention, an authentication apparatus, processing apparatus, authentication system, and method of the same effectively suppressing illegitimate acts using the personal key information by preventing the personal key information of a first transactor from being provided to a second transactor can be provided.

Further, according to the present invention, an authentication apparatus, processing apparatus, authentication system, and method of the same avoiding illegitimate authentication procedures performed based on illegitimately acquired identification information (personal ID information) of others can be provided.

Further, according to the present invention, an authentication apparatus, authentication system, and method of same capable of authenticating transactions among a plurality of transactors contracting with for example different authentication managers with a high reliability without providing personal information of the transactors to another authentication manager can be provided.

Further, according to the present invention, a communication apparatus, communication system, and method of the same avoiding illegitimate procedures performed based on illegitimately acquired identification information (personal ID information) of others can be provided.

Further, according to the present invention, a communication control apparatus, communication system, and method of the same avoiding illegitimate procedures performed based on illegitimately acquired identification information (personal ID information) of others can be provided.

Further, according to the present invention, a communication control apparatus, communication system, and method of the same capable of efficiently assigning functions required for the related electronic commercial transaction and the managing the communication log when performing for example electronic commercial transactions via the network by using a plurality of communication apparatuses can be provided.

Further, according to the present invention, an information storage method and apparatus of the same capable of recording information on a storage medium while maintaining a high confidentiality and a storage medium with the information recorded thereon in such a format can be provided.

Further, according to the present invention, an information restoration method and apparatus capable of adequately restoring the information recorded on a storage medium by the information storage method and apparatus explained above can be provided.

Further, according to the present invention, when authenticating by using a portable memory device comprising a personal authentication function, security can be raised without complicated procedures.

Further, according to the present invention, an authentication apparatus, authentication system, and method of the same capable of avoiding the account of the first transactor being accounted by the second transactor several times for the same transaction by using the transaction identification information can be provided.

## Claims

1. An authentication apparatus for authenticating a transaction performed between at least two parties via a network,
said authentication apparatus comprising:
a first receiving means for receiving a first request including personal key information of a first transactor and information indicating a transaction content from said first transactor,
a first authenticating means for authenticating a legitimacy of said first transactor based on said personal key information included in said first request and generating first authentication information,
a first transmitting means for transmitting a second request including information obtained by deleting the personal key information of said first transactor from said first request and said first authentication information to said second transactor,
a second receiving means for receiving a reply with respect to said second request from said second transactor,
a second authenticating means for authenticating the legitimacy of said second transactor and generating second authentication information in accordance with said reply, and
a second transmitting means for transmitting said second authentication information to said first transactor.

2. An authentication apparatus as set forth in claim 1, wherein said personal key information of said first transactor is information relating to the charging of said first transactor.

3. An authentication apparatus as set forth in claim 1, further comprising a storage means for storing log information indicating a log of said transaction.

4. An authentication system for authenticating a transaction performed between at least two parties via a network,
said authentication system comprising:
a first communication apparatus used by a first transactor,
a second communication apparatus used by a second transactor, and
an authentication apparatus for authenticating said transaction,
wherein
said authentication apparatus comprises
a first receiving means for receiving a first request including personal key information of the first transactor and information indicating transaction content from said first transactor,
a first authenticating means for authenticating a legitimacy of said first transactor based on said personal key information included in said first request and generating first authentication information,
a first transmitting means for transmitting a second request including information obtained by deleting the personal key information of said first transactor from said first request and said first authentication information to said second transactor,
a second receiving means for receiving a reply with respect to said second request from said second transactor,
a second authenticating means for authenticating the legitimacy of said second transactor and generating second authentication information in accordance with said reply, and
a second transmitting means for transmitting the second authentication information indicating the legitimacy of said transaction to said first transactor.

5. An authentication method for authenticating a transaction performed between at least two parties via a network,
said authentication method comprising the steps of:
receiving a first request including personal key information of a first transactor and information indicating transaction content from said first transactor,
authenticating a legitimacy of said first transactor based on said personal key information included in said first request and generating first authentication information,
transmitting a second request including information obtained by deleting the personal key information of said first transactor from said first request and said first authentication information to said second transactor,
receiving a reply with respect to said second request from said second transactor,
authenticating a legitimacy of said second transactor in accordance with said reply and generating second authentication information, and
transmitting said second authentication information to said first transactor.

6. An authentication method as set forth in claim 5, wherein said transaction is settled using the personal key information of said first transactor.

7. An authentication apparatus for authenticating a transaction performed between at least two parties via a network,
said authentication apparatus comprising:
a first receiving means for receiving a first request including personal identification information of a first transactor and information indicating transaction content from said first transactor,
a first authenticating means for authenticating a legitimacy of said first transactor and generating a first authentication information in response to said first request,
a first transmitting means for transmitting a second request including said first authentication information and information indicating content of said transaction to a second transactor,
a second receiving means for receiving a reply with respect to said second request from said second transactor,
a second authenticating means for authenticating a legitimacy of said second transactor in accordance with said reply and generating second authentication information, and
a second transmitting means for transmitting said second authentication information to said first transactor.

8. An authentication apparatus as set forth in claim 7, wherein
said first receiving means receives said first request further including the personal key information of said first transactor, and
said first authenticating means authenticates the legitimacy of said first transactor based on said personal key information.

9. An authentication apparatus as set forth in claim 8, wherein said personal key information of said first transactor is information relating to the charging of said first transactor.

10. An authentication apparatus as set forth in claim 9, wherein said first transmitting means transmits the second request further including said personal key information of said first transactor to said second transactor.

11. An authentication apparatus as set forth in claim 7, further comprising a storage means for storing log information indicating a log of said transaction.

12. An authentication apparatus as set forth in claim 7, further comprising a decrypting means for decrypting said received first request when said first request is encrypted.

13. An authentication apparatus as set forth in claim 7, further comprising an encrypting means for encrypting said second request.

14. An authentication apparatus as set forth in claim 7, further comprising a decrypting means for decrypting said received reply when said reply is encrypted.

15. An authentication apparatus as set forth in claim 7, further comprising an encrypting means for encrypting said second authentication information.

16. An authentication system for authenticating a transaction performed between at least two parties via a network,
said authentication system comprising:
a first communication apparatus used by a first transactor,
a second communication apparatus used by a second transactor, and
an authentication apparatus for authenticating said transaction,
wherein
said first communication apparatus transmits a first request including personal identification information of the first transactor and information indicating the transaction content to said authentication apparatus, and
said authentication apparatus comprises:
a first receiving means for receiving said first request from said first transactor,
a first authenticating means for authenticating a legitimacy of said first transactor and generating first authentication information in response to said first request,
a first transmitting means for transmitting a second request including said first authentication information and the content of said transaction to said second transactor,
a second receiving means for receiving a reply with respect to said second request from said second transactor,
a second authenticating means for authenticating a legitimacy of said second transactor and generating second authentication information in response to said reply, and
a second transmitting means for transmitting said second authentication information to said first transactor.

17. An authentication system as set forth in claim 16, wherein
said first receiving means receives said first request further including personal key information of said first transactor and
said first authenticating means authenticates the legitimacy of said first transactor based on said personal key information.

18. An authentication system as set forth in claim 17, wherein said personal key information of said first transactor is information relating to charging of said first transactor.

19. An authentication method for authenticating a transaction performed between at least two parties via a network,
said authentication method comprising the steps of:
receiving a first request including personal identification information of a first transactor and information indicating transaction content from said first transactor,
authenticating a legitimacy of said first transactor and generating first authentication information in response to said first request,
transmitting a second request including said first authentication information and the content of said transaction to a second transactor,
receiving a reply with respect to said second request from said second transactor,
authenticating a legitimacy of said second transactor in accordance with said reply and generating second authentication information, and
transmitting said second authentication information to said first transactor.

20. An authentication method as set forth in claim 19, further comprising the steps of:
receiving said first request further including personal key information of said first transactor and
authenticating the legitimacy of said first transactor based on said personal key information.

21. An authentication method as set forth in claim 20, wherein said personal key information of said first transactor is information relating to charging of said first transactor.

22. An authentication method as set forth in claim 21, further comprising the step of sending a second request further including said personal key information of said first transactor to said second transactor.

23. An authentication method as set forth in claim 22, wherein said second transactor performs accounting using the personal key information of said first transactor.

24. An authentication apparatus holding information relating to a first transactor and authenticating a transaction between said first transactor and a second transactor performed via a network while communicating with another authentication apparatus holding information relating to said second transactor,
said authentication apparatus comprising:
a transmitting and receiving means for transmitting a second request including information specifying said second transactor in response to a first request from said first transactor including information indicating said transaction content and information specifying said second transactor to said second authentication apparatus, receiving first signature information indicating an authentication result by said second authentication apparatus in response to said second request, transmitting a third request including information relating to said transaction content included in said first request and said first signature information to an apparatus used by said second transactor, and receiving a predetermined reply from an apparatus used by said second transactor in response to the related third request,
a storage means for storing a log of said transaction when receiving said predetermined reply, and
a signature producing means for producing second signature information to be transmitted to the apparatus used by said first transactor via said transmitting and receiving means when receiving said predetermined reply and indicating the authentication result of the legitimacy of said transaction.

25. An authentication apparatus as set forth in claim 24, further comprising an encrypting means, and
wherein
said transmitting and receiving means receives an encryption key used for the communication with said second transactor from said other authentication apparatus in response to said second request and transmits the information relating to said transaction content encrypted by using said encryption key at said encrypting means and said first signature information to the apparatus used by said second transactor.

26. An authentication apparatus as set forth in claim 24, wherein
said transmitting and receiving means receives said predetermined reply including the identification information used for identifying said second transactor by said other authentication apparatus from the apparatus used by said second transactor, and
said storage means stores a log of said transactions generated by using said identification information.

27. An authentication apparatus as set forth in claim 24, wherein said transmitting and receiving means transmits the third request including information other than the information relating to the charging of said first transactor in the information relating to said transaction content included in said first request and said first signature information to the apparatus used by said second transactor.

28. An authentication apparatus as set forth in claim 24, wherein said transmitting and receiving means transmits the third request including the information relating to said transaction content included in said first request, said first signature information, and the encryption key used for the communication with the related authentication apparatus to the apparatus used by said second transactor.

29. An authentication apparatus as set forth in claim 24, further comprising a charge processing means for the charge processing for the authentication relating to said transaction.

30. An authentication apparatus as set forth in claim 24, wherein said charge processing means performs processing for determining a rate of the charge for the authentication relating to said transaction with said other authentication apparatus.

31. An authentication apparatus as set forth in claim 24, wherein said transmitting and receiving means receives said predetermined reply from the apparatus used by said second transactor when said second transactor confirms the legitimacy of said first signature information and agrees to the related transaction.

32. An authentication apparatus as set forth in claim 24, wherein said receiving means sends said second signature information to the apparatus used by said second transactor.

33. An authentication system for authenticating a transaction performed between at least two parties via a network,
said authentication system comprising:
a first authentication apparatus for authenticating a transaction relating to a first transactor and
a second authentication apparatus for authenticating a transaction relating to a second transactor,
wherein
said first authentication apparatus transmits a second request including information specifying said second transactor to said second authentication apparatus in response to a first request by said first transactor including information indicating said transaction content and information specifying said second transactor, receives first signature information from said second authentication apparatus in response to said second request, transmits a third request including information relating to said transaction content included in said first request and said first signature information to the apparatus used by said second transactor, stores a log of said transaction when receiving a predetermined reply from said second transactor in response to the related third request, and provides second signature information for authenticating a legitimacy of said transaction to said first transactor.

34. An authentication system as set forth in claim 33, further comprising an encrypting means, and
wherein
said transmitting and receiving means receives an encryption key used for communication with said second transactor from said second authentication apparatus in response to said second request and transmits information relating to said transaction content encrypted by using said encryption key at said encrypting means and said first signature information to the apparatus used by said second transactor.

35. An authentication system as set forth in claim 33, wherein
said transmitting receiving means of said first authentication apparatus receives said predetermined reply including identification information for use by said second authentication apparatus for identifying said second transactor from said second transactor and
said storage means stores said transaction log generated using said identification information.

36. An authentication system as set forth in claim 33, wherein said first authentication apparatus provides said second signature information to said second transactor.

37. An authentication method for authenticating a transaction between a first transactor and a second transactor performed via a network by using a first authentication apparatus for authenticating a transaction relating to the first transactor and a second authentication apparatus for authenticating a transaction relating to the second transactor,
said authentication method comprising the steps of:
issuing a first request including information indicating said transaction content and information specifying said second transactor from said first transactor to said first authentication apparatus,
transmitting a second request including the information specifying said second transactor from said first authentication apparatus to said second authentication apparatus in response to said first request,
transmitting first signature information indicating the authentication result by the related second authentication apparatus to said first authentication apparatus from said second authentication apparatus in response to said second request,
transmitting a third request including the information relating to said transaction content included in said first request and said first signature information from said first authentication apparatus to an apparatus used by said second transactor,
issuing a predetermined reply from the apparatus used by said second transactor to said first authentication apparatus in response to the related third request and,
in accordance with said predetermined reply, storing a log of said transaction, producing second signature information indicating the authentication result of the legitimacy of said transaction, and
transmitting the related second signature information to the apparatus used by said first transactor by said first authentication apparatus.

38. An authentication method as set forth in claim 37, further comprising the steps of:
sending an encryption key for use in communication with said second transactor from said second authentication apparatus to said first authentication apparatus in accordance with said second request and
having said first authentication apparatus encrypt said information relating to transaction content and said first signature information using said encryption key, then send them to the apparatus used by said second transactor.

39. An authentication method as set forth in claim 37, further comprising the steps of having said first authentication apparatus receive said predetermined reply including identification information for use by said second authentication apparatus in identifying said second transactor from the apparatus used by said second transactor and store a log of said transaction generated using said identification information.

40. An authentication method as set forth in claim 37, further comprising the steps of sending a third request including information other than the information relating to the charging of said first transactor in the information relating to said transaction content included in said first request and said first signature information from the first authentication apparatus to the apparatus used by said second transactor.

41. An authentication method as set forth in claim 37, further comprising the steps of sending a third request including information relating to the charging of said first transactor included in said first request, said first signature information, and an encryption key for use in communication with said authentication apparatus from the first authentication apparatus to the apparatus used by said second transactor.

42. An authentication method as set forth in claim 37, further comprising the steps of performing processing for determining a rate of charging for authentication relating to said transaction between said first authentication apparatus and said second authentication apparatus.

43. An authentication method as set forth in claim 37, further comprising the steps of sending said predetermined reply from the apparatus used by said second transactor to said first authentication apparatus when said second transactor confirms the legitimacy of said first signature information and agrees to the related transaction.

44. An authentication method as set forth in claim 37, further comprising the steps of sending said second signature information from said first authentication apparatus to the apparatus used by said second transactor.

45. An authentication method for authenticating a transaction between a first transactor and a second transactor performed via a network by using a first authentication apparatus for authenticating a transaction relating to the first transactor and a second authentication apparatus for authenticating a transaction relating to the second transactor,
said authentication method comprising the steps of:
issuing a first request including information indicating said transaction content, personal key information of said first transactor, and information specifying said second transactor from said first transactor to said first authentication apparatus,
transmitting a second request obtained by deleting said personal key from said first request from said first authentication apparatus to said second authentication apparatus in response to said first request,
transmitting a third request including information indicating the content of said transaction from said second authentication apparatus to the apparatus used by said second transactor in response to said second request,
transmitting a first reply from the apparatus used by said second transactor to said second authentication apparatus in response to said third request,
transmitting a second reply including payment method information indicating a payment method to said second transactor from said second authentication apparatus to said first authentication apparatus in accordance with said first reply, and
managing a payment relating to said transaction between said first transactor and said second transactor based on said payment method information by said first authentication apparatus.

46. An authentication method as set forth in claim 45, wherein said first authentication apparatus performs processing for receiving a payment from said first transactor relating to said transaction, processing for paying a part of said payment to said second transactor in accordance with said transaction, and processing for receiving a remainder of said payment as a fee.

47. An authentication method as set forth in claim 45, wherein said first authentication apparatus inquires to said second authentication apparatus whether or not said second transactor has contracted with said second authentication apparatus in response to said first request and, when receiving an answer indicating it has contracted with it from said second authentication apparatus, transmits said second request to said second authentication apparatus.

48. An authentication method as set forth in claim 45, wherein when receiving said second reply, said first authentication apparatus transmits a third reply including signature information including the result of authentication performed by the related first authentication apparatus for said transactor to the apparatus used by said first transactor.

49. An authentication method as set forth in claim 45, wherein said first authentication apparatus encrypts said third reply by using a secret key corresponding to the related first authentication apparatus and transmits the same to the apparatus used by said first transactor.

50. An authentication method as set forth in claim 45, wherein said first authentication apparatus transmits said second request further including the signature information indicating the result of authentication performed by the related first authentication apparatus for said transaction to said second authentication apparatus.

51. An authentication method as set forth in claim 45, wherein said second authentication apparatus transmits said third request further including signature information indicating the result of authentication performed by the related second authentication apparatus for said transaction to the apparatus used by said second transactor.

52. An authentication method as set forth in claim 45, wherein said first authentication apparatus encrypts said second request by using a secret key corresponding to the related first authentication apparatus and transmits the same to said second authentication apparatus.

53. An authentication method as set forth in claim 45, wherein said second authentication apparatus encrypts said third request by using a secret key corresponding to the related second authentication apparatus and transmits the same to the apparatus used by said second transactor.

54. An authentication method as set forth in claim 45, wherein the apparatus of said second transactor encrypts said first reply by using a secret key of the related second transactor and transmits the same to said second authentication apparatus.

55. An authentication method as set forth in claim 45, wherein said second authentication apparatus encrypts said second reply by using a secret key corresponding to the related second authentication apparatus and transmits the same to said first authentication apparatus.

56. An authentication apparatus holding information relating to a first transactor and authenticating a transaction between said first transactor and a second transactor performed via a network while communicating with another authentication apparatus holding information relating to said second transactor,
said authentication apparatus comprising:
a receiving means for receiving a first request including information indicating said transaction content, personal key information of said first transactor, and information specifying said second transactor from said first transactor and receiving a reply including payment method information indicating a payment method to said second transactor from said other authentication apparatus,
a transmitting means for transmitting a second request obtained by deleting said personal key from said first request to said other authentication apparatus in response to said first request, and
a charging means for managing a payment relating to said transaction between said first transactor and said second transactor based on said payment method information.

57. An authentication apparatus as set forth in claim 56, wherein said charging means performs processing for receiving a payment from said first transactor relating to said transaction, processing for paying a part of said payment to said second transactor in accordance with said transaction, and processing for receiving a remainder of said payment as a fee.

58. An authentication apparatus as set forth in claim 56, wherein said transmitting means inquires to said other authentication apparatus whether or not said second transactor has contracted with said second authentication apparatus in response to said first request and, when receiving an answer indicating it has contracted with it from said other authentication apparatus, transmits said second request to said other authentication apparatus.

59. An authentication apparatus as set forth in claim 56, wherein when said receiving means receives said second reply, said transmitting means transmits a reply including signature information including the result of authentication performed by itself for said transactor to the apparatus used by said first transactor.

60. An authentication apparatus as set forth in claim 59, wherein said transmitting means encrypts said reply by using a secret key corresponding to the related first authentication apparatus and transmits the same to the apparatus used by said first transactor.

61. An authentication apparatus as set forth in claim 56, wherein said transmitting means transmits said second request further including the signature information indicating the result of authentication performed by the related first authentication apparatus for said transaction to said other authentication apparatus.

62. An authentication system comprising a first authentication apparatus for authenticating a transaction relating to a first transactor and a second authentication apparatus for authenticating a transaction relating to a second transactor and authenticating a transaction between said first transactor and said second transactor performed via a network,
said authentication system comprising the steps of:
issuing a first request including information indicating said transaction content, personal key information of said first transactor, and information specifying said second transactor from said first transactor to said first authentication apparatus,
transmitting a second request obtained by deleting said personal key from said first request from said first authentication apparatus to said second authentication apparatus in response to said first request,
transmitting a third request including the information indicating the content of said transaction from said second authentication apparatus to the apparatus used by said second transactor in response to said second request,
transmitting a first reply from an apparatus used by said second transactor to said second authentication apparatus in response to said third request,
transmitting a second reply including payment method information indicating a payment method to said second transactor from said second authentication apparatus to said first authentication apparatus in accordance with said first reply, and
managing a payment relating to said transaction between said first transactor and said second transactor based on said payment method information by said first authentication apparatus.

63. An authentication system as set forth in claim 62, wherein said first authentication apparatus performs processing for receiving a payment from said first transactor relating to said transaction, processing for paying a part of said payment to said second transactor in accordance with said transaction, and processing for receiving a remainder of said payment as a fee.

64. An authentication system as set forth in claim 62, wherein said first authentication apparatus inquires to said second authentication apparatus whether or not said second transactor has contracted with said second authentication apparatus in response to said first request and, when receiving an answer indicating it has contracted with it from said second authentication apparatus, transmits said second request to said second authentication apparatus.

65. An authentication system as set forth in claim 62, wherein when receiving said second reply, said first authentication apparatus transmits a third reply including signature information including the result of authentication performed by the related first authentication apparatus for said transactor to the apparatus used by said first transactor.

66. An authentication system as set forth in claim 62, wherein said first authentication apparatus encrypts said third reply by using a secret key corresponding to the related first authentication apparatus and transmits the same to the apparatus used by said first transactor.

67. An authentication system as set forth in claim 62, wherein said first authentication apparatus transmits said second request further including the signature information indicating the result of authentication performed by the related first authentication apparatus for said transaction to said second authentication apparatus.

68. An authentication system as set forth in claim 62, wherein said second authentication apparatus transmits said third request further including signature information indicating the result of authentication performed by the related second authentication apparatus for said transaction to the apparatus used by said second transactor.

69. An authentication system as set forth in claim 62, wherein said first authentication apparatus encrypts said second request by using a secret key corresponding to the related first authentication apparatus and transmits the same to said second authentication apparatus.

70. An authentication system as set forth in claim 62, wherein said second authentication apparatus encrypts said third request by using a secret key corresponding to the related second authentication apparatus and transmits the same to the apparatus used by said second transactor.

71. An authentication system as set forth in claim 62, wherein the apparatus of said second transactor encrypts said first reply by using a secret key of the related second transactor and transmits the same to said second authentication apparatus.

72. An authentication system as set forth in claim 62, wherein said second authentication apparatus encrypts said second reply by using a secret key corresponding to the related second authentication apparatus and transmits the same to said first authentication apparatus.

73. An authentication method comprising the steps of:
having an authentication apparatus divide authentication information of a user into first authentication information and second authentication information,
providing a portable memory device storing said second authentication information to said user,
transmitting an authentication information request from a terminal capable of accessing said portable memory device to said authentication apparatus,
transmitting said first authentication information from said authentication apparatus to said terminal when said authentication apparatus decides said authentication information request is by a legitimate user, and
having said terminal restore said authentication information by using said first authentication information received from said authentication apparatus and said second authentication information read from said portable memory device.

74. An authentication method as set forth in claim 73, wherein
said authentication information request includes transmission destination information designating a destination of transmission of said first authentication information, and
said authentication apparatus transmits said first authentication information to said terminal designated by said transmission destination information.

75. An authentication method as set forth in claim 73, wherein said authentication apparatus stores transmission destination information corresponding to said user in advance and decides that said authentication information request is by the legitimate user when said transmission destination information included in said authentication information request is present in the related stored transmission destination information.

76. An authentication method as set forth in claim 73, wherein said terminal stores said received first authentication information and restores said authentication information when deciding that said first authentication information received from said authentication apparatus and said second authentication information read from said portable memory device correspond.

77. An authentication method as set forth in claim 73, wherein said terminal transmits to said authentication apparatus a notification indicating that said first authentication information received from said authentication apparatus and said second authentication information read from said portable memory do not correspond when this is the case.

78. An authentication method as set forth in claim 73, wherein said authentication apparatus generates said authentication information in response to a request from said user.

79. An authentication method as set forth in claim 73, wherein said authentication information is information produced by using a public key encryption.

80. An authentication method as set forth in claim 73, wherein said portable memory device is a smart card.

81. An authentication method comprising the steps of:
generating authentication information,
dividing said authentication information into first authentication information and second authentication information,
providing a portable memory device storing said second authentication information to a user, and
transmitting said first authentication information to a transmission destination designated by said authentication information request when deciding that the received authentication information request is by a legitimate user.

82. An authentication method as set forth in claim 81, further comprising the steps of:
storing in advance transmission destination information corresponding to the user and
deciding that said authentication information request is by a legitimate user when said transmission destination information included in said authentication information request is present in said stored transmission destination information.

83. An authentication method as set forth in claim 81, wherein said authentication information is information produced using public key encryption.

84. An authentication method as set forth in claim 81, wherein said portable memory device is a smart card.

85. An authentication apparatus comprising:
a controlling means for generating authentication information, dividing said authentication information into first authentication information and second authentication information, and deciding whether or not the received authentication information request is by a legitimate user,
a writing means for writing said second authentication information into a portable memory device,
a receiving means for receiving said authentication information request from a user of said portable memory device, and
a transmitting means for transmitting said first authentication information to a transmission destination designated by said authentication information request when it is decided that said authentication information request is by a legitimate user.

86. An authentication apparatus as set forth in claim 85, further comprising
a storage means for storing in advance transmission destination information corresponding to the user is further provided and
wherein
said controlling means decides that said authentication information request is by a legitimate user when said transmission destination information included in said authentication information request is present in said stored transmission destination information.

87. An authentication apparatus as set forth in claim 85, wherein said authentication information is information produced using public key encryption.

88. An authentication apparatus as set forth in claim 85, wherein said portable memory device is a smart card.

89. A communication apparatus comprising:
a receiving means for receiving a request including personal identification information for identifying a user,
a storage means for storing said personal identification information and information of a transmission destination for transmitting a processing result in correspondence,
a processing means for performing predetermined processing in response to said request, and
a transmitting means for reading information of said transmission destination corresponding to said personal identification information included in said request from said storage means and transmitting the result of said processing to the transmission destination specified by the related read information of said transmission destination.

90. A communication apparatus as set forth in claim 89, wherein
said receiving means receives a request including encrypted personal identification information, and
said communication apparatus further comprises a decrypting means for decrypting said personal identification information included in said received request.

91. A communication apparatus as set forth in claim 89, wherein said personal identification information is an identifier assigned to the user registered in the communication apparatus in advance.

92. A communication apparatus as set forth in claim 89, wherein the information of the transmission destination for transmitting the result of said processing is information provided by the transmitting side of said request to the related communication apparatus off-line.

93. A communication apparatus as set forth in claim 89, wherein the information of the transmission destination for transmitting said predetermined result is personal identification information for unambiguously identifying said user in the network with the related communication apparatus connected thereto.

94. A communication apparatus as set forth in claim 89, wherein said processing is authentication processing.

95. A communication system comprising
a first communication apparatus and
a second communication apparatus connected via a network, wherein
said first communication apparatus comprises:
a first receiving means for receiving a request including personal identification information for identifying a user,
a storage means for storing said personal identification information and information of a transmission destination for transmitting a processing result in correspondence,
a processing means for performing predetermined processing in response to said request, and
a first transmitting means for reading the information of said transmission destination corresponding to said personal identification information included in said request from said storage means and transmitting the result of said processing to the transmission destination specified by the related read information of said transmission destination and wherein
said second communication apparatus comprises:
a second transmitting means for transmitting said request to said first communication apparatus,
a second receiving means for receiving the result of said processing from said first communication apparatus, and
an outputting means for outputting the result of the related received authentication processing.

96. A communication apparatus as set forth in claim 95, wherein
said first receiving means of said first communication apparatus receives said request including encrypted personal identification information, and
said first communication apparatus further comprises a decrypting means for decrypting said personal identification information included in said received request.

97. A communication apparatus as set forth in claim 95, wherein said personal identification information is an identifier assigned to the user registered in the first communication apparatus in advance.

98. A communication apparatus as set forth in claim 95, wherein the information of the transmission destination for transmitting the result of said processing is information provided by the user of said second communication apparatus to the related first communication apparatus off-line.

99. A communication apparatus as set forth in claim 95, wherein the information of the transmission destination for transmitting said predetermined result is personal identification information for unambiguously identifying said user in the network with the related first communication apparatus connected thereto.

100. A communication method using a first communication apparatus and a second communication apparatus connected via a network,
said communication method comprising the steps of:
transmitting a request including personal identification information for identifying a user from said second communication apparatus to said first communication apparatus,
having said first communication apparatus perform predetermined processing in response to said request, and
having said first communication apparatus refer to a correspondence of said personal identification information and information of a transmission destination for transmitting the result of the processing produced in advance and transmit a result of said processing to the transmission destination specified by information of the transmission destination corresponding to said personal identification information included in said request.

101. A communication method as set forth in claim 100, further comprising the step of having said second communication apparatus output the results of said processing received from said first communication apparatus.

102. A communication method as set forth in claim 100, further comprising the step of having said first communication apparatus receive said request including encrypted personal identification information and decrypt said personal identification information included in said received reply.

103. A communication method as set forth in claim 100, wherein said personal identification information is an identifier assigned to a user registered at said first communication apparatus in advance.

104. A communication method as set forth in claim 100, wherein the information of the transmission destination for transmitting the result of said processing is information provided by the transmitting side of said request to the related first communication apparatus off-line.

105. A communication method as set forth in claim 100, wherein the information of the transmission destination for transmitting said predetermined result is personal identification information for unambiguously identifying said user in the network with the related first communication apparatus connected thereto.

106. An authentication apparatus for authenticating a transaction performed between at least two parties via a network,
said authentication apparatus comprising:
a first receiving means for receiving a first request including personal key information of a first transactor and information indicating a transaction content from said first transactor,
a first authenticating means for authenticating a legitimacy of said first transactor based on said personal key information included in said first request and generating first authentication information,
a first transmitting means for transmitting a second request including information obtained by deleting the personal key information of said first transactor from said first request and including said first authentication information to a second transactor,
a second receiving means for receiving a reply with respect to said second request from said second transactor,
a second authenticating means for authenticating a legitimacy of said second transactor and generating second authentication information,
a second transmitting means for transmitting said second authentication information to said first transactor,
an identification information issuing means for issuing transaction identification information when receiving said first request, and
a log managing means for managing a log of the reception of said first request, transmission of said second request, and the reception of said reply by using said transaction identification information.

107. An authentication apparatus as set forth in claim 106, wherein said transaction log managing means generates log information for each of the reception of said first request, transmission of said second request, and reception of said reply and stores the related log information relating to said transaction identification information.

108. An authentication apparatus as set forth in claim 106, wherein said transmitting means transmits a second request further including said transaction identification information to said second transactor.

109. An authentication apparatus as set forth in claim 106, wherein said second authenticating means authenticates the legitimacy of said reply based on said transaction identification information included in said reply and said log managed by said transaction log managing means.

110. An authentication apparatus as set forth in claim 106,
further comprising an account processing means for performing the account processing concerned in said transaction, and
wherein
said transaction log managing means stores log information indicating that the account processing is terminated in correspondence with said transaction identification information after the end of said account processing.

111. An authentication apparatus as set forth in claim 106, wherein the personal key information of said first transactor is information relating to the charging of said first transactor.

112. An authentication system for authenticating a transaction performed between at least two parties via a network,
said authentication system comprising
a first communication apparatus used by a first transactor,
a second communication apparatus used by a second transactor, and
an authentication apparatus for authenticating said transaction, wherein
said authentication apparatus comprises:
a first receiving means for receiving a first request including personal key information of said first transactor and including an information indicating the transaction content from said first transactor,
a first authenticating means for authenticating a legitimacy of said first transactor based on said personal key information included in said first request and generating first authentication information,
a first transmitting means for transmitting a second request including information obtained by deleting the personal key information of said first transactor from said first request and including said first authentication information to said second transactor,
a second receiving means for receiving a reply with respect to said second request from said second transactor,
a second authenticating means for authenticating a legitimacy of said second transactor in accordance with said reply and generating second authentication information,
a second transmitting means for transmitting said second authentication information to said first transactor,
a transaction identification information issuing means for issuing transaction identification information when receiving said first request, and
a transaction log managing means for managing a log of the reception of said first request, transmission of said second request, and the reception of said reply by using said transaction identification information.

113. An authentication method for authenticating a transaction performed between at least two parties via a network,
said authentication method comprising the steps of:
receiving a first request including personal key information of a first transactor and including information indicating a transaction content from said first transactor,
issuing transaction identification information in accordance with the related reception,
authenticating a legitimacy of said first transactor based on said personal key information included in said first request and generating first authentication information,
transmitting a second request including information obtained by deleting the personal key information of said first transactor from said first request and including said first authentication information to said second transactor,
receiving a reply with respect to said second request from said second transactor,
authenticating a legitimacy of said second transactor in accordance with said reply and generating second authentication information,
transmitting said second authentication information to said first transactor, and
managing a log of the reception of said first request, transmission of said second request, and the reception of said reply by using said transaction log information.

114. An authentication method as set forth in claim 113, further comprising the step of generating log information for each of the reception of said first request, transmission of said second request, and the reception of said reply and storing the related log information in correspondence with said transaction identification information.

115. An authentication method as set forth in claim 114, further comprising the step of transmitting a second request further including said transaction identification information to said second transactor.

116. An authentication method as set forth in claim 114, further comprising the step of authenticating the legitimacy of said reply based on said transaction identification information included in said reply and said log managed by said transaction log managing means.

117. An authentication method as set forth in claim 114, further comprising the steps of
performing the account processing concerned in said transaction and
storing log information indicating that the account processing is terminated in correspondence with said transaction identification information after the end of said account processing.

118. An authentication method as set forth in claim 114, further comprising the steps of
receiving said reply including personal key information of said second transactor and
authenticating the legitimacy of said second transactor based on the personal key information of said second transactor.

119. An authentication method as set forth in claim 118, wherein the personal key information of said first transactor is information relating to the charging of said first transactor and the personal key information of said second transactor is information relating to the charging of said second transactor.

120. A communication control apparatus for controlling communication processing carried out in a second communication apparatus on a network in response to a request from one or more first communication apparatuses,
said communication control apparatus comprising:
a storage means for storing apparatus identification information for identifying said first communication apparatus,
a transmitting means for transmitting a request including said apparatus identification information corresponding to the related first communication apparatus to said second communication apparatus in response to the request from said first communication apparatus,
a receiving means for receiving a reply including the apparatus identification information for identifying the transmitting apparatus of said request from said second communication apparatus, and
a controlling means for deciding if said request corresponding to said received reply is by a legitimate first communication apparatus whose apparatus identification information is stored in said storage means based on whether or not said apparatus identification information included in said reply and said apparatus identification information stored in said storage means coincide.

121. A communication control apparatus as set forth in claim 120, wherein said controlling means sends a predetermined notification to said second communication apparatus when said apparatus identification information included in said reply and said apparatus identification information stored in said storage means do not coincide.

122. A communication control apparatus as set forth in claim 120, wherein said controlling means sends a predetermined notification to an apparatus of the destination of a transaction where the result of processing included in said reply is used when said apparatus identification information included in said reply and said apparatus identification information stored in said storage means do not coincide.

123. A communication control apparatus as set forth in claim 120, wherein said transmitting means transmits said request including personal identification information received from said first communication apparatus and including said apparatus identification information corresponding to the related first communication apparatus to said second communication apparatus.

124. A communication control apparatus as set forth in claim 120, wherein said storage means stores said apparatus identification information received from said first communication apparatus.

125. A communication control apparatus as set forth in claim 124, wherein said storage means stores said apparatus identification information received from said first communication apparatus when a power of the related communication control apparatus is turned on.

126. A communication control apparatus as set forth in claim 120, wherein said controlling means writes a communication log between said first communication apparatus and said second communication apparatus in said storage means.

127. A communication control apparatus as set forth in claim 120, wherein said controlling means transmits the processing result of said second communication apparatus included in said reply to said first communication apparatus of the transmission destination of said request.

128. A communication control apparatus as set forth in claim 120, wherein said controlling means controls the communication so that said first communication apparatus in a stand-by state enters an operating state in accordance with the information received from said receiving means.

129. A communication control apparatus as set forth in claim 120, wherein said controlling means controls the communication between a network to which said first communication apparatus is connected and a network to which said second communication apparatus is connected.

130. A communication control apparatus as set forth in claim 120, wherein said controlling means performs processing as a gateway.

131. A communication control apparatus as set forth in claim 120, wherein said apparatus identification information is an identifier that can unambiguously identify the related communication apparatus assigned by the manufacturer of said first communication apparatus.

132. A communication control apparatus as set forth in claim 120, wherein said personal identification information is an identifier assigned to a registered user in advance.

133. A communication control apparatus as set forth in claim 120, wherein said receiving means receives said reply including the result of authentication processing performed by said second communication apparatus from said second communication apparatus.

134. A communication system for controlling at a communication control apparatus communication relating to processing carried out at a second communication apparatus on a network in response to a request from one or more first communication apparatuses, wherein
said communication control apparatus comprises:
a first storage means for storing apparatus identification information for identifying said first communication apparatus,
a first transmitting means for transmitting a request including said apparatus identification information corresponding to the related first communication apparatus and including personal identification information to said second communication apparatus in response to the request from said first communication apparatus,
a first receiving means for receiving a reply including the apparatus identification information for identifying the transmitting apparatus of said request from said second communication apparatus, and
a controlling means for deciding if said request corresponding to said received reply is by a legitimate first communication apparatus whose apparatus identification information is stored in said first storage means based on whether or not said apparatus identification information included in said reply and said apparatus identification information stored in said first storage means coincide and wherein
said second communication apparatus comprises:
a second receiving means for receiving said request,
a second storage means for storing said request,
a second storage means for storing said personal identification information and information of a transmission destination for transmitting a processing result in correspondence,
a processing means for performing predetermined processing in response to said request, and
a second transmitting means for reading the information of said transmission destination corresponding to said personal identification information included in said request from said second storage means and transmitting the result of said processing and said apparatus identification information included in said request in correspondence to the transmission destination specified by the related read transmission destination information.

135. A communication method for controlling at the communication control apparatus communication relating to processing carried out at a second communication apparatus on a network in response to a request from one or more first communication apparatuses,
said communication method comprising the steps of:
transmitting a request including apparatus identification information corresponding to the related first communication apparatus and including personal identification information from said communication control apparatus to said second communication apparatus in response to the request issued from said first communication apparatus to said communication control apparatus,
having said second communication apparatus perform predetermined processing in response to said received request,
having said second communication apparatus transmit a reply including the result of said processing and including said apparatus identification information included in said request to said communication control apparatus based on the information of the transmission destination corresponding to said personal identification information included in said request, and
having said communication control apparatus decide if said request corresponding to said received reply is by a legitimate first communication apparatus based on whether or not said apparatus identification information included in said received reply and said apparatus identification information of said first communication apparatus held in advance coincide.

136. A communication method as set forth in claim 135, wherein said communication control apparatus sends a predetermined notification to said second communication apparatus when said apparatus identification information included in said received reply and said apparatus identification information of said first communication apparatus held in advance do not coincide.

137. A communication method as set forth in claim 135, wherein said communication control apparatus sends a predetermined notification to an apparatus of a destination of the transaction where the result of processing included in the reply is used when said apparatus identification information included in said received reply and said apparatus identification information of said first communication apparatus held in advance do not coincide.

138. An authentication apparatus for performing authentication processing in response to an authentication request,
said authentication apparatus comprising:
a receiving means for receiving said authentication request including personal identification information for identifying a user and including apparatus identification information for identifying a transmitting apparatus of said authentication request,
a storage means for storing said personal identification information and the information of the transmission destination for transmitting an authentication result in correspondence,
an authentication processing means for performing authentication processing in response to said authentication request, and
a transmitting means for reading the information of said transmission destination corresponding to said personal identification information included in said authentication request from said storage means and transmitting the result of said authentication processing and said apparatus identification information included in said authentication request in correspondence to the transmission destination specified by the related read transmission destination information.

139. An authentication apparatus as set forth in claim 138, wherein
said receiving means receives said authentication request including encrypted personal identification information and apparatus identification information, and
said authentication apparatus further comprises a decrypting means for decrypting said personal identification information and said apparatus identification information included in said received authentication request.

140. An authentication apparatus as set forth in claim 138, wherein said receiving means receives said authentication request further including third identification information used for the charge processing relating to said user.

141. An authentication apparatus as set forth in claim 138, wherein said personal identification information is an identifier assigned to a registered user in advance.

142. An authentication apparatus as set forth in claim 138, wherein said apparatus identification information is an identifier capable of unambiguously identifying the related apparatus assigned by the manufacturer of said apparatus.

143. An authentication apparatus for performing authentication processing relating to a transaction performed via a network,
said authentication apparatus comprising:
a receiving means for receiving an authentication request by a user engaging in a transaction including personal identification information for identifying the user, transaction information indicating content of the transaction, and apparatus identification information for identifying a transmitting apparatus of said authentication request,
a storage means for storing said personal identification information and information of a transmission destination for transmitting the authentication result in correspondence,
an authentication processing means for transmitting said transaction information included in said received authentication request to an apparatus of the user designated by said authentication request and performing predetermined authentication processing in accordance with a reply from the apparatus of the related designated user, and
a transmitting means for reading the information of said transmission destination corresponding to said personal identification information included in said authentication request from said storage means and transmitting the result of said authentication processing and said apparatus identification information included in said authentication request in correspondence to the transmission destination specified by the related read transmission destination information.

144. An authentication apparatus as set forth in claim 143, wherein said authentication processing means attaches signature information indicating the authentication result of the related authentication apparatus to said transaction information and transmits the same to the apparatus of said designated user and generates signature information of the related authentication apparatus of the result of said authentication processing in accordance with the reply from said designated user.

145. An authentication apparatus as set forth in claim 143, wherein said storage means stores log information of transactions between the user issuing said authentication request and said designated user.

146. An authentication apparatus as set forth in claim 143, wherein
said receiving means receives said authentication request including encrypted personal identification information and apparatus identification information, and
said authentication apparatus further comprises a decrypting means for decrypting said personal identification information and said apparatus identification information included in said received authentication request.

147. An authentication apparatus as set forth in claim 143, wherein said receiving means receives said authentication request further including third identification information used for the charge processing relating to said user.

148. An authentication apparatus as set forth in claim 143, further comprising a charge processing means for performing charge processing for the authentication relating to said transaction.

149. A processing apparatus for requesting authentication relating to a transaction performed via a network,
said processing apparatus comprising:
a transmitting means for transmitting said authentication request including personal identification information for identifying a user and apparatus identification information for identifying a related processing apparatus,
a receiving means for receiving an authentication reply including identification information for identifying a transmitting apparatus of the authentication request, and
a controlling means for deciding whether or not said personal identification information and the identification information included in said authentication reply coincide.

150. A processing apparatus as set forth in claim 149, wherein said controlling means sends a predetermined notification to the transmitting side of said authentication reply when deciding that said apparatus identification information and the identification information included in said authentication reply do not coincide.

151. A processing apparatus as set forth in claim 149, wherein said controlling means sends a predetermined notification to the apparatus of the destination of transaction where the result of the related authentication included in said authentication reply is used when deciding that said apparatus identification information and the identification information included in said authentication response do not coincide.

152. An authentication system comprising a processing apparatus and an authentication apparatus connected via a network, wherein
said authentication apparatus comprises:
a receiving means for receiving an authentication request including personal identification information for identifying a user and apparatus identification information for identifying a transmitting apparatus of said authentication request,
a storage means for storing said personal identification information and information of a transmission destination for transmitting the authentication result in correspondence,
an authentication processing means for performing authentication processing in response to said authentication request, and
a transmitting means for reading the information of said transmission destination corresponding to said personal identification information included in said authentication request from said storage means and transmitting an authentication reply including the result of said authentication processing and said apparatus identification information included in said authentication request to the transmission destination specified by the related read transmission destination information and wherein
said processing apparatus comprises:
a transmitting means for transmitting said authentication request including said personal identification information and said apparatus identification information for identifying the related processing apparatus,
a receiving means for receiving said authentication reply, and
a controlling means for deciding whether or not said apparatus identification information of the related processing apparatus and said apparatus identification information included in said authentication reply coincide.

153. An authentication system as set forth in claim 152, wherein said processing apparatus sends a predetermined notification to the transmitting apparatus of the authentication reply when deciding that the identification information included in said authentication reply does not coincide.

154. An authentication system as set forth in claim 152, wherein said processing apparatus sends a predetermined notification to the apparatus of the destination of transaction where the result of said authentication included in said authentication reply is used when deciding that the identification information included in said authentication reply does not coincide.

155. An authentication method using a processing apparatus and an authentication apparatus connected via a network,
said authentication method comprising the steps of:
transmitting an authentication request including personal identification information for identifying a user and apparatus identification information for identifying a related processing apparatus from said processing apparatus to said authentication apparatus,
performing authentication processing in response to said authentication request at said authentication apparatus,
transmitting an authentication reply including the result of said authentication processing and said apparatus identification information included in said authentication request to said processing apparatus specified by the information of said transmission destination corresponding to said personal identification information included in said authentication request from said authentication apparatus, and
having said processing apparatus decide whether or not said apparatus identification information included in said authentication reply received from said authentication apparatus, said apparatus identification information of the related processing apparatus, and said apparatus identification information included in said authentication reply coincide.

156. An authentication method as set forth in claim 155, wherein said processing apparatus sends a predetermined notification to said authentication apparatus when deciding that the identification information included in said authentication reply does not coincide.

157. An authentication method as set forth in claim 155, wherein said processing apparatus sends a predetermined notification to the apparatus of the destination of transaction where the result of said authentication included in said authentication reply is used when deciding that the identification information included in said authentication reply does not coincide.

158. An information storage method comprising of the steps of
dividing predetermined information into a plurality of modules each independently maintaining confidentiality of the predetermined information and
storing said plurality of modules on storage media different from each other or in different regions of an identical storage medium.

159. An information storage method as set forth in claim 158, wherein the plurality of storage media different from each other and with said plurality of modules stored thereon are storage media physically independent from each other.

160. An information storage method as set forth in claim 158, wherein
said predetermined information is encrypted, and
the information obtained by the related encryption is divided into said plurality of modules each independently maintaining the confidentiality of the predetermined information.

161. An information storage method as set forth in claim 158, wherein
said plurality of modules are encrypted, and
the plurality of modules obtained by the encryption are stored on storage media different from each other or in different regions of an identical storage medium.

162. An information restoration method comprising the steps of:
reading modules from a plurality of storage media or different regions of an identical storage medium when a plurality of modules each independently maintaining confidentiality of the predetermined information are stored on a plurality of storage media different from each other or in different regions of an identical storage medium and
combining the related read modules to restore said predetermined information.

163. An information restoration method as set forth in claim 162, wherein the plurality of storage media different from each other and with said plurality of modules stored therein are storage media physically independent from each other.

164. An information restoration method as set forth in claim 162, wherein said read modules are combined and then decrypted to restore said predetermined information.

165. An information restoration method as set forth in claim 162, wherein said read modules are decrypted and then combined to restore said predetermined information.

166. An information storage device comprising
an information dividing means for dividing said predetermined information into a plurality of modules each independently maintaining the confidentiality of the predetermined information and
a writing means for writing said plurality of modules on storage media different from each other or in different regions of an identical storage medium.

167. An information storage device as set forth in claim 166, wherein said plurality of storage media different from each other on which the plurality of modules are stored are storage media physically independent from each other.

168. An information storage device as set forth in claim 166, wherein
said device further comprises an encrypting means for encrypting said predetermined information and
said information dividing means divides the information obtained by the encryption into said plurality of modules each independently maintaining the confidentiality of the predetermined information.

169. An information storage device as set forth in claim 166, wherein
said device further comprises an encrypting means for encrypting said plurality of modules and
said writing means writes the plurality of modules obtained by the encryption in storage media different from each other or in different regions of an identical storage medium.

170. An information restoration device comprising
a reading means for reading modules from a plurality of storage media or different regions of an identical storage medium when a plurality of modules each independently maintaining the confidentiality of the predetermined information are stored on a plurality of storage media different from each other or in the different regions of the identical storage medium and
an information combining means for combining the related read modules to restore said predetermined information.

171. An information restoration device as set forth in claim 170, wherein said plurality of storage media different from each other on which the plurality of modules are stored are storage media physically independent from each other.

172. An information restoration device as set forth in claim 170, further comprising a decrypting means for decrypting the information obtained by combining the modules.

173. An information restoration device as set forth in claim 170, wherein
said device further comprises a decrypting means for decrypting said read modules and
said information combining means combines said decrypted modules to restore said predetermined information.

174. A computer readable storage medium storing one module among a plurality of modules when predetermined information is divided into a plurality of modules each independently maintaining the confidentiality of the predetermined information.
